# EUROPEAN PATENT SPECIFICATION

(11) **EP 4 407 648 B1**
(45) Date of publication and mention of the grant of the patent: **06.05.2026**
(21) Application number: 22914113.0
(22) Date of filing: 07.12.2022
(51) Int. Cl.: H01H 13/14, H04R 1/10, B65D 43/16

(54) **OPENING KEY AND ELECTRONIC DEVICE**
ÖFFNUNGSKNOPF UND ELEKTRONISCHE VORRICHTUNG
TOUCHE D'OUVERTURE ET DISPOSITIF ÉLECTRONIQUE

(30) Priority: 31.12.2021 CN 202111680070
(43) Date of publication of application: 31.07.2024
(73) Proprietor: Huawei Technologies Co., Ltd., Shenzhen, Guangdong 518129 (CN)
(72) Inventor: LI, Kelin, Shenzhen, Guangdong 518129 (CN); YAO, Yuliang, Shenzhen, Guangdong 518129 (CN); GUO, Hualin, Shenzhen, Guangdong 518129 (CN); KONG, Liang, Shenzhen, Guangdong 518129 (CN); ZHENG, Wei, Shenzhen, Guangdong 518129 (CN)
(74) Representative: Gill Jennings & Every LLP
(86) International application number: PCT/CN2022/137234
(87) International publication number: WO 2023/124858

(56) References cited:
- AU-A1- 2013 206 745
- CN-A- 110 417 089
- CN-A- 110 817 105
- CN-U- 206 834 116
- CN-U- 209 045 415
- CN-U- 213 280 053

## Description

This application claims priority to Chinese Patent Application No. 202111680070.2, filed with the China National Intellectual Property Administration on December 31, 2021 and entitled "OPEN BUTTON AND ELECTRONIC DEVICE".

### TECHNICAL FIELD

This application relates to the field of electronic devices, and in particular, to an open button and an electronic device.

### BACKGROUND

An electronic device that can be opened and closed usually has an open button, and the open button is configured to latch and unlatch two parts of the electronic device. When the two parts are closed, the open button can latch the two parts to latch the electronic device. When a user presses the open button, the two parts can be unlatched, so that the electronic device can be opened. A conventional open button cannot provide a touch feeling feedback for the user, and cannot meet a user requirement, and consequently user experience is poor.

CN 110417089 A discloses a wireless headset charging box with clamping parts and magnetic absorption members.

CN 209045415 U discloses a utility model describing a film key capable of improving pressing hand feeling.

### SUMMARY

The present invention is defined by the features disclosed in the independent claims. Additional embodiments are defined in the dependent claims. Embodiments of this application provide an open button and an electronic device, so that a touch feeling feedback is provided for a user when the user performs pressing, thereby meeting a user requirement and improving user experience.

According to a first aspect, an embodiment of this application provides an open button of an electronic device, in accordance with claim 1. The electronic device includes a first part and a second part that can be opened and closed, one of the first part and the second part is a cover of the electronic device, and the other is a body of the electronic device. The open button is configured to be mounted to the second part, and the open button includes a cap, an elastic member, and a touch-sensitive spring. The cap is configured to form a detachable connection with the first part, and the cap has a bump. The touch-sensitive spring and the bump are disposed at a spacing, and the touch-sensitive spring can generate elastic deformation when being squeezed. The cap can move towards the touch-sensitive spring when being pressed, so that the detachable connection is released, and the bump of the cap squeezes the touch-sensitive spring. The elastic member presses against the cap, and is configured to provide a rebound force for the cap when the cap moves towards the touch-sensitive spring. In this solution, the open button can implement latching and unlatching of the electronic device. In addition, the touch-sensitive spring is designed, so that a user can experience a touch feeling feedback when pressing the cap. In this way, a user requirement can be met, and user experience can be improved.

In an implementation of the first aspect, the cap has a buckle, the buckle is disposed opposite to the bump at a spacing, and the buckle is configured to form a detachable buckle connection with a latch portion on the second part; the touch-sensitive spring is located between the bump and the buckle, and the touch-sensitive spring and the buckle are disposed at a spacing; and the cap can move towards the touch-sensitive spring when being pressed, so that the buckle is separated from the latch portion, and the buckle connection is released. In this solution, latching and unlatching functions of the open button can be implemented by using a simple and reliable structure.

In an implementation of the first aspect, the cap includes a pressing portion and a bearing portion, two ends of the bearing portion each are connected to the pressing portion, and the bearing portion and the pressing portion enclose an open space; the bump of the cap is located on a side that is of the pressing portion and that faces the open space, and the buckle is located on the bearing portion; the touch-sensitive spring is located in the open space; and when the pressing portion is pressed, the pressing portion can drive the bearing portion to move towards the touch-sensitive spring. In this solution, latching and unlatching functions of the open button can be implemented by using a simple and reliable structure. The open button in this solution has a reliable structure and stable performance, and is easy for mass production.

In an implementation of the first aspect, the open button includes a button support, a part of the button support is located in the open space, and the other part of the button support is located outside the open space and is slidably connected to the bearing portion; the touch-sensitive spring is fastened on the button support; and when the pressing portion is pressed, the pressing portion can drive the bearing portion to slide relative to the button support. In this solution, the button support can guide the cap, so that the cap can move stably, to ensure working reliability of the open button.

In an implementation of the first aspect, the button support includes a support body and two mounting ears respectively connected to two sides of the support body, where each mounting ear is in a bent shape; the support body is located in the open space, and the touch-sensitive spring is fastened on the support body; and each mounting ear laps over the bearing portion, and is slidably connected to the bearing portion. The design in this solution enables the cap to move stably and ensures working reliability of the open button.

In an implementation of the first aspect, when a distance between the bump and the touch-sensitive spring is the longest, a part that is of the bearing portion and that is opposite to the bump abuts against the two mounting ears. In this solution, when the distance between the bump and the touch-sensitive spring is the longest, a region that is of the cap and that is exposed outside the second part is the largest. The mounting ears abut against the bearing portion, so that the cap can be prevented from falling off from the second part.

In an implementation of the first aspect, two ends of the pressing portion each have a guiding portion, and the bearing portion is located between the two guiding portions; and the open button includes two elastic members, and one elastic member is correspondingly sleeved on a periphery of one guiding portion and presses against the pressing portion. The designed guiding portions enable the cap to move stably, enable the cap to be reliably connected to the elastic member, and can further guide expansion and contraction of the elastic member, so that the elastic member expands and contracts in a specified direction, to ensure that a direction of an elastic force on the cap is constant.

According to a second aspect, an embodiment of this application provides an electronic device, in accordance with claim 8. The electronic device including an open button, and a first part and a second part that can be opened and closed. One of the first part and the second part is a cover of the electronic device, and the other is a body of the electronic device; and the open button is mounted to the second part; and when the first part and the second part are closed, the cap forms a detachable connection with the first part, so that the first part and the second part are latched. In this solution, latching and unlatching of the electronic device can be implemented. In addition, the touch-sensitive spring is designed, so that a user can experience a touch feeling feedback when pressing the cap. In this way, a user requirement can be met, and user experience can be improved.

In an implementation of the second aspect, an open button mounting space and a first opening are formed in the second part, and the first opening communicates the open button mounting space with the outside of the second part; a part of the cap is located in the open button mounting space, the other part of the cap is exposed from the first opening, the cap is movably connected to the second part, and the bump is located in the open button mounting space; and both the elastic member and the touch-sensitive spring are located in the open button mounting space. In this solution, an assembly structure including the open button and the second part is designed, to meet a product requirement.

In an implementation of the second aspect, the second part includes a housing, the housing includes a circumferential side wall and an inner bearing platform, and the inner bearing platform is connected to an inner side of the circumferential side wall; the open button mounting space is formed on the housing, the first opening is formed on the circumferential side wall, a second opening is formed on the inner bearing platform, and the second opening communicates the open button mounting space with the outside of the inner bearing platform; and the first part includes a latch portion, and when the first part and the second part are closed, the latch portion passes through the second opening and forms a detachable connection with the cap. In this solution, an assembly structure including the open button and the second part is designed, to meet a product requirement.

In an implementation of the second aspect, a groove is provided on a circumferential edge of the first part, the first part includes a sealing member, a part of the sealing member is fastened in the groove of the first part, the other part of the sealing member is exposed outside the groove of the first part, and when the first part and the second part are closed, the part that is of the sealing member and that is exposed outside the groove of the first part is in contact with the second part, and seals a gap between the first part and the second part. Alternatively, a groove is provided on a circumferential edge of the second part, the second part includes a sealing member, a part of the sealing member is fastened in the groove of the second part, the other part of the sealing member is exposed outside the groove of the second part, and when the first part and the second part are closed, the part that is of the sealing member and that is exposed outside the groove of the second part is in contact with the first part, and seals a gap between the first part and the second part. In this solution, the gap between the first part and the second part can be sealed, to prevent external foreign matter, water vapor, and the like from entering the electronic device.

In an implementation of the second aspect, several protrusions are disposed on a surface of the part that is of the sealing member and that is located in the groove, the several protrusions are spaced in pairs, the several protrusions are all in contact with a bottom surface of the groove, the groove is filled with an adhesive, and the sealing member is fastened in the groove through the adhesive. In this solution, the structure design and the connection design are used, so that the sealing member can be mounted through a simple and reliable design. In addition, the protrusion design helps increase an adhesive area of the sealing member to enhance adhesive strength, and can further increase an adhesive accommodation space to avoid adhesive overflow.

In an implementation of the second aspect, the sealing member includes a sealing bracket and a sealing ring that are connected, the sealing ring is located on a side of the sealing bracket, a side that is of the sealing bracket and that is far away from the sealing ring is fastened in the groove, and at least a part of the sealing ring is exposed outside the groove. The sealing member in this solution has good manufacturability and assemblability.

In an implementation of the second aspect, material hardness of the sealing bracket is greater than material hardness of the sealing ring. The softer sealing ring is made on the harder sealing bracket, and then the sealing ring and the sealing bracket are mounted into the groove as a whole, to facilitate mounting of the sealing member. In addition, the softer sealing ring can implement a good sealing effect through deformation of the sealing ring.

In an implementation of the second aspect, the electronic device includes a magnetic field sensor, a state detection magnet, and a processor; the magnetic field sensor is located in the first part, and the state detection magnet is located in the second part; or the state detection magnet is located in the first part, and the magnetic field sensor is located in the second part; the magnetic field sensor is configured to detect a magnetic flux of the state detection magnet; and the electronic device includes the processor, and the processor is configured to determine, based on a detection signal of the magnetic field sensor, whether the electronic device is in an open state or a closed state.

In an implementation of the second aspect, when the first part and the second part are closed, the first part and the second part enclose an accommodation space, and the accommodation space is used to accommodate an earphone. The electronic device in this solution can be further configured to accommodate the earphone, to implement product form integration of the earphone and the electronic device, so that a quantity of devices carried by the user is reduced, and user experience is improved.

In an implementation of the second aspect, the electronic device is a smartwatch, and the cover has a display. In this solution, an open-closed design can be implemented for the smartwatch, and an application scenario of the smartwatch can be expanded. In addition, the touch-sensitive spring is designed, so that the user can experience the touch feeling feedback when pressing the cap. In this way, the user requirement can be met, and user experience can be improved.

### BRIEF DESCRIPTION OF DRAWINGS

FIG. 1 is a schematic diagram of an assembly structure of a wearable device according to an embodiment of this application;
FIG. 2 is a schematic diagram of an assembly structure of a wearable device according to an embodiment of this application;
FIG. 3 is a schematic diagram of an assembly structure of a wearable device according to an embodiment of this application;
FIG. 4 is a schematic diagram of an assembly structure of a wearable device according to an embodiment of this application;
FIG. 5 is a schematic diagram of an assembly structure of a wearable device according to an embodiment of this application;
FIG. 6 is a schematic exploded view of a structure of a wearable device according to an embodiment of this application;
FIG. 7 is a schematic diagram of an assembly structure of a first host housing of the wearable device in FIG. 6;
FIG. 8 is a schematic exploded view of a structure of the first host housing in FIG. 7;
FIG. 9 is a schematic diagram of an assembly structure of a first host housing of the wearable device in FIG. 6;
FIG. 10 is a schematic diagram of an assembly structure of a latch portion of the first host housing in FIG. 8;
FIG. 11 is a schematic exploded view of a structure of a magnet assembly of the first host housing in FIG. 8;
FIG. 12 is a schematic diagram of a structure of a sealing bracket of the first host housing in FIG. 8;
FIG. 13 is a schematic diagram of an A-A sectional structure of the first host housing in FIG. 9;
FIG. 14 is a schematic diagram of a partially enlarged structure at a position B in FIG. 13;
FIG. 15 is a schematic diagram of a structure of a first host circuit board assembly of the wearable device in FIG. 6;
FIG. 16 is a schematic diagram of a structure of a second host housing of the wearable device in FIG. 6;
FIG. 17 is a schematic diagram of a structure of a second host housing of the wearable device in FIG. 6;
FIG. 18 is a schematic exploded view of a structure of the second host housing in FIG. 17;
FIG. 19 is a schematic diagram of a structure of a second bracket of the second host housing in FIG. 16;
FIG. 20 is a schematic diagram of an assembly structure including a second host housing and a host battery;
FIG. 21 is a schematic diagram of an assembly structure of a third host housing of the wearable device in FIG. 6;
FIG. 22 is a schematic diagram of an assembly structure of a third host housing of the wearable device in FIG. 6;
FIG. 23 is a schematic diagram of a partially enlarged structure at a position A in FIG. 22;
FIG. 24 is a schematic diagram of an assembly structure of a third host housing of the wearable device in FIG. 6;
FIG. 25 is a schematic diagram of an assembly structure of an open button of the wearable device in FIG. 6;
FIG. 26 is a schematic exploded view of a structure of the open button in FIG. 25;
FIG. 27 is a schematic diagram of a structure of a cap of the open button in FIG. 25;
FIG. 28 is a schematic diagram of a structure of a button support of the open button in FIG. 25;
FIG. 29 is a schematic diagram of a structure of a touch-sensitive spring of the open button in FIG. 25;
FIG. 30 is a schematic diagram of an assembly structure including an open button and a third host housing;
FIG. 31 is a schematic diagram of an A-A sectional structure of FIG. 30;
FIG. 32 is a schematic diagram of an assembly structure including an open button and a first host housing;
FIG. 33 is a schematic diagram of a partially enlarged structure at a position B in FIG. 32;
FIG. 34 is a schematic diagram of an assembly structure including a second host housing, a third host housing, and an open button;
FIG. 35 is a schematic diagram of an assembly structure of a fourth host housing of the wearable device in FIG. 6;
FIG. 36 is a schematic diagram of an assembly structure of a fourth host housing of the wearable device in FIG. 6;
FIG. 37 is a schematic exploded view of a structure of the fourth host housing in FIG. 36;
FIG. 38 is a schematic diagram of an assembly structure of a rotating shaft assembly of the wearable device in FIG. 6;
FIG. 39 is a schematic diagram of an A-A sectional structure of FIG. 38;
FIG. 40 is a schematic exploded view of a structure of the rotating shaft assembly in FIG. 38;
FIG. 41 is a schematic diagram of a structure of a shaft sleeve in a rotating shaft assembly;
FIG. 42 is a schematic diagram of a B-B sectional structure of the shaft sleeve in FIG. 41;
FIG. 43 is a schematic diagram of a structure of a shaft sleeve in a rotating shaft assembly;
FIG. 44 is a schematic diagram of a structure of a shaft sleeve in a rotating shaft assembly;
FIG. 45 is a schematic diagram of a structure of a bump matching member in a rotating shaft assembly;
FIG. 46 is a schematic diagram of a structure of a driven member in a rotating shaft assembly;
FIG. 47 is a schematic diagram of an A-A sectional structure of the driven member in FIG. 46;
FIG. 48 is a schematic diagram of a structure of a driven member in a rotating shaft assembly;
FIG. 49 is a schematic diagram of a structure of a gasket in a rotating shaft assembly;
FIG. 50 is a schematic diagram of a structure of a gasket in a rotating shaft assembly;
FIG. 51 is a schematic diagram of a structure of a first shaft in a rotating shaft assembly;
FIG. 52 is a schematic diagram of a structure of a first shaft in a rotating shaft assembly;
FIG. 53 is a schematic diagram of a structure of a first shaft in a rotating shaft assembly;
FIG. 54 is a schematic diagram of an assembly structure including a first shaft, a driven member, and an elastic member in a rotating shaft assembly;
FIG. 55 is a schematic diagram of a structure of a limiting member in a rotating shaft assembly;
FIG. 56 is a schematic diagram of a structure of a second shaft in a rotating shaft assembly;
FIG. 57 is a schematic diagram of a structure of a second shaft in a rotating shaft assembly;
FIG. 58 is a schematic diagram of a structure of a second shaft in a rotating shaft assembly;
FIG. 59 is a schematic diagram of a structure of a flexible circuit board in a rotating shaft assembly;
FIG. 60 is a schematic diagram of a structure of a flexible circuit board in a rotating shaft assembly;
FIG. 61 is a schematic diagram of a structure of a flexible circuit board in a rotating shaft assembly;
FIG. 62 is a schematic diagram of an assembly structure including a second shaft and a flexible circuit board in a rotating shaft assembly;
FIG. 63 is a schematic diagram of an assembly structure including a second shaft and a flexible circuit board in a rotating shaft assembly;
FIG. 64 is a schematic diagram of an assembly structure of a rotating shaft assembly;
FIG. 65 is a schematic diagram of a structure of a clamping member in a rotating shaft assembly;
FIG. 66 is a schematic diagram of an assembly structure of a rotating shaft assembly;
FIG. 67 is a schematic diagram of a sectional structure of a rotating shaft assembly;
FIG. 68 is a schematic diagram of an assembly structure including a rotating shaft assembly and a third host housing;
FIG. 69 is a schematic diagram of an assembly structure including a rotating shaft assembly, a third host housing, and a second host housing;
FIG. 70 is a schematic diagram of an assembly structure including a rotating shaft assembly, a third host housing, a second host housing, and a first host housing;
FIG. 71 is a schematic diagram of a partially enlarged structure at a position A in FIG. 70;
FIG. 72 is a schematic diagram of an assembly structure of a host in a wearable device;
FIG. 73 is a schematic partial sectional view of an assembly structure of a host in a wearable device;
FIG. 74 is a schematic diagram of a sectional structure of a rotating shaft assembly;
FIG. 75 is a schematic diagram of a partially enlarged structure at a position B in FIG. 74;
FIG. 76 is a schematic diagram of an A-A sectional structure of the structure shown in FIG. 75;
FIG. 77 is a schematic diagram of a matching structure including a first shaft, a driven member, and an elastic member in a rotating shaft assembly;
FIG. 78 is a schematic diagram of a structure showing a matching state of a shaft sleeve and a bump matching member in a rotating shaft assembly;
FIG. 79 is a schematic diagram of a matching structure including a first shaft, a driven member, and an elastic member in a rotating shaft assembly;
FIG. 80 is a schematic diagram of a structure showing a matching state of a shaft sleeve and a bump matching member in a rotating shaft assembly;
FIG. 81 is a schematic diagram of a matching structure including a first shaft, a driven member, and an elastic member in a rotating shaft assembly;
FIG. 82 is a schematic diagram of a structure showing a matching state of a shaft sleeve and a bump matching member in a rotating shaft assembly;
FIG. 83 is a schematic diagram of a structure in which a first part of a host is opened to a limit position relative to a second part;
FIG. 84 is a schematic diagram of a partially enlarged structure at a position A in FIG. 83;
FIG. 85 is a schematic diagram of an assembly structure of a first earphone of the wearable device in FIG. 6;
FIG. 86 is a schematic exploded view of a structure of the first earphone in FIG. 85;
FIG. 87 is a schematic diagram of an assembly structure of an earphone front-housing assembly in a first earphone;
FIG. 88 is a schematic diagram of an assembly structure of an earphone front-housing assembly in a first earphone;
FIG. 89 is a schematic exploded view of a structure of an earphone front-housing assembly in a first earphone;
FIG. 90 is a schematic diagram of an A-A sectional structure of the earphone front-housing assembly in FIG. 88;
FIG. 91 is a schematic diagram of a structure in which a clamp clamps an intermediate assembly;
FIG. 92 is a schematic exploded view of a structure of an assembly jig according to an embodiment of this application;
FIG. 93 is a schematic diagram of a structure of a base of an assembly jig;
FIG. 94 is a schematic diagram of a structure of a base of an assembly jig;
FIG. 95 is a schematic diagram of a structure of an upper cover of an assembly jig;
FIG. 96 is a schematic diagram of a structure of an upper cover of an assembly jig;
FIG. 97 is a schematic diagram of a structure in which a clamp and an intermediate assembly are placed into a base;
FIG. 98 is a schematic diagram of a structure in which an upper cover is matched with a base;
FIG. 99 is a schematic diagram of a structure in which an upper cover is matched with a base;
FIG. 100 is a schematic diagram of a partially enlarged structure at a position A in FIG. 99;
FIG. 101 is a schematic diagram of a structure in which an earphone magnet is mounted into an assembly jig;
FIG. 102 is a schematic diagram of a structure of a first electrode of a first earphone;
FIG. 103 is a schematic diagram of a structure of an earplug support assembly of a first earphone;
FIG. 104 is a schematic diagram of a structure of an earplug support assembly of a first earphone;
FIG. 105 is a schematic exploded view of a structure of an earplug support assembly;
FIG. 106 is a schematic diagram of a structure of an earplug support in an earplug support assembly;
FIG. 107 is a schematic diagram of a structure of an earplug of a first earphone;
FIG. 108 is a schematic diagram of a structure of an earplug of a first earphone;
FIG. 109 is a schematic diagram of an A-A sectional structure of the earplug in FIG. 108;
FIG. 110 is a schematic diagram of structures of several voice pickup through holes of an earplug inner cover in an earplug;
FIG. 111 is a schematic diagram of a structure of a second electrode of a first earphone;
FIG. 112 is a schematic exploded view of a structure of an earphone rear-housing assembly in a first earphone;
FIG. 113 is a schematic diagram of an assembly structure of an earphone rear-housing assembly;
FIG. 114 is a schematic diagram of a structure of an earphone rear housing in an earphone rear-housing assembly;
FIG. 115 is a schematic diagram of an A-A sectional structure of an earphone rear housing in FIG. 112;
FIG. 116 is a schematic diagram of a structure of an antenna in an earphone rear-housing assembly;
FIG. 117 is another schematic diagram of a structure of an antenna in an earphone rear-housing assembly;
FIG. 118 is another schematic diagram of a structure of an antenna in an earphone rear-housing assembly;
FIG. 119 is a schematic diagram of a structure of a rear housing support in an earphone rear-housing assembly;
FIG. 120 is a schematic diagram of a B-B sectional structure of the earphone rear-housing assembly in FIG. 113;
FIG. 121 is a schematic diagram of a sectional structure of a first earphone;
FIG. 122 is a schematic diagram of a partially enlarged structure at a position A in FIG. 121;
FIG. 123 is a schematic diagram of a structure of another first earphone;
FIG. 124 is a schematic diagram of a structure of another first earphone;
FIG. 125 is a schematic diagram of a structure of an electronic assembly in a first earphone;
FIG. 126 is a schematic diagram of a structure of an electronic assembly in a first earphone;
FIG. 127 is a schematic diagram of a sectional structure of a first earphone;
FIG. 128 is a schematic diagram of a partially enlarged structure at a position A in FIG. 127;
FIG. 129 is a schematic diagram of a partially enlarged structure at a position B in FIG. 127;
FIG. 130 is a schematic diagram of a matching relationship between a first host attachment magnet in a host and an earphone magnet in a first earphone;
FIG. 131 is a schematic diagram of a magnet design of a first host attachment magnet and an earphone magnet;
FIG. 132 is a schematic diagram of another magnet design of a first host attachment magnet and an earphone magnet;
FIG. 133 is a schematic diagram of another magnet design of a first host attachment magnet and an earphone magnet;
FIG. 134 is a schematic diagram of another magnet design of a first host attachment magnet and an earphone magnet;
FIG. 135 is a schematic diagram of a design in which a first host attachment magnet is magnetically attracted to a first electrode and a second electrode in an earphone;
FIG. 136 is a schematic diagram of a structure in which a first earphone is attached to a first part after a host is opened;
FIG. 137 is a schematic diagram of a process in which a first earphone is automatically placed in position when the first earphone is placed from the outside of a host to a first part;
FIG. 138 is a schematic diagram of a process in which a first earphone is automatically placed in position when the first earphone is placed from the outside of a host to a first part;
FIG. 139 is a schematic diagram of a process in which a first earphone is automatically placed in position when the first earphone is placed from the outside of a host to a first part;
FIG. 140 is a schematic diagram of detecting an open/closed state of a host;
FIG. 141 is a schematic diagram in which a host detects an in-box/out-box state of an earphone;
FIG. 142 is a schematic diagram in which an earphone detects an in-box/out-box state of the earphone; and
FIG. 143 is a schematic diagram in which a host performs foreign matter detection.

### DESCRIPTION OF EMBODIMENTS

The following embodiments of this application provide a wearable device. The wearable device is a brand-new product form in which a host and an earphone are integrated. A product form of the host includes but is not limited to electronic devices such as a smartwatch, an electronic sphygmomanometer, a smart band, a smart helmet, smart clothing, smart glasses, mobile Wi-Fi, and a smart backpack. The earphone is a wireless earphone, and includes but is not limited to a Bluetooth earphone (for example, a true wireless stereo (True Wireless Stereo, TWS) earphone), an infrared earphone, and the like. The following uses an example in which the host has a product form of a smartwatch and the earphone is a Bluetooth earphone for description.

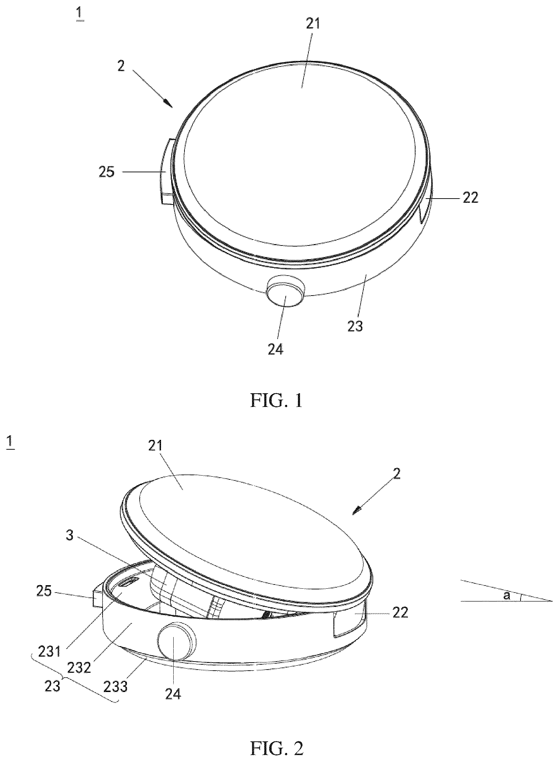

As shown in FIG. 1, FIG. 2, FIG. 3, FIG. 4, and FIG. 5, a wearable device 1 in this embodiment may include a host 2 and earphones 3, and the earphones 3 may be accommodated in the host 2. The following first describes a related design of the host 2, then describes a related design of the earphones 3, and finally describes an overall feature and functions of the wearable device 1.

### Product form and motion design of the host 2

As shown in FIG. 1 to FIG. 4, the host 2 may include a first part 21, a rotating shaft assembly 22, a second part 23, a function button 24, and an open button 25. The first part 21 may be referred to as a cover, and the second part 23 may be referred to as a body.

The host 2 may further include a wrist strap, and the wrist strap may be connected to two opposite sides of the second part 23.

As shown in FIG. 1 to FIG. 3, the rotating shaft assembly 22 is connected to the first part 21 and the second part 23, and the first part 21 can rotate relative to the second part 23 through the rotating shaft assembly 22, so that the host 2 is in a closed state or an open state. When the host 2 is closed, the first part 21 and the second part 23 may enclose an accommodation space, and the earphones 3 are accommodated in the accommodation space.

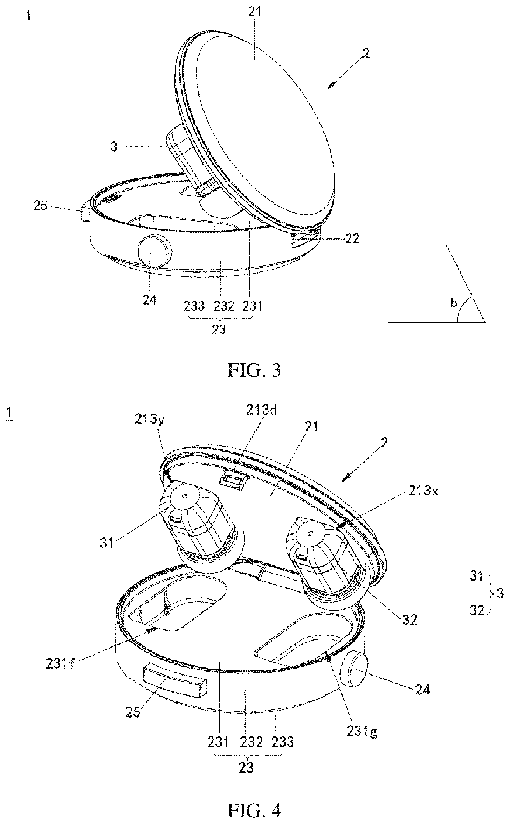

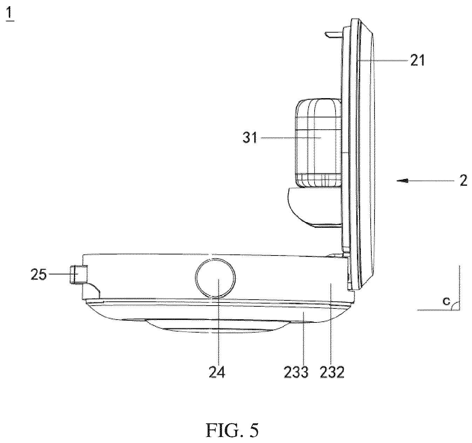

In FIG. 1, the host 2 is in the closed state. In this case, the first part 21 and the second part 23 are closed. In all of FIG. 2 to FIG. 5, the host 2 is in the open state. In this case, the first part 21 is opened at a specific angle relative to the second part 23. For example, an opening angle a of the first part 21 in FIG. 2 may be roughly 15 degrees; an opening angle b of the first part 21 in FIG. 3 may be roughly 75 degrees; and the first part 21 in FIG. 5 rotates to a limit position, and an opening angle c of the first part 21 may be roughly 90 degrees. It may be understood that a specific value of the opening angle c generated when the first part 21 is in the limit position may be designed based on a product requirement, and is not limited to the foregoing descriptions.

In addition, in this embodiment, as shown in FIG. 2 to FIG. 4, when the host 2 is in the open state, the earphones 3 may be detached from the second part 23 and attached to the first part 21. This design is convenient for a user to take and place the earphones 3 (descriptions are further provided below). In another embodiment, after the host 2 is opened, the earphones 3 may be accommodated in the second part 23.

In this embodiment, through a special structure design of the rotating shaft assembly 22, a rotation stroke of the first part 21 can be segmented, and in each stroke segment, the first part 21 has a corresponding rotation feature. In a specific stroke segment, the first part 21 can provide a touch feeling feedback (a specific principle is described in detail below).

For example, in a process of opening the closed host 2, the rotation stroke of the first part 21 may be divided into three segments. A stroke from the state shown in FIG. 1 to the state shown in FIG. 2 may represent a first stroke segment of the first part 21. In the first stroke segment, the opening angle of the first part 21 gradually increases to the opening angle a, and the first part 21 automatically rotates under torque driving of the rotating shaft assembly 22 without an external force. A stroke from the state shown in FIG. 2 to the state shown in FIG. 3 may represent a second stroke segment of the first part 21. In the second stroke segment, the opening angle of the first part 21 gradually increases from the opening angle a to the opening angle b, the rotating shaft assembly 22 no longer provides torque for the first part 21, and the first part 21 needs to rotate under external force driving. A stroke from the state shown in FIG. 3 to the state shown in FIG. 5 may represent a third stroke segment of the first part 21. In the third stroke segment, the opening angle of the first part 21 gradually increases from the opening angle b to the opening angle c, and the first part 21 automatically rotates under torque driving of the rotating shaft assembly 22 without an external force. When the opening angle of the first part 21 is the opening angle c, the torque of the rotating shaft assembly 22 may continue to exist. It is easy to understand that the host 2 has a limiting structure, and the first part 21 may maintain a balanced state under a joint action of the limiting structure and the rotating shaft assembly 22.

A flip of a conventional flip electronic device (for example, a notebook computer or a flip mobile phone) can be opened only after the user continuously applies a force, and touch feeling experience is monotonous. However, in this embodiment, the rotation stroke of the first part 21 is segmented by using a structure design of the rotating shaft assembly 22, so that the first part 21 needs to be driven by a force applied by the user only in the second stroke segment, and may automatically rotate in other stroke segments without the force applied by the user. This provides novel touch feeling experience.

In addition, in the third stroke segment, the first part 21 is driven by the rotating shaft assembly 22 to move in a direction away from the second part 23. When the opening angle of the first part 21 reaches the opening angle c, the driving force of the rotating shaft assembly 22 still exists. Therefore, it is difficult for the user to pull the first part 21 towards the second part 23 by removing the earphones 3 from the first part 21. This design is convenient for the user to remove the earphones 3, and can improve user experience.

In another embodiment, a structure of a rotating shaft may be designed, so that the rotation stroke of the first part 21 does not need to be segmented, and the first part 21 rotates in a manner of continuously applying a force by the user or in an always automatic manner.

As shown in FIG. 1 to FIG. 3, the open button 25 may be mounted in the second part 23, and the open button 25 and the rotating shaft assembly 22 may be respectively located at two ends of the second part 23 in a radial direction. A part of the open button 25 may be exposed outside the second part 23 for the user to press. A latch structure (descriptions are provided below) in the open button 25 may form a detachable connection with a latch structure (descriptions are provided below) in the first part 21. The open button 25 cooperates with the latch structure in the first part 21, to open and latch the host 2.

For example, as shown in FIG. 1, when the host 2 is in the closed state, the latch structure in the open button 25 forms the detachable connection with the latch structure in the first part 21.

With reference to FIG. 1 and FIG. 2, when the user needs to open the host 2, the user may press the open button 25, so that the open button 25 generates a mechanism motion, and the latch structure in the open button 25 no longer cooperates with the latch structure in the first part 21. In this case, the first part 21 may be automatically opened under driving of the rotating shaft assembly 22, and perform the first stroke segment. On the contrary, when the user intends to close the host 2, the user may press down the first part 21 to enable the first part 21 to rotate towards the second part 23. When a latch structure in the second part 23 is in contact with the latch structure in the open button 25, the open button 25 generates a mechanism motion, and the latch structure in the open button 25 restores cooperation with the latch structure in the first part 21.

A specific principle of opening and latching the host 2 by using the open button 25 and the latch structure in the first part 21 is described in detail below.

In another embodiment, the open button may alternatively be mounted in the first part, and the second part has a latch structure. The open button cooperates with the latch structure in the second part, to open and latch the host. The first part may be a cover, and the second part may be a body. The following continues to provide descriptions by using the design in which the open button 25 is mounted in the second part 23 as an example.

The foregoing briefly describes the product form and the motion design of the wearable device 1. The following describes a specific structure of the wearable device 1 in detail in a sequence of first describing the first part 21, the second part 23, the open button 25, and the function button 24, and then describing the rotating shaft assembly 22.

### Structure of the host 2

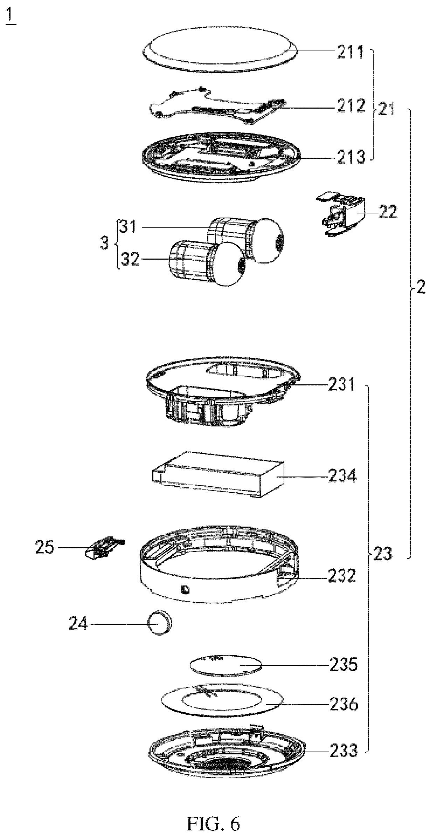

As shown in FIG. 5 and FIG. 6, the first part 21 of the host 2 of the wearable device 1 may include a display 211, a first host circuit board assembly 212, and a first host housing 213. The display 211 and the first host circuit board assembly 212 are both mounted on the first host housing 213, and the first host circuit board assembly 212 is located between the display 211 and the first host housing 213.

### Structure of the first host housing 213

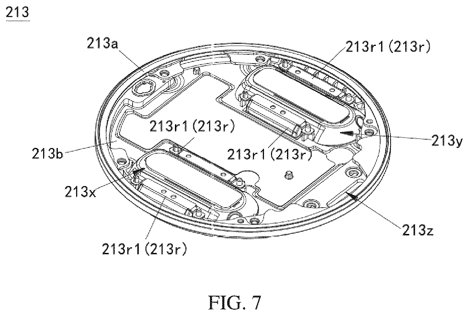

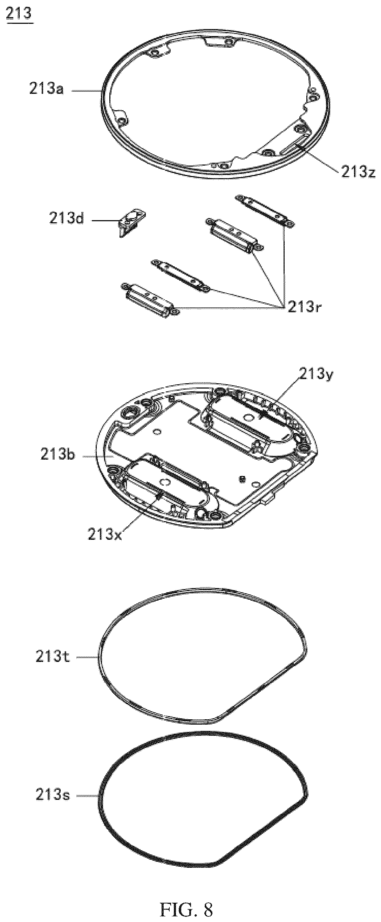

As shown in FIG. 7 and FIG. 8, an appearance of the first host housing 213 may be approximately in a disk shape. The first host housing 213 may be assembled by several components. For example, the first host housing 213 may include a first frame body 213a, a first bracket 213b, a magnet assembly 213r, a latch portion 213d (namely, the latch structure in the first part 21 described above), a sealing bracket 213t, and a sealing ring 213s.

As shown in FIG. 7 to FIG. 9, the first frame body 213a may be roughly of a frame structure having a circular outer contour. A through hole 213z may be provided at an edge of the first frame body 213a, and the through hole 213z may be a waist-shaped hole (or referred to as a runway-shaped hole). The first frame body 213a may be made of a conductive material, for example, metal. The first frame body 213a may be used as an antenna (descriptions are provided below).

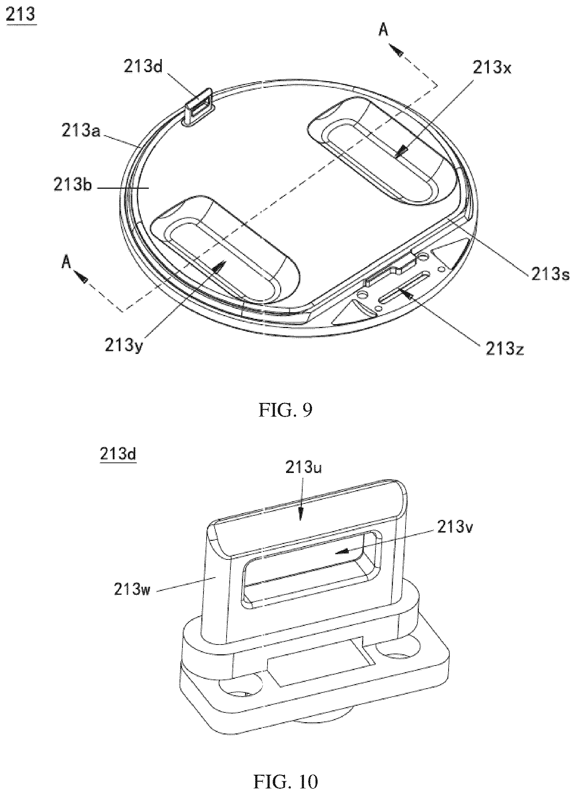

As shown in FIG. 7 to FIG. 9, the first bracket 213b may be approximately of a disk-shaped structure. A first accommodation groove 213y and a second accommodation groove 213x may be formed in a local region of the first bracket 213b, and the first accommodation groove 213y and the second accommodation groove 213x are arranged at a spacing. As shown in FIG. 9, from a perspective of one side of the first bracket 213b, the local region in which the first accommodation groove 213y and the second accommodation groove 213x are formed is in a concave shape. As shown in FIG. 7 and FIG. 8, from a perspective of the other side of the first bracket 213b, the local region in which the first accommodation groove 213y and the second accommodation groove 213x are formed is in a protrusion shape. As shown in FIG. 4 and FIG. 9, the first accommodation groove 213y may be configured to accommodate a first earphone 31, and the second accommodation groove 213x may be configured to accommodate a second earphone 32.

As shown in FIG. 9, a groove surrounding the first bracket 213b may be further provided on a circumferential edge of the first bracket 213b, and an opening of the groove and an opening of the first accommodation groove 213y are located on a same side of the first bracket 213b. The groove surrounds a periphery of the first accommodation groove 213y and the second accommodation groove 213x. As described below, the groove is configured to mount the sealing bracket 213t and the sealing ring 213s.

As shown in FIG. 7 to FIG. 9, the first bracket 213b is fixedly connected to the first frame body 213a, a circumferential region of the first frame body 213a surrounds the periphery of the first bracket 213b, and the through hole 213z of the first frame body 213a is also located on an outer side of the first bracket 213b.

As shown in FIG. 9, the latch portion 213d may be fastened at an edge of the first bracket 213b, and may be disposed opposite to the through hole 213z of the first frame body 213a. With reference to FIG. 9 and FIG. 10, a frame structure 213w may be provided at an end that is of the latch portion 213d and that is far away from the first bracket 213b, and the frame structure 213w may be located on a same side of the first bracket 213b as the opening of the first accommodation groove 213y. The frame structure 213w may enclose a through hole 213v. A slope 213u may be provided on a side that is of the frame structure 213w and that is far away from the first bracket 213b. The frame structure 213w of the latch portion 213d is configured to form a detachable buckle connection (descriptions are provided below) with the latch structure in the open button 25. The slope 213u serves as a guide, so that the frame structure 213w can smoothly cooperate with the latch structure in the open button 25.

### Magnet assembly 213r

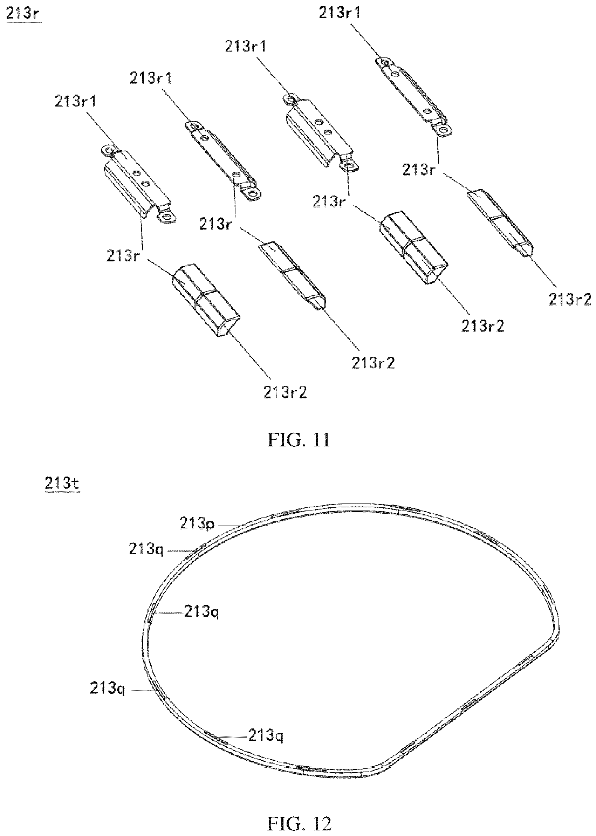

As shown in FIG. 8 and FIG. 11, the magnet assembly 213r may include a fastening bracket 213r1 and a first host attachment magnet 213r2.

For example, the first host attachment magnet 213r2 may be formed by splicing two single magnets, and each single magnet has a single magnetic field direction. The first host attachment magnet 213r2 formed by the two single magnets may have two magnetic field directions, and the first host attachment magnet 213r2 may form a Halbach array.

Based on a product requirement, in another embodiment, the first host attachment magnet may be a Halbach array formed by splicing another quantity of single magnets. For example, the first host attachment magnet is a Halbach array formed by splicing three single magnets, and the first host attachment magnet may have three magnetic field directions. Alternatively, the first host attachment magnet is a Halbach array formed by splicing four single magnets, and the first host attachment magnet may have four magnetic field directions.

Alternatively, in another embodiment, the first host attachment magnet may be a single magnet and has a single magnetic field direction. Alternatively, the first host attachment magnet may be a single magnet, but the first host attachment magnet may form a Halbach array having at least two magnetic field directions (which may be obtained by magnetizing different physical regions of a single magnet in different directions).

As shown in FIG. 11 and FIG. 7, a shape of the first host attachment magnet 213r2 in this embodiment may adapt to a shape of an outer surface of a groove wall of the first accommodation groove 213y (or the second accommodation groove 213x) in the first bracket 213b. The first host attachment magnet 213r2 may be fastened to the outer surface of the groove wall of the first accommodation groove 213y and the outer surface of the groove wall of the second accommodation groove 213x.

As shown in FIG. 11, there may be, for example, four first host attachment magnets 213r2, and structures of the four first host attachment magnets 213r2 may be, for example, consistent. With reference to FIG. 11 and FIG. 7, the four first host attachment magnets 213r2 may be grouped in pairs. A first group is mounted on the outer surface of the groove wall of the first accommodation groove 213y, and two first host attachment magnets 213r2 in the first group may be symmetrically mounted on two sides (for example, left and right sides in a perspective in FIG. 7) of the groove wall of the first accommodation groove 213y. A second group is mounted on the outer surface of the groove wall of the second accommodation groove 213x, and two first host attachment magnets 213r2 in the second group are symmetrically mounted on two sides (for example, left and right sides in the perspective in FIG. 7) of the groove wall of the second accommodation groove 213x.

In another embodiment, a quantity of first host attachment magnets 213r2 may be designed based on a product requirement, and is not limited to the foregoing descriptions.

As shown in FIG. 11, a quantity of fastening brackets 213r1 may be consistent with the quantity of first host attachment magnets 213r2. For example, there are also four fastening brackets 213r1. With reference to FIG. 11 and FIG. 7, the fastening brackets 213r1 may be mounted on the first bracket 213b, and one fastening bracket 213r1 may correspond to one first host attachment magnet 213r2, so that each first host attachment magnet 213r2 is fastened between one fastening bracket 213r1 and the first bracket 213b.

In this embodiment, the fastening bracket 213r1 can ensure reliable fastening of the first host attachment magnet 213r2 attached to the first host. In another embodiment, based on a product requirement, the fastening bracket 213r1 may not be provided.

### Sealing bracket 213t and sealing ring 213s

As shown in FIG. 8 and FIG. 12, the sealing bracket 213t may enclose a circle, and a shape of the sealing bracket 213t matches a shape of the circumferential edge of the first bracket 213b. The sealing bracket 213 may include a bracket main portion 213p and several protrusions 213q protruding from a side of the bracket main portion 213p. All the protrusions 213q may be spaced from each other. A previous protrusion 213q may be close to an outer side of the bracket main portion 213p, a next protrusion 213q adjacent to the previous protrusion 213q may be close to an inner side of the bracket main portion 213p, and all the protrusions 213q may be arranged according to this rule. In another embodiment, all the protrusions 213q may alternatively not be arranged in a "one inside one outside" manner. For example, all the protrusions 213q may be located on the outer side or the inner side of the bracket main portion 213p.

As shown in FIG. 8, the sealing ring 213s may enclose a circle, and a shape of the sealing ring 213s matches the shape of the sealing bracket 213t. The sealing ring 213s is fixedly connected to the sealing bracket 213t. For example, the sealing ring 213s and the sealing bracket 213t may be integrally formed, for example, formed by using an integral injection molding technique. The sealing bracket 213t may have a hard material and large structural strength, and is not easily deformed. The sealing ring 213s may have a soft material and small structural strength, and is easily deformed. A component including the sealing ring 213s and the sealing bracket 213t may be referred to as a sealing member.

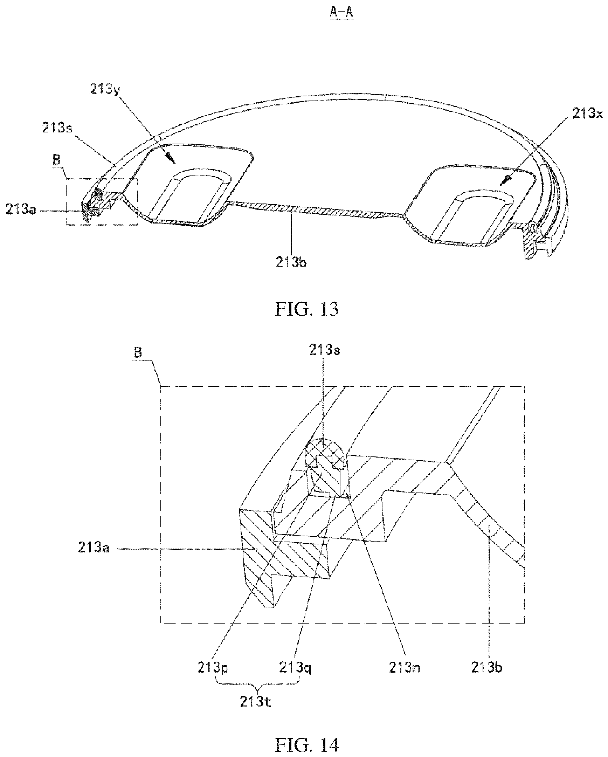

FIG. 13 shows an assembly structure including the first frame body 213a, the first bracket 213b, the sealing bracket 213t, and the sealing ring 213s. FIG. 14 is a partially enlarged schematic diagram at a position B in FIG. 13.

As shown in FIG. 14, a groove 213n may be provided on the circumferential edge of the first bracket 213b. With reference to FIG. 13 and FIG. 14, the groove 213n surrounds the circumferential edge of the first bracket 213b, and the groove 213n may surround the periphery of the first accommodation groove 213y and the second accommodation groove 213x. The sealing bracket 213t is fastened in the groove 213n, and the protrusion 213q may be in contact with a bottom surface of the groove 213n. A gap is formed between a part that is on the bracket main portion 213p and on which no protrusion 213q is disposed and the bottom surface of the groove 213n.

For example, the sealing bracket 213t may be bonded in the groove 213n by using a dispensing technique. An adhesive may be filled in the groove 213n, and filled in the gap between the part that is of the bracket main portion 213p and on which no protrusion 213q is disposed and the bottom surface of the groove 213n. Because the sealing bracket 213t has several protrusions 213q that are distributed at a spacing, several gaps are formed between the sealing bracket 213t and the bottom surface of the groove 213n. In this way, a filling amount of the adhesive can be ensured, and bonding strength can be ensured. In addition, due to existence of the gaps, the adhesive is not easy to overflow. In this way, a yield rate of the dispensing technique can be ensured

As shown in FIG. 14, the sealing ring 213s is located on a side that is of the sealing bracket 213t and that is far away from the protrusion 213q. In the following descriptions, the sealing ring 213s is configured to seal a gap between the first bracket 213b and a second host housing 231 of the host 2.

In this embodiment, the groove 213n of the first frame body 213a is narrow, and the sealing ring 213s is thin and soft (in other words, material hardness of the sealing ring 213s is small). If the sealing ring 213s is separately mounted into the groove 213n, it may be difficult to mount the sealing ring 213s. However, if the soft sealing ring 213s is connected to the hard sealing bracket 213t (material hardness of the sealing bracket 213t is large), and then the sealing bracket 213t is mounted into the groove 213n, the sealing ring 213s can be more easily assembled to the first frame body 213a.

### First host circuit board assembly 212

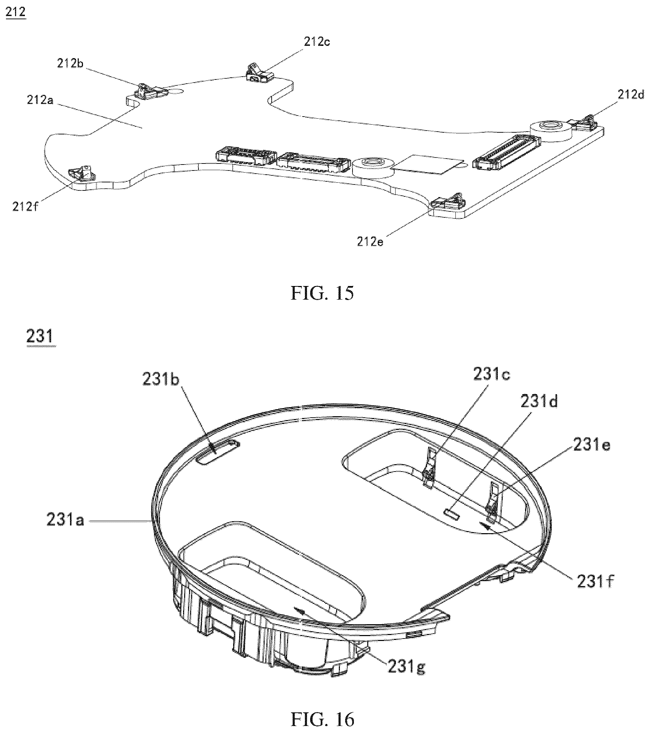

As shown in FIG. 15, the first host circuit board assembly 212 may include a circuit board 212a and components disposed on the circuit board 212a. The circuit board 212a may be, for example, a primary circuit board of the host 2. The components on the circuit board 212a may include, for example, a grounding spring 212b, a grounding spring 212c, a grounding spring 212d, a grounding spring 212e, and a feeding spring 212f. The grounding spring 212b, the grounding spring 212c, the grounding spring 212d, and the grounding spring 212e all may be electrically connected to a ground on the circuit board 212a, and the feeding spring 212f may be connected to a feeding point on the circuit board 212a. The components on the circuit board 212a may further include a magnetic field sensor, for example, a Hall sensor or a magnetometer.

With reference to FIG. 6 and FIG. 7, the first host circuit board assembly 212 may be mounted on a side that is of the first bracket 213b and that is far away from the opening of the first accommodation groove 213y, and is partially located between the groove wall of the first accommodation groove 213y and the groove wall of the second accommodation groove 213x.

### Display 211

As shown in FIG. 6, the display 211 may have a circular outline, and an edge of the display 211 may have a transition rounded corner. The display 211 may be connected to both the first frame body 213a and the first bracket 213b of the first host housing 213. The display 211 may face the first host circuit board assembly 212. The display 211 may be electrically connected to the first host circuit board assembly 212, to implement image display. The display 211 may further have a touch control function.

As shown in FIG. 4 and FIG. 6, the second part 23 of the host 2 of the wearable device 1 may include the second host housing 231, a host battery 234, a third host housing 232, a second host circuit board assembly 235, a wireless charging coil 236, and a fourth host housing 233.

### Second host housing 231

As shown in FIG. 16, FIG. 17, and FIG. 18, the second host housing 231 may include a second bracket 231a, a second charging spring 231c, a first charging spring 231e, a foreign matter detection spring 231d, a state detection magnet 231x, a state detection magnet 231w, and a second host attachment magnet 231v.

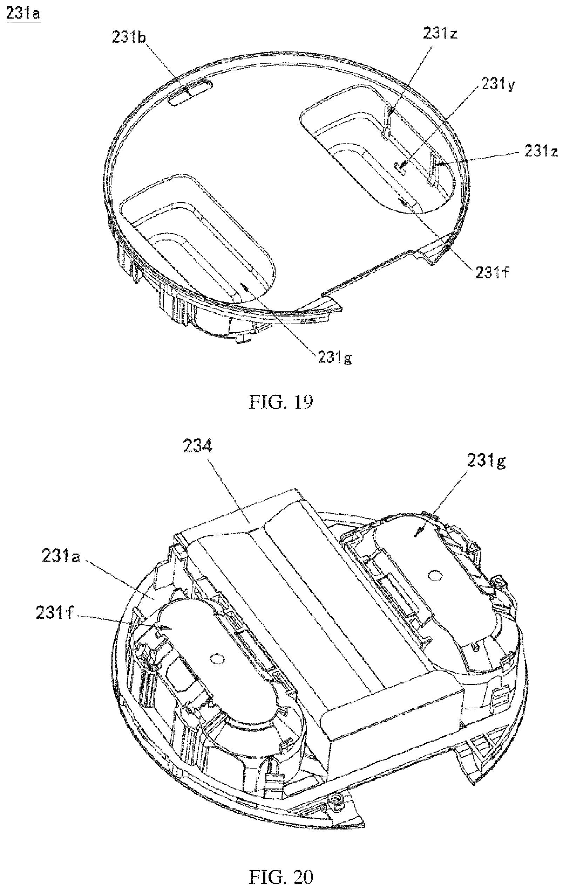

As shown in FIG. 19, the second bracket 231a may have a roughly circular outline. A third accommodation groove 231f and a fourth accommodation groove 231g may be formed in a local region of the second bracket 231a, and the third accommodation groove 231f and the fourth accommodation groove 231g are arranged at a spacing. Structures of the third accommodation groove 231f and the fourth accommodation groove 231g may be basically consistent. From a perspective of one side of the second bracket 231a, the local region in which the third accommodation groove 231f and the fourth accommodation groove 231g are formed is in a concave shape. From a perspective of the other side of the second bracket 231a, the local region in which the third accommodation groove 231f and the fourth accommodation groove 231g are formed is in a protrusion shape.

With reference to FIG. 19 and FIG. 4, the third accommodation groove 231f is configured to accommodate the first earphone 31, and the fourth accommodation groove 231g is configured to accommodate the second earphone 32. When the host 2 is closed, the third accommodation groove 231f and the first accommodation groove 213y enclose an accommodation space used to accommodate the first earphone 31, and the fourth accommodation groove 231g and the second accommodation groove 213x enclose an accommodation space used to accommodate the second earphone 32.

In this embodiment, a groove depth of the third accommodation groove 231f may be greater than a groove depth of the first accommodation groove 213y, and a groove depth of the fourth accommodation groove 231g may be greater than a groove depth of the second accommodation groove 213x. A groove depth may be defined as a maximum distance from an opening of an accommodation groove (a collective name of the first accommodation groove 213y, the second accommodation groove 213x, the third accommodation groove 231f, and the fourth accommodation groove 231g) to a groove bottom surface of the accommodation groove in a normal direction of the circuit board in the host 2.

In this embodiment, when the host 2 is opened, the earphones 3 may be attached to the first part 21. A part of the first earphone 31 is located in the first accommodation groove 213y, and the other part is located outside the first accommodation groove 213y. A maximum distance between the part that is of the first earphone 31 and that is located in the first accommodation groove 213y and a plane on which the opening of the first accommodation groove 213y is located may be defined as a first distance, and a maximum distance between the part that is of the first earphone 31 and that is outside the first accommodation groove 213y and the plane on which the opening of the first accommodation groove 213y is located may be defined as a second distance, where the first distance is less than the second distance. In other words, when the host 2 is opened, a small part of the first earphone 31 is located in the first accommodation groove 213y, and a large part of the first earphone 31 is exposed outside the first accommodation groove 213y. For the second earphone 32, similarly, when the host 2 is opened, a small part of the second earphone 32 is located in the second accommodation groove 213x, and a large part of the second earphone 32 is located outside the second accommodation groove 213x. The foregoing design is further described below.

As shown in FIG. 19, the groove wall of the third accommodation groove 231f may be provided with two through holes 231z, and the two through holes 231z may be provided, for example, on a side wall that is of the third accommodation groove 231f and that is far away from the fourth accommodation groove 231g. There is a spacing between the two through holes 231z. The two through holes 231z are respectively configured to mount the second charging spring 231c and the first charging spring 231e (descriptions are further provided below). The groove wall of the third accommodation groove 231f may be further provided with a through hole 231y, and the through hole 231y may be, for example, roughly located on a bottom wall of the third accommodation groove 231f. There is a spacing between the through hole 231y and each of the two through holes 231z. The through hole 231y is configured to mount the foreign matter detection spring 231d (descriptions are further provided below).

As shown in FIG. 19, a groove wall of the fourth accommodation groove 231g may also be provided with the through hole 231z and the through hole 231y (which are collectively referred to as a through hole below). The through hole on the groove wall of the fourth accommodation groove 231g may be located on a side that is of the fourth accommodation groove 231g and that is far away from the third accommodation groove 231f. The through hole on the groove wall of the fourth accommodation groove 231g and the through hole on the groove wall of the third accommodation groove 231f may be basically symmetrically distributed on two sides of a symmetric surface of the second bracket 231a.

As shown in FIG. 19, a through hole 231b may be formed at an edge of the second bracket 231a. The through hole 231b may be located between the third accommodation groove 231f and the fourth accommodation groove 231g, and distances between the through hole 231b and the third accommodation groove 231f and between the through hole 231b and the fourth accommodation groove 231g may be basically equal. With reference to FIG. 19 and FIG. 4, the through hole 231b is configured to be passed through by the latch portion 213d in the first part 21 (descriptions are further provided below).

### Charging spring

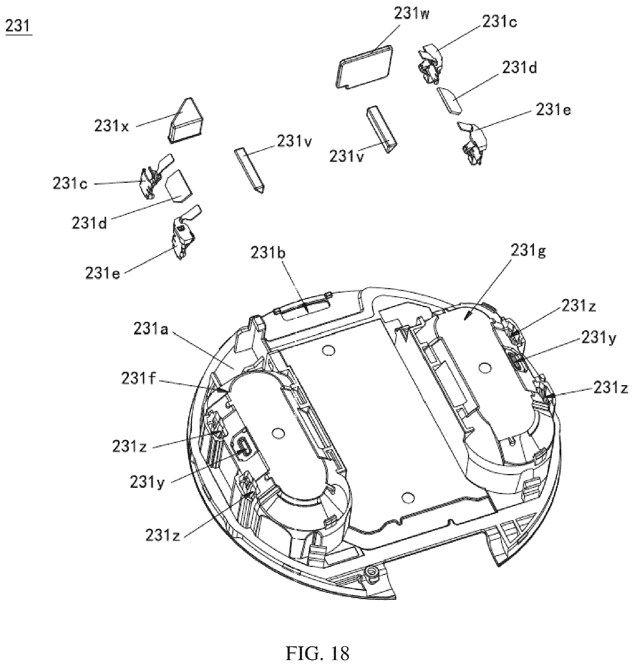

As shown in FIG. 18, there may be two second charging springs 231c and two first charging springs 231e. With reference to FIG. 16 to FIG. 19, one second charging spring 231c and one first charging spring 231e are mounted on the groove wall of the third accommodation groove 231f, and the other second charging spring 231c and the other first charging spring 231e are mounted on the groove wall of the fourth accommodation groove 231g. For the third accommodation groove 231f, the second charging spring 231c may be located at a through hole 231z of the third accommodation groove 231f, and a contact head of the second charging spring 231c may extend into the third accommodation groove 231f through the through hole 231z. The first charging spring 231e may be located at another through hole 231z of the third accommodation groove 231f, and a contact head of the first charging spring 231e may extend into the third accommodation groove 231f through the another through hole 231z. For the fourth accommodation groove 231g, the second charging spring 231c may be located at a through hole 231z of the fourth accommodation groove 231g, and a contact head of the second charging spring 231c may extend into the fourth accommodation groove 231g through the through hole 231z. The first charging spring 231e may be located at another through hole 231z of the fourth accommodation groove 231g, and a contact head of the first charging spring 231e may extend into the fourth accommodation groove 231g through the another through hole 231z.

In this embodiment, the two second charging springs 231c and the two first charging springs 231e all may be electrically connected to the first host circuit board assembly 212 through a line (for example, a flexible circuit board). The second charging spring 231c and the first charging spring 231e in the third accommodation groove 231f are respectively configured to be in elastic contact with two electrodes on the first earphone 31, and the second charging spring 231c and the first charging spring 231e in the fourth accommodation groove 231g are respectively configured to be in elastic contact with two electrodes on the second earphone 32 (descriptions are further provided below). In this way, the first earphone 31 may be charged by using the second charging spring 231c and the first charging spring 231e in the third accommodation groove 231f, and the second earphone 32 may be charged through the second charging spring 231c and the first charging spring 231e in the fourth accommodation groove 231g.

### Foreign matter detection spring

As shown in FIG. 18, there may be two foreign matter detection springs 231d. With reference to FIG. 16 to FIG. 19, one foreign matter detection spring 231d may be mounted on the groove wall of the third accommodation groove 231f, the foreign matter detection spring 231d may be located at the through hole 231y of the third accommodation groove 231f, and a contact head of the foreign matter detection spring 231d may penetrate the through hole 231y. The other foreign matter detection spring 231d may be mounted on the groove wall of the fourth accommodation groove 231g, the foreign matter detection spring 231d may be located at the through hole 231y of the fourth accommodation groove 231g, and a contact head of the foreign matter detection spring 231d may penetrate the through hole 231y.

In this embodiment, the foreign matter detection spring 231d may be electrically connected to the first host circuit board assembly 212 through a line (for example, a flexible circuit board). The foreign matter detection spring 231d is configured to implement foreign matter detection (detecting whether foreign matter enters the third accommodation groove 231f and the fourth accommodation groove 231g). A specific principle is described below.

### State detection magnet

As shown in FIG. 18, for example, the state detection magnet 231x may be a single magnet. The state detection magnet 231x may have a single magnetic field direction, or have at least two magnetic field directions (that is, a Halbach array is formed). The state detection magnet 231w may be a single magnet. The state detection magnet 231x may have a single magnetic field direction, or have at least two magnetic field directions (that is, the magnet may be a Halbach array).

In another embodiment, the state detection magnet may be a Halbach array formed by splicing at least two single magnets.

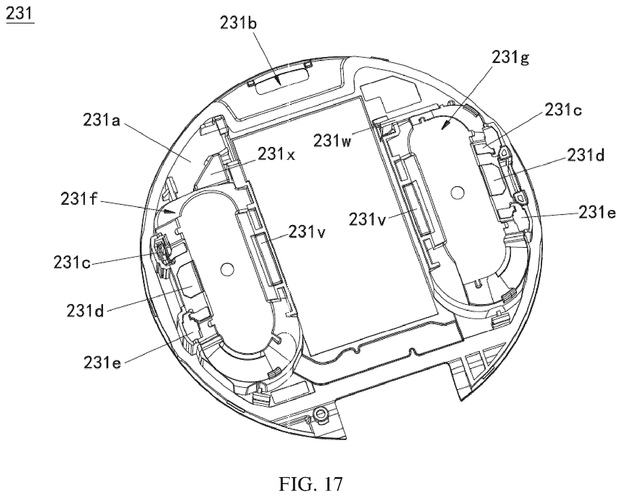

As shown in FIG. 18 and FIG. 17, the state detection magnet 231x may be fastened to a side that is of the second bracket 231a and that is far away from the opening of the third accommodation groove 231f, and the state detection magnet 231x may be adjacent to the groove wall of the third accommodation groove 231f, and may be further close to the through hole 231b. The state detection magnet 231w and the state detection magnet 231x are located on the same side of the second bracket 231a, and the state detection magnet 231w may be adjacent to the groove wall of the fourth accommodation groove 231g.

### Second host attachment magnet 231v

As shown in FIG. 18, for example, the second host attachment magnet 231v may be a single magnet. The second host attachment magnet 231v may have a single magnetic field direction, or have at least two magnetic field directions (that is, a Halbach array is formed).

Based on a product requirement, in another embodiment, the second host attachment magnet 231v may alternatively be a Halbach array formed by splicing at least two single magnets.

As shown in FIG. 18 and FIG. 17, in this embodiment, there may be, for example, two second host attachment magnets 231v, and structures of the two second host attachment magnets 231v may be, for example, consistent. Both the two second host attachment magnets 231v may be fastened on a side that is of the second bracket 231a and that is far away from the opening of the third accommodation groove 231f. One second host attachment magnet 231v may be located on a side that is of the groove wall of the third accommodation groove 231f and that faces the fourth accommodation groove 231g, and the other second host attachment magnet 231v may be located on a side that is of the groove wall of the fourth accommodation groove 231g and that faces the third accommodation groove 231f.

In another embodiment, a quantity and positions of second host attachment magnets 231v may be designed based on a product requirement. For example, one second host attachment magnet 231v may be mounted on each of two sides of the groove wall of the third accommodation groove 231f, and one second host attachment magnet 231v may be mounted on each of two sides of the groove wall of the fourth accommodation groove 231g.

### Host battery 234

As shown in FIG. 6 and FIG. 20, the host battery 234 may be fastened to the second bracket 231a, and is located on a side that is of the second bracket 231a and that is far away from the opening of the third accommodation groove 231f. The host battery 234 may be located between the groove wall of the third accommodation groove 231f and the groove wall of the fourth accommodation groove 231g. The host battery 234 may be electrically connected to the second host circuit board assembly 235 through a line (for example, a flexible circuit board), and the second host circuit board assembly 235 may be electrically connected to the first host circuit board assembly 212 through a line (for example, a flexible circuit board). Therefore, the host battery 234 can be electrically connected to the first host circuit board assembly 212.

### Third host housing 232

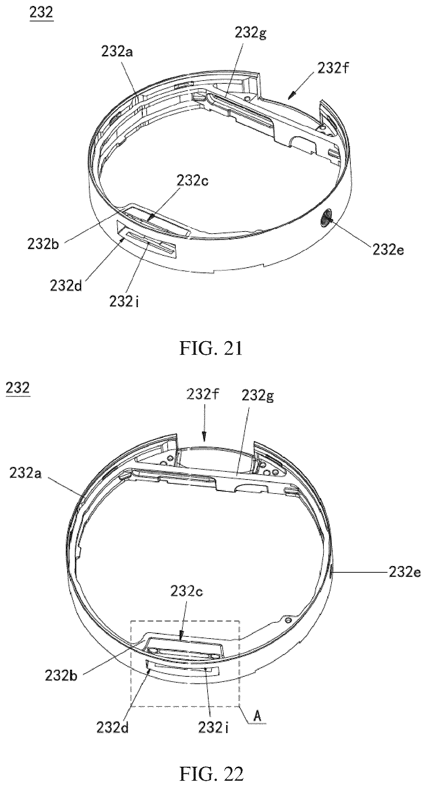

As shown in FIG. 21, the third host housing 232 may be roughly of a ring-shaped structure. The third host housing 232 may include a circumferential side wall 232a, an inner bearing platform 232b, and an inner bearing platform 232g. The circumferential side wall 232a may enclose a ring shape. Both the inner bearing platform 232b and the inner bearing platform 232g are connected to an inner side of the circumferential side wall 232a, and the inner bearing platform 232b and the inner bearing platform 232g may be disposed at a spacing. For example, the inner bearing platform 232b and the inner bearing platform 232g may be roughly located at two ends of the circumferential side wall 232a in a radial direction.

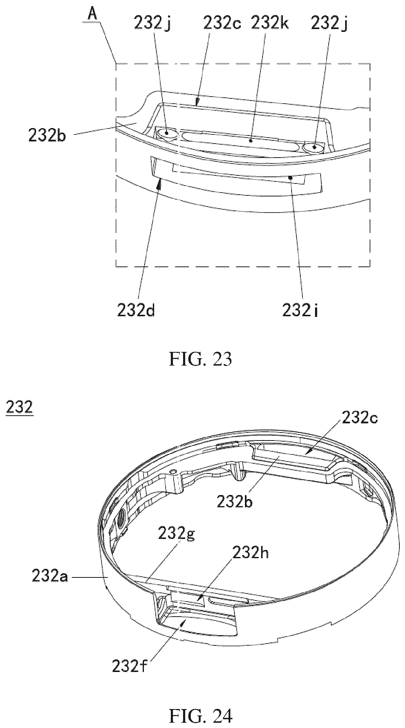

As shown in FIG. 22, the third host housing 232 may have a rotating shaft mounting space 232f, and the rotating shaft mounting space 232f may be a groove formed on the inner bearing platform 232g and passing through the circumferential side wall 232a. The rotating shaft mounting space 232f is used to mount the rotating shaft assembly 22. As shown in FIG. 24, an inner surface of the rotating shaft mounting space 232f may have a limiting groove 232h, and the limiting groove 232h may be opposite to an opening formed by the rotating shaft mounting space 232f on the circumferential side wall 232a.

As shown in FIG. 22, the third host housing 232 may further have an open button mounting space. The open button mounting space may form a second opening 232c on the inner bearing platform 232b, and the open button mounting space may further pass through the circumferential side wall 232a and form a first opening 232d on the circumferential side wall 232a. The open button mounting space may be opposite to the rotating shaft mounting space 232f. For example, the two may be roughly located at two opposite ends of a same diameter of the third host housing 232.

As shown in FIG. 22 and FIG. 23, a groove 232i may be provided on an inner surface that is in the open button mounting space and that is opposite to the second opening 232c. The groove 232i may be a long-strip groove. A guiding slot 232j and a groove 232k may be provided on an inner surface that is in the open button mounting space and that is opposite to the first opening 232d. The guiding slot 232j may be a round hole, and there may be two guiding slots 232j. The groove 232k may be in a runway shape, and the groove 232k may be located between the two guiding slots 232j.

As shown in FIG. 21 and FIG. 22, the third host housing 232 may further have a function button mounting through hole 232e, and the function button mounting through hole 232e may be provided on the circumferential side wall 232a, and may be located between the rotating shaft mounting space 232f and the first opening 232d. The function button mounting through hole 232e is configured to mount the function button 24.

### Open button 25

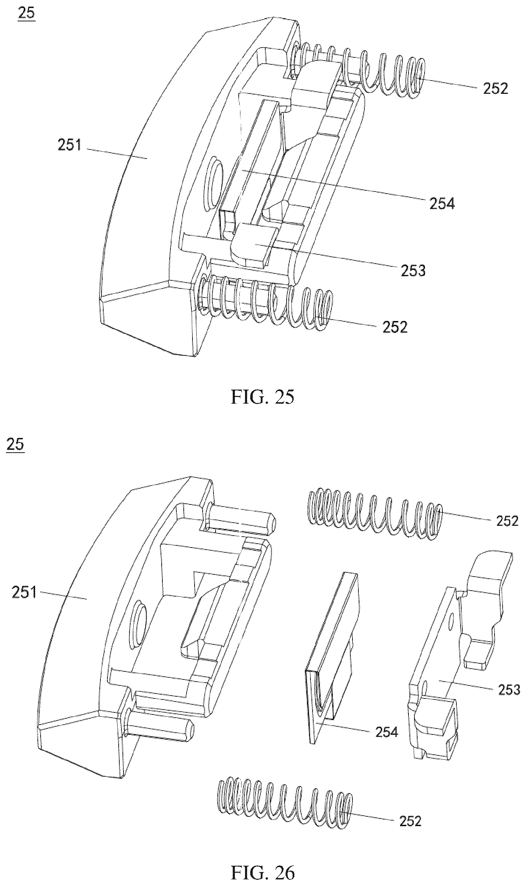

As shown in FIG. 25 and FIG. 26, the open button 25 includes a cap 251, an elastic member 252, a button support 253, and a touch-sensitive spring 254.

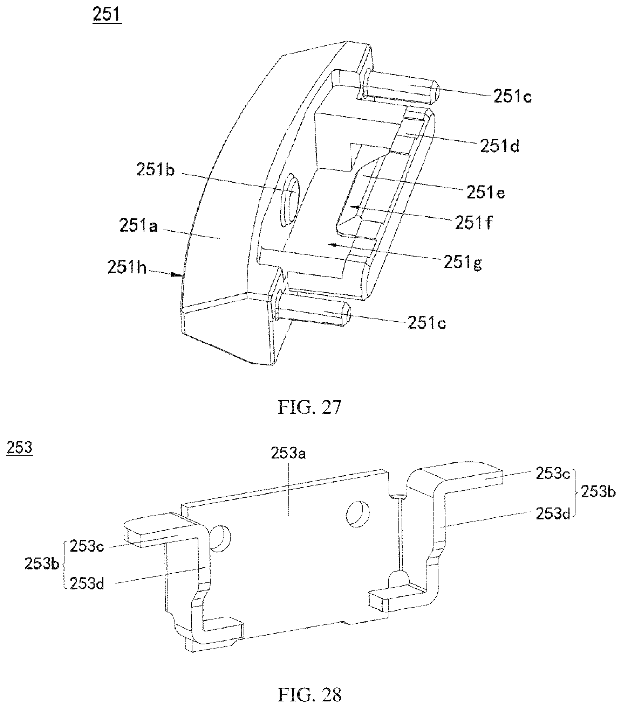

As shown in FIG. 27, the cap 251 may be of an integrated frame structure. The cap 251 may include a pressing portion 251a, a bump 251b, a guiding portion 251c, a bearing portion 251d, and a buckle 251e.

As shown in FIG. 27, the pressing portion 251a may be roughly in a long-strip shape, and a cross section shape of the pressing portion 251a is roughly a trapezoid (the cross section may be perpendicular to a length direction of the pressing portion 251a). The pressing portion 251a has a surface 251h, and the surface 251h is a surface on which an upper bottom of the trapezoidal cross section of the pressing portion 251a is located.

As shown in FIG. 27, the bump 251b may be disposed on another surface of the pressing portion 251a, and is opposite to the surface 251h of the pressing portion 251a. A surface of the bump 251b may be an arc surface or a plane, or may be formed by connecting an arc surface to a plane.

As shown in FIG. 27, the guiding portion 251c may be a column, for example, a cylinder. The guiding portion 251c may protrude from the another surface of the pressing portion 251a, and the guiding portion 251c and the bump 251b may be located on a same side of the pressing portion 251a. There may be two guiding portions 251c, and the two guiding portions 251c may be respectively located at two opposite ends of the pressing portion 251a. The guiding portions 251c are configured to guide the cap 251 when the cap 251 moves.

As shown in FIG. 27, the bearing portion 251d is connected to a side that is of the pressing portion 251a and that is far away from the surface 251h, and the bearing portion 251d is located between the two guiding portions 251c. The bearing portion 251d may be roughly C-shaped, two free ends of a C-shaped structure of the bearing portion 251d are both connected to the pressing portion 251a, and the bearing portion 251d and the pressing portion 251a may jointly form an open space 251g. The bearing portion 251d is configured to bear the button support 253.

As shown in FIG. 27, the buckle 251e may be connected to the bearing portion 251d, and is located in the open space 251g. The buckle 251e may face the bump 251b. The buckle 251e may have an assembly guide slope 251f. The buckle 251e is the latch structure in the open button 25 described above.

As shown in FIG. 25 and FIG. 26, the elastic member 252 may be a spring. Alternatively, the elastic member 252 may be another component that can be elastically scaled. There may be two elastic members 252. With reference to FIG. 26 and FIG. 27, one elastic member 252 may be sleeved on one guiding portion 251c, and the other elastic member 252 may be sleeved on the other guiding portion 251c.

As shown in FIG. 28, the button support 253 may include a support body 253a and two mounting ears 253b respectively connected to two sides of the support body 253a. The support body 253a may be in a flat-plate shape. The mounting ear 253b may be in a bent-plate shape. The mounting ear 253b may include a first plate 253c and a second plate 253d, and the first plate 253c and the second plate 253d may be roughly bent by 90 degrees. Two first plates 253c in the two mounting ears 253b may be bent backwards relative to second plates 253d. For example, in a perspective of the figure, a first plate 253c on the left may be bent leftwards relative to a second plate 253d on the left, and a first plate 253c on the right may be bent rightwards relative to a second plate 253d on the right.

In another embodiment, the two mounting ears may alternatively be bent in a same direction.

With reference to FIG. 27 and FIG. 28, the button support 253 may be mounted into the open space 251g of the cap 251, and the two mounting ears 253b of the button support 253 may be supported on the bearing portion 251d of the cap 251. The button support 253 is configured to fasten the touch-sensitive spring 254, and may be further configured to limit the cap 251 when the cap 251 moves to a limit position.

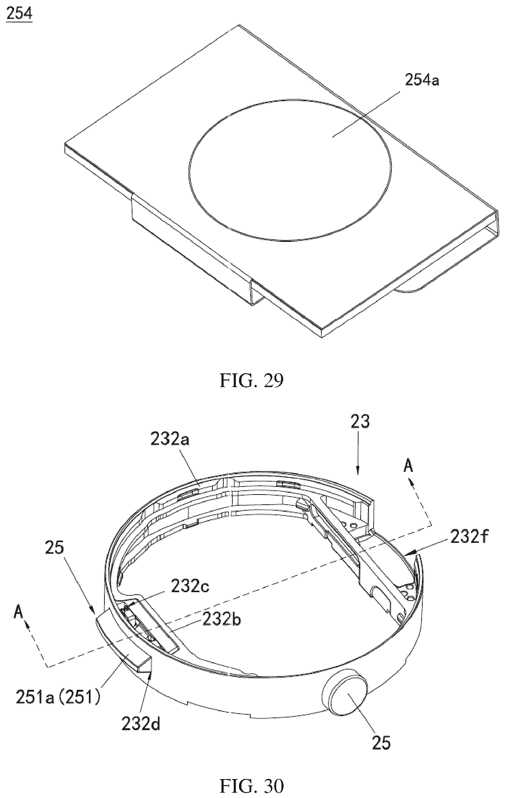

In this embodiment, the touch-sensitive spring 254 has elastic deformation performance, and can be compressed when a force is applied, and rebound after pressure disappears. As shown in FIG. 29, the touch-sensitive spring 254 may be, for example, a dome spring, where the dome spring may be formed by a polyethylene glycol terephthalate (polyethylene glycol terephthalate, PET) sheet, a metal dome (or referred to as a button spring), an adhesive, a film, or the like. The touch-sensitive spring 254 may have an elastic region 254a. The elastic region 254a may be in a protrusion shape when being not pressed, concave after being pressed, and restore to the protrusion shape after pressure disappears.

With reference to FIG. 29 and FIG. 25, the touch-sensitive spring 254 may be fastened to the button support 253, and the elastic region 254a may face the bump 251b.

The foregoing describes a detailed structure of the open button 25. The following describes assembly of the open button 25 and the third host housing 232 and cooperation between the open button 251 and the latch portion 213d on the first bracket 213b.

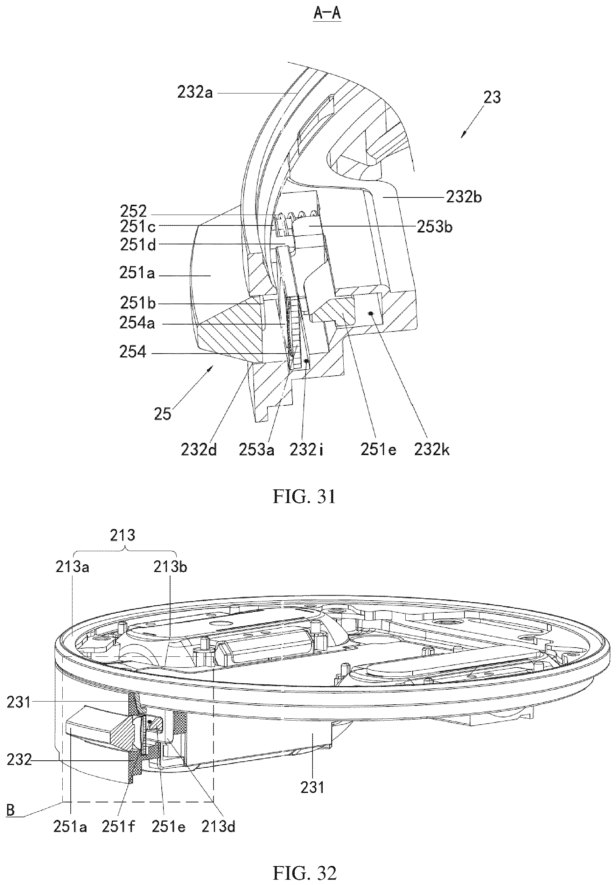

As shown in FIG. 30 and FIG. 31, the open button 25 may be mounted in the open button mounting space of the third host housing 232. A state of the open button 25 shown in FIG. 30 and FIG. 31 corresponds to the closed state of the host 2.

As shown in FIG. 31, the pressing portion 251a may be exposed from the first opening 232d of the open button mounting space. With reference to FIG. 31 and FIG. 23, a part of the guiding portion 251c may be located in the guiding slot 232j, but is not in contact with a bottom surface of the guiding slot 232j. As shown in FIG. 31, a part that is of the bearing portion 251d and that is spaced opposite to the pressing portion 251a may be located in the groove 232k. The buckle 251e may be located in the open button mounting space and outside the groove 232k. The cap 251 may move in an axial direction of the guiding portion 251c. Because the first opening 232d limits the pressing portion 251a, the cap 251 basically cannot move in another direction.

With reference to FIG. 31 and FIG. 23, the elastic member 252 is sleeved on the guiding portion 251c, and a part of the elastic member 252 may be located in the guiding slot 232j. One end of the elastic member 252 is in contact with the pressing portion 251a, and the other end is in contact with the bottom surface of the guiding slot 232j.

As shown in FIG. 31 and FIG. 27, the button support 253 may be assembled with the cap 251, and is fastened in the open button mounting space. The support body 253a of the button support 253 may be located in the open space 251g of the cap 251 and inserted into the groove 232i, and the support body 253a may press against a side wall that is of the groove 232i and that is close to the first opening 232d. The two mounting ears 253b of the button support 253 may be respectively supported (or referred to as overlapping) on two sides of the bearing portion 251d. Each mounting ear 253b may abut against a part that is of the bearing portion 251d and that is spaced opposite to the pressing portion 251a, so that the cap 251 cannot continue to move out of the open button mounting space. In other words, this is a limiting function of the button support 253 on the cap 251 at the limit position. Each mounting ear 253b may press against a top surface of a side wall of the groove 232k (a surface that is of the side wall and that faces the first opening 232d). In this way, a side wall of the groove 232i and a side wall of the groove 232k may limit the button support 253 in opposite directions, so that the button support 253 basically cannot move in an axial direction of the guiding slot 232j.

As shown in FIG. 31, the touch-sensitive spring 254 may be fastened to the support body 253a. The touch-sensitive spring 254 may be inserted into the groove 232i, or the touch-sensitive spring 254 may be located outside the groove 232i. The touch-sensitive spring 254 is located between the bump 251b and the buckle 251e, and the elastic region 254a of the touch-sensitive spring 254 faces the bump 251b. There is a specific spacing between the touch-sensitive spring 254 and the buckle 251e.

As shown in FIG. 31, when the user presses the cap 251 from the pressing portion 251a, the cap 251 moves into the open button mounting space. The guiding portion 251c moves into the guiding slot 232j, and the elastic member 252 is gradually compressed. The bearing portion 251d slides into the groove 232k relative to the mounting ears 253b, and the buckle 251e moves into the groove 232k. The bump 251b is close to the touch-sensitive spring 254. When the bump 251b squeezes the elastic region 254a and enables the elastic region 254a to elastically deform, the user can experience a touch feeling feedback.

On the contrary, when the pressing portion 251a is no longer pressed, the elastic member 252 rebounds and pushes the cap 251 to move out of the open button mounting space. The guiding portion 251c moves outwards the guiding slot 232j, and the elastic member 252 gradually extends. The bearing portion 251d slides outwards the groove 232k relative to the mounting ears 253b, and the buckle 251e moves outwards the groove 232k. The bump 251b is far away from the touch-sensitive spring 254. After a part that is of the bearing portion 251d and that is spaced opposite to the pressing portion 251a re-presses against the mounting ears 253b, the cap 251 stops moving.

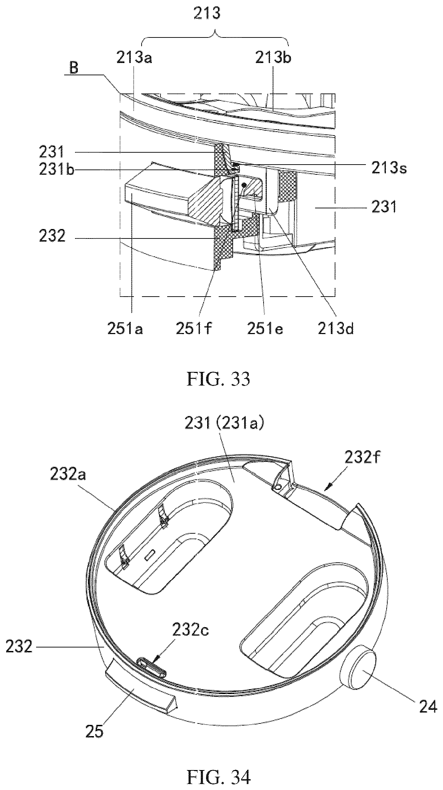

FIG. 32 is a schematic sectional view of assembly of the first host housing 213, the second host housing 231, the third host housing 232, and the open button 25. To clearly display an assembly structure, the first host housing 213 is not sectioned. FIG. 33 is a partially enlarged schematic diagram at a position B in FIG. 32.

With reference to FIG. 33 and FIG. 16, the latch portion 213d on the first bracket 213b of the first host housing 213 may pass through the through hole 231b on the second host housing 231, and enter the open button mounting space of the third host housing 232. In addition, the latch portion 213d may form a buckle connection with the buckle 251e, and the buckle connection is a detachable connection. In this way, through cooperation between the latch portion 213d and the buckle 251e, it can be maintained that the first host housing 213 and the third host housing 232 are closed. In other words, the first part 21 and the second part 23 of the host 2 can be closed.

As shown in FIG. 33, when the user presses the pressing portion 251a, the buckle 251e moves and no longer maintains the buckle connection with the latch portion 213d. In this case, the first host housing 213 automatically opens under driving of the rotating shaft assembly 22. When the user intends to close the first part 21 and the second part 23, after the latch portion 213d is in contact with the buckle 251e, the latch portion 213d may squeeze the buckle 251e until the latch portion 213d forms the buckle connection with the buckle 251e again. In this case, the first part 21 and the second part 23 are latched.

In the open button 25 of this embodiment, the buckle 251e that can reciprocally move is designed, so that the host 2 can be opened and latched. The touch-sensitive spring 254 is designed, so that the touch feeling feedback can be added in a process of opening the host 2, thereby improving user experience.

In another embodiment, based on a product requirement, the host may be opened and latched by using an open button having another structure. For example, a buckle may be disposed on the first support of the first host housing (the buckle corresponds to the buckle 251e), and a latch portion is disposed in the open button (for example, the latch portion is disposed on the bearing portion of the cap, and the latch portion corresponds to the latch portion 213d). Alternatively, for example, a torsion spring mechanism may be used to provide a rebound force for a movable cap, a buckle (or a latch portion) is designed on the cap of the open button, and the host is opened and closed through cooperation between the buckle (or the latch portion) and the buckle (or the latch portion) that is on the first bracket of the first host housing. In other embodiments, the touch-sensitive spring may be canceled.

In addition, with reference to FIG. 33 and FIG. 13, when the first part 21 and the second part 23 are closed, the first bracket 213b and the second host housing 231 are closed and match each other, and the sealing ring 213s on the first bracket 213b abuts against the circumferential edge of the second host housing 231. In this way, the sealing ring 213s can seal the gap between the first bracket 213b and the second host housing 231, to prevent external water vapor from entering the inside of the host 2 from the gap.

In another embodiment, it is easy to understand that the sealing bracket and the sealing ring may alternatively be mounted on the circumferential edge of the second host housing 231. An assembly structure including the sealing bracket, the sealing ring, and the second host housing is similar to that described above, and details are not described herein again. When the first part 21 and the second part 23 are closed, the sealing ring on the second host housing 231 abuts against the circumferential edge of the first bracket, to seal the gap between the second host housing 231 and the first bracket 213b.

Alternatively, different from that in the foregoing sealing design, in another embodiment, the sealing bracket 213t may not be disposed, but a sealing ring is disposed only on the first bracket 213b or the second host housing 231. In this way, the gap between the first bracket 213b and the second host housing 231 may also be sealed.

As shown in FIG. 6 and FIG. 21, the function button 24 may be roughly a cylinder. The function button 24 may be inserted into the function button mounting through hole 232e of the third host housing 232, and is movably connected to the third host housing 232. The function button 24 may move along an axis of the function button mounting through hole 232e in the function button mounting through hole 232e, and/or the function button 24 may rotate around the axis of the function button mounting through hole 232e. The function button 24 is configured to be pressed and/or rotated by the user, so that the host 2 implements a corresponding function, for example, selection, confirmation, or image display switching.

As shown in FIG. 34 and FIG. 6, the open button 25 and the function button 24 may be assembled to the third host housing 232, and the third host housing 232 may be further assembled with the second host housing 231. The circumferential side wall 232a of the third host housing 232 surrounds a periphery of the second host housing 231 and the host battery 234. With reference to FIG. 34 and FIG. 16, the second opening 232c of the third host housing 232 may communicate with the through hole 231b of the second bracket 231a. The wall of the second bracket 231a may avoid the rotating shaft mounting space 232f of the third host housing 232, to facilitate mounting of the rotating shaft assembly 22.

### Fourth host housing 233

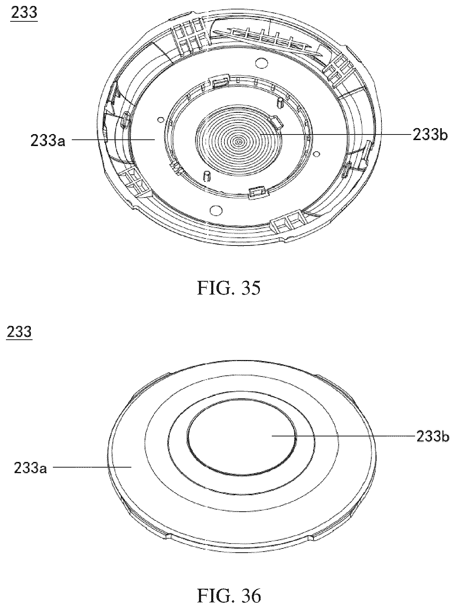

As shown in FIG. 35, FIG. 36, and FIG. 37, the fourth host housing 233 may be roughly in a disk shape. The fourth host housing 233 may include a third holder 233a and a lens 233b. The third bracket 233a may be roughly in a disk shape. The third bracket 233a may have a mounting through hole 233c. The lens 233b is mounted on the third bracket 233a, and covers the mounting through hole 233c. The lens 233b may be configured to transmit light emitted by a photoplethysmography (photoplethysmography, PPG) sensor (descriptions are provided below) and transmit light reflected back by a human body.

### Second host circuit board assembly 235

As shown in FIG. 6, the second host circuit board assembly 235 may include a circuit board and lines and components disposed on the circuit board. The circuit board in the second host circuit board assembly 235 may be, for example, a secondary circuit board of the host 2. For example, a device like a PPG sensor may be disposed on the secondary circuit board. As shown in FIG. 6, the second host circuit board assembly 235 may be mounted on the fourth host housing 233.

### Wireless charging coil 236

The wireless charging coil 236 is configured to implement wireless charging. The wireless charging coil 236 may be mounted on the fourth host housing 233. The wireless charging coil 236 may be electrically connected to the circuit board in the second host circuit board assembly 235. For example, a pin of the wireless charging coil 236 may be soldered to the circuit board. As shown in FIG. 6, for example, the wireless charging coil 236 may be located on a periphery of the second host circuit board assembly 235.

As shown in FIG. 5 and FIG. 6, the fourth host housing 233 may be assembled and fastened to the third host housing 232, and the fourth host housing 233 and the third host housing 232 jointly enclose the second host housing 231, the host battery 234, the second host circuit board assembly 235, and the wireless charging coil 236. Both the second host circuit board assembly 235 and the wireless charging coil 236 may be located between the host battery 234 and the fourth host housing 233.

### Rotating shaft assembly 22

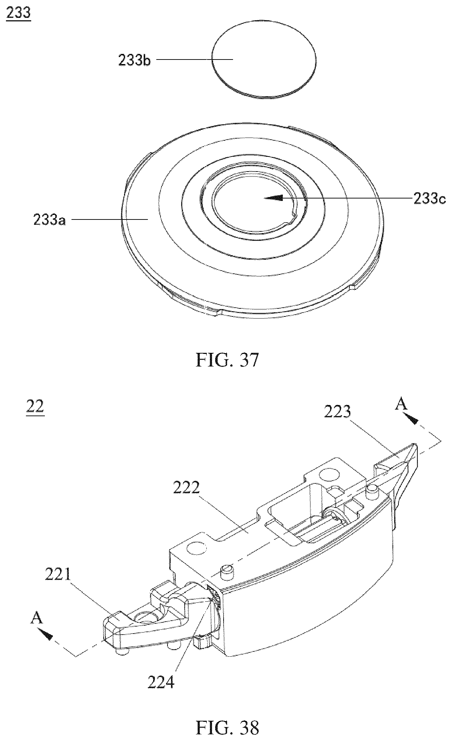

As shown in FIG. 38, FIG. 39, and FIG. 40, in an implementation 1 of this embodiment, the rotating shaft assembly 22 may include a shaft sleeve 222, a bump matching member 227, a driven member 229, a gasket 225, an elastic member 228, a first shaft 221, a limiting member 226, a second shaft 223, and a shaft contact member 224.

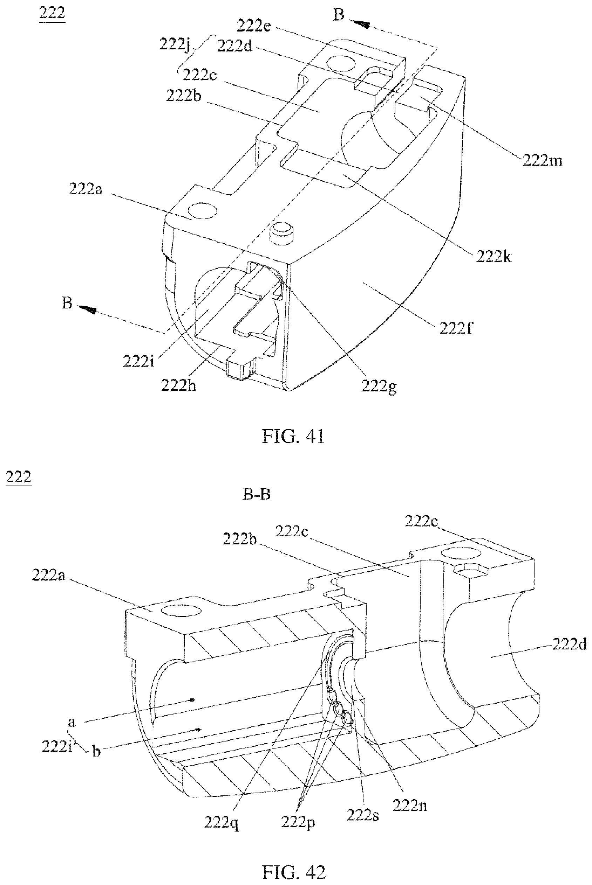

As shown in FIG. 41, the shaft sleeve 222 may be roughly of a hollow cuboid structure. The shaft sleeve 222 may have a first outer surface 222a and a second outer surface 222f, and the first outer surface 222a and the second outer surface 222f are two intersected outer surfaces on the shaft sleeve 222. In the host 2, a side on which the first outer surface 222a of the shaft sleeve 222 is located may be fixedly connected to the first frame body 213a in the first part 21, and is covered by the first part 21 and invisible (descriptions are further provided below). When the host 2 is in the closed state, the second outer surface 222f may be seen as an appearance surface of the host 2 (descriptions are further provided below).

As shown in FIG. 41 and FIG. 42, an inner cavity of the shaft sleeve 222 has a spacer plate 222n, and the spacer plate 222n divides the inner cavity into a first inner cavity 222i and a second inner cavity 222j. The spacer plate 222n is provided with a through hole 222s, and the through hole 222s communicates the first inner cavity 222i and the second inner cavity 222j.

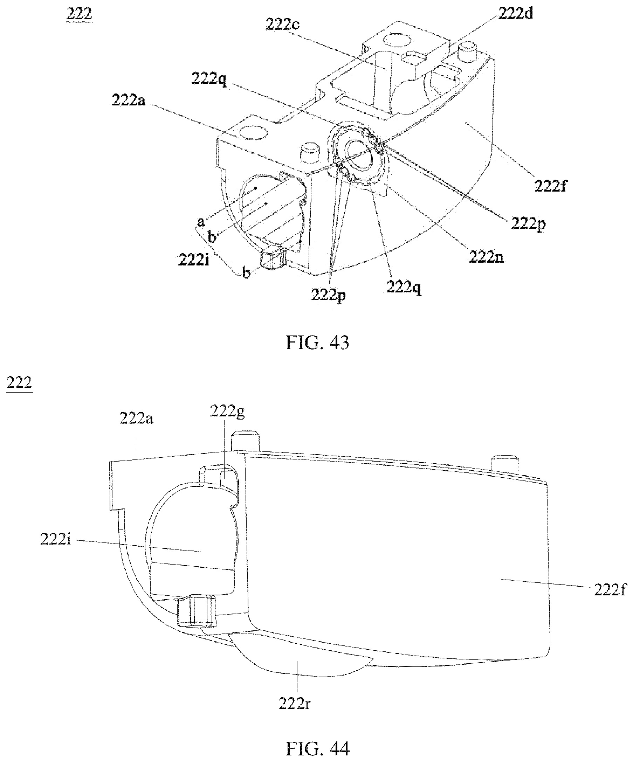

As shown in FIG. 42 and FIG. 43, a chute 222q and several matching grooves 222p may be provided on a surface of a side that is of the spacer plate 222n and that faces the first inner cavity 222i. The chute 222q and all the matching grooves 222p may be connected to form a ring. The ring is located on a periphery of the through hole 222s and may be concentric with the through hole 222s.

As shown in FIG. 42, the matching groove 222p may be in a "dent" shape, and an inner surface of the matching groove 222p may be an arc surface. All the matching grooves 222p may be arranged along an arc. All the matching grooves 222p may be divided into two groups, and the two groups are separated. Several matching grooves 222p in each group are sequentially connected. Quantities of matching grooves 222p in the two groups may be consistent, for example, may be 3. In each group, two adjacent matching grooves 222p have a common side wall. A side of the side wall may have a round corner. A top surface of the side wall may be further sunk relative to a surface on which an opening of the matching groove 222p is located (that is, a step difference exists).

As shown in FIG. 42 and FIG. 43, the chute 222q may be a long-strip groove, and an extension track of the chute 222q may be an arc. There may be two chutes 222q, and the two chutes 222q are on a same circumference. Positions of the two chutes 222q on the circumference may be symmetrical, and each of two central angles corresponding to the two chutes 222q (an included angle formed by connection lines between two ends of the chute 222q and a center of the circumference) may be a vertical angle. The two chutes 222q and the two groups of matching grooves 222p are alternately arranged along the circumference. To be specific, the two chutes 222q and the two groups of matching grooves 222p are distributed on the circumference in an arrangement sequence of one chute 222q, one group of matching grooves 222p, the other chute 222q, the other group of matching grooves 222p. One end of each chute 222q is connected to one matching groove 222p in a group of matching grooves 222p, and the other end of the chute 222q is connected to one matching groove 222p in another group of matching grooves 222p. There may be a common side wall between the chute 222q and the matching groove 222p. Alternatively, there is no side wall between the chute 222q and the matching groove 222p, and the chute 222q and the matching groove 222p communicate with each other.

The foregoing designs such as a quantity, structures, and positions of chutes 222q and designs such as a quantity, structures, and positions of matching grooves 222p are merely examples for description, and this embodiment is not limited thereto.

In this embodiment, the chute 222q and the matching grooves 222p are configured to match the bump on the bump matching member 227 (descriptions are provided below). In another embodiment, the spacer plate 222n may not be provided with the chute 222q and the matching grooves 222p, and the rotating shaft may not be provided with the bump matching member 227.

As shown in FIG. 41 and FIG. 42, an end that is of the first inner cavity 222i and that is far away from the spacer plate 222n may pass through the shaft sleeve 222 to form an opening 222h. As shown in FIG. 41 and FIG. 43, the inner surface of the first inner cavity 222i may include an arc surface a and two planes b, and the two planes b are respectively connected to two opposite sides of the arc surface a. The arc surface a is close to the first outer surface 222a, and the plane b is far away from the first outer surface 222a. In other words, the first inner cavity 222i has a shape approximate to an arch, and the opening 222h is approximate to an arch.

As shown in FIG. 41 and FIG. 42, the second inner cavity 222j may include a first region 222c and a second region 222d that communicate with each other. The first region 222c is located between the spacer plate 222n and the second region 222d. The first region 222c forms an opening 222b on the first outer surface 222a. The second region 222d may be a circular hole with an axis facing the spacer plate 222n. The second region 222d forms an opening 222e on the first outer surface 222a, and an end that is of the second region 222d and that is far away from the spacer plate 222n may pass through the shaft sleeve 222.

As shown in FIG. 41, a groove 222k and a groove 222m may be further provided on the first outer surface 222a of the shaft sleeve 222. The groove 222k and the groove 222m are respectively located on two opposite sides of the first region 222c, and the groove 222m may be further located above the second region 222d. A side that is of the groove 222k and that faces the groove 222m communicates with the first region 222c, and a side that is of the groove 222m and that faces the groove 222k communicates with the first region 222c.

As shown in FIG. 44, a limiting protrusion 222r is provided on a side that is of the shaft sleeve 222 and that is opposite to the first outer surface 222a. A structure of the limiting protrusion 222r may be designed based on a requirement. This is not limited in this embodiment. In this embodiment, the limiting protrusion 222r may be located on a side that is of the shaft sleeve 222 and on which the first inner cavity 222i is located. In another embodiment, a position of the limiting protrusion 222r may be flexibly determined based on a requirement, and is not limited to being located on a side that is of the spacer plate 222n and that is close to the first inner cavity 222i. Alternatively, the limiting protrusion 222r may not be provided.

As shown in FIG. 44, a mounting groove 222g may be further provided on a surface that is of the shaft sleeve 222 and that forms the opening 222h, and the mounting groove 222g may communicate with the first inner cavity 222i. Similarly, another mounting groove 222g may also be provided on a surface of an end that is of the shaft sleeve 222 and that is opposite to the opening 222h, and the another mounting groove 222g may communicate with the second region 222d. The mounting groove 222g is configured to mount the shaft contact member 24 (descriptions are further provided below). In another embodiment, a position of the mounting groove 222g may be flexibly determined based on a requirement, and is not limited to the foregoing descriptions. Alternatively, the mounting groove 222g may not be provided.

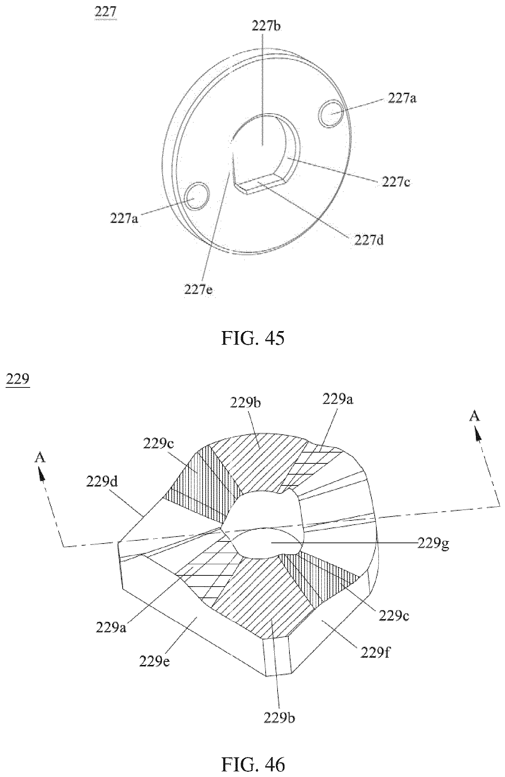

As shown in FIG. 45, a shape of the bump matching member 227 may be roughly cylindrical. A bump 227a may be provided on a bottom surface of the bump matching member 227, and the bump 227a may have an arc surface protruding relative to the bottom surface. There is at least one bump 227a. For example, two bumps 227a are shown in FIG. 45. When a quantity of bumps 227a is at least two, the bumps 227a may be evenly distributed at a spacing along the circumference. The bumps 227a are configured to match the chute 222q and the matching grooves 222p on the spacer plate 222n of the shaft sleeve 222 (descriptions are further provided below).

As shown in FIG. 45, the bump matching member 227 may further have a through hole 227b, and the through hole 227b may pass through the bump matching member 227 in a direction of a center line of the bump matching member 227. In this embodiment, an inner surface of the through hole 227b may include an arc surface 227c, a plane 227d, and a plane 227e. Two sides of the arc surface 227c are respectively connected to the plane 227d and the plane 227e, and the plane 227d and the plane 227e may form an included angle. The bump matching member 227 may be mounted on the first shaft 221, and the through hole 227b may match the first shaft 221. The through hole 227b in the structure may enable the bump matching member 227 to move along the first shaft 221, but the bump matching member 227 cannot rotate relative to the first shaft 221 (descriptions are further provided below).

In another embodiment, the rotating shaft may not be provided with the bump matching member 227.

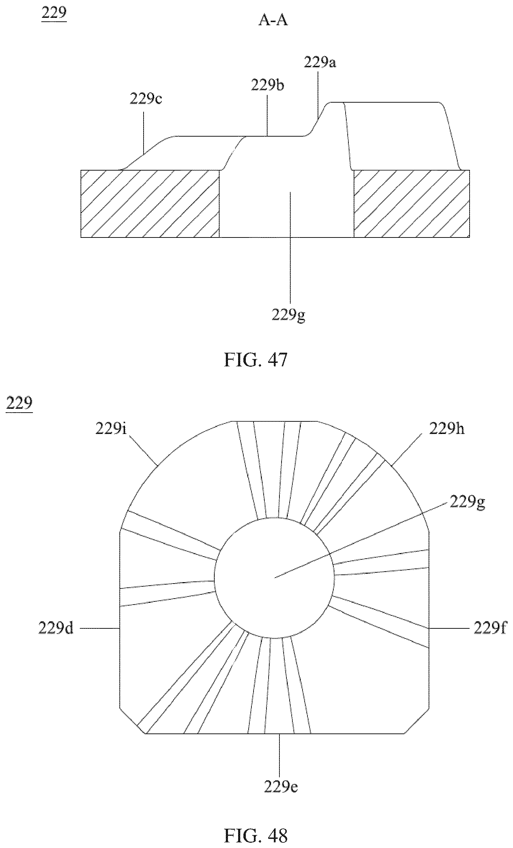

As shown in FIG. 46 and FIG. 47, the driven member 229 may be roughly in a block shape or a sheet shape. The driven member 229 has a through hole 229g, and an axis of the through hole 229g is roughly in a thickness direction of the driven member 229. A surface on a side of the driven member 229 in the thickness direction may be referred to as a shaft matching surface. The shaft matching surface may form a two-step ladder. The shaft matching surface may include a first slope 229a, a plane 229b, and a second slope 229c that are sequentially connected (to highlight the three regions, the three regions are represented by shadows). A normal line of the plane 229b may be in an axial direction of the through hole 229g. The first slope 229a and the plane 229b form an obtuse angle, and the plane 229b and the second slope 229c form an obtuse angle. There is a step difference between the first slope 229a and the second slope 229c. A side that is of the first slope 229a and that is far away from the plane 229b may be higher than the plane 229b, and a side that is of the second slope 229c and that is far away from the plane 229b may be lower than the plane 229b.

As shown in FIG. 46, the shaft matching surface of the driven member 229 may include two first slopes 229a, two planes, and two second slopes 229c. The shaft matching surface may form two two-step ladders and may extend downward step by step in a circumferential direction of the shaft matching surface. The two two-step ladders may be arranged at a spacing. For example, the two-step ladders may be center-symmetric with respect to the through hole 229g.

As shown in FIG. 48, an outer side surface (a normal line of the outer side surface points to the through hole 229g) of the driven member 229 may be approximately an arch. The outer side surface may include an arc surface 229h, an arc surface 229i, a plane 229d, a plane 229e, and a plane 229f. The arc surface 229h and the arc surface 229i may be used as a top of the arch, and the arc surface 229h and the arc surface 229i may be roughly symmetrical with respect to the axis of the through hole 229g. The plane 229e may be used as a bottom of the arch. The plane 229f may be located between the arc surface 229h and the plane 229e, and a side of the plane 229f may be connected to the arc surface 229h. The plane 229d may be located between the arc surface 229i and the plane 229e, and a side of the plane 229d may be connected to the arc surface 229i.

The driven member 229 may be mounted in the first inner cavity 222i of the shaft sleeve 222, and the outer side surface of the driven member 229 has the foregoing structure, so that the driven member 229 can move in the first inner cavity 222i without rotating (descriptions are further provided below). In another embodiment, the outer side surface of the driven member 229 may have another appropriate structure, provided that a design requirement that the driven member 229 moves in the first inner cavity 222i without rotating is met.

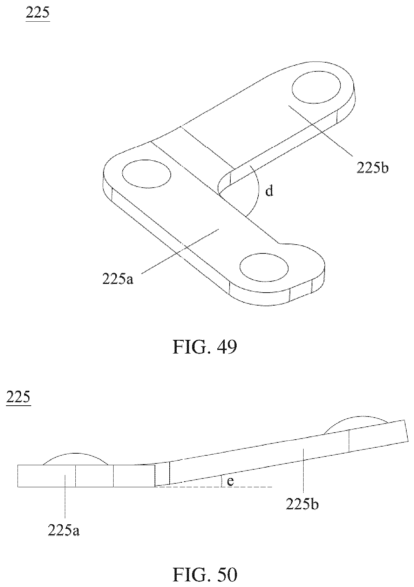

As shown in FIG. 49 and FIG. 50, the gasket 225 may be roughly in a sheet shape. The gasket 225 may include a first part 225a and a second part 225b, the first part 225a and the second part 225b may be connected (for example, connected as a whole), and the first part 225a and the second part 225b may form, for example, an included angle d. The included angle d is, for example, roughly 90°. The first part 225a and the second part 225b may not be on a same plane, and the second part 225b and a plane on which the first part 225a is located may form an included angle e. For example, in a perspective of FIG. 50, the second part 225b may be tilted upward relative to the first part 225a, and form the included angle e with the plane on which the first part 225a is located (in other words, form the included angle e with the first part 225a).

The first part 225a of the gasket 225 may be fastened in the first inner cavity 222i of the shaft sleeve 222, and the second part 225b of the gasket 225 may press against the plane 229e of the driven member 229 (descriptions are further provided below).

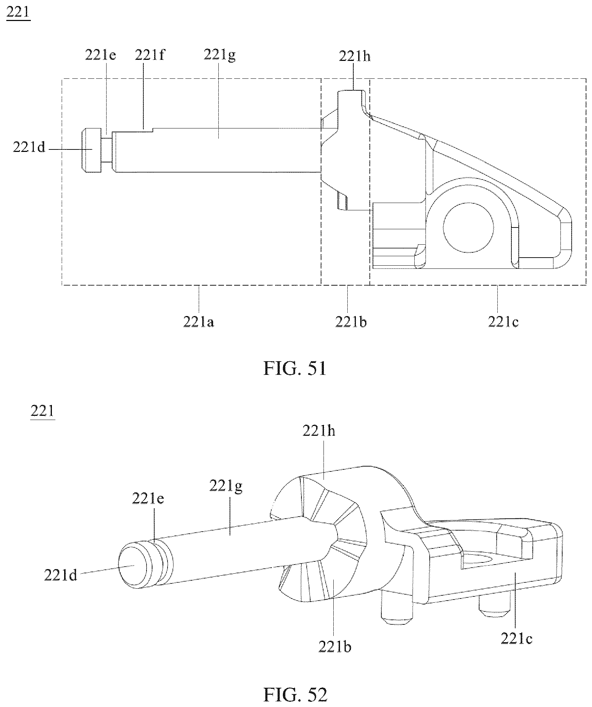

As shown in FIG. 51, the first shaft 221 may be of an integrated structure, and may include a first part 221a, a second part 221b, and a third part 221c that are sequentially connected. It may be understood that, in FIG. 51, three dashed-line boxes are used to distinguish the first part 221a, the second part 221b, and the third part 221c. This is merely intended to intuitively describe rough positions of the first part 221a, the second part 221b, and the third part 221c, and is not intended to strictly limit boundaries between the first part 221a, the second part 221b, and the third part 221c.

As shown in FIG. 51 and FIG. 52, the first part 221a may include an end portion 221d and a main portion 221g, and both the end portion 221d and the main portion 221g may be roughly cylinders. The main portion 221g is connected to the second part 221b, and the end portion 221d is far away from the second part 221b. A slot 221e may be formed between the end portion 221d and the main portion 221g, and the slot 221e may surround an axis of the end portion 221d. A bottom surface of the slot 221e is lower than an outer circumferential surface of the end portion 221d, and is also lower than an outer circumferential surface of the main portion 221g.

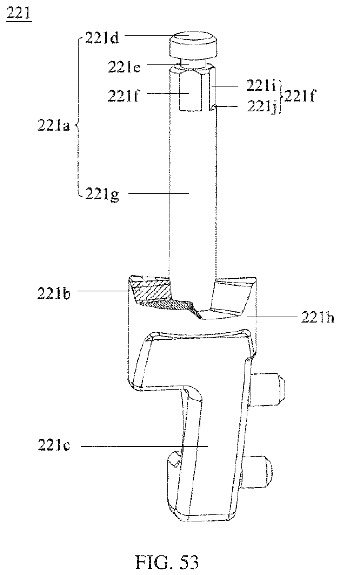

As shown in FIG. 51 and FIG. 53, an end that is of the main portion 221g and that is close to the end portion 221d may form a concave space 221f. The concave space 221f may have a plane 221i and a plane 221j. The plane 221i may be basically parallel to an axis of the end portion 221d, the plane 221j may be basically perpendicular to the axis of the end portion 221d, and the plane 221i may be basically perpendicular to the plane 221j. The plane 221j may connect the outer circumferential surface of the main portion 221g and the plane 221i. Both sides of the plane 221i may be connected to the outer circumferential surface of the main portion 221g. The concave space 221f may be formed by cutting the outer circumferential surface of the main portion 221g.

As shown in FIG. 53, there may be two concave spaces 221f, and there is a specific spacing between the two concave spaces 221f. In another embodiment, a quantity of concave spaces 221f is not limited to the foregoing descriptions, for example, may be one or more than three.

In this embodiment, an end that is of the main portion 221g and that is close to the end portion 221d may match the through hole 227b of the bump matching member 227, and a surface of the end of the main portion 221g may match the inner wall of the through hole 227b, so that the bump matching member 227 may move along the main portion 221g but cannot rotate (descriptions are further provided below). In another embodiment, if the bump matching member 227 is not provided, the end that is of the main portion 221g and that is close to the end portion 221d may not form the concave space 221f.

As shown in FIG. 51 to FIG. 53, the second part 221b may have an outer circumferential surface 221h, and the outer circumferential surface 221h may be roughly a cylindrical surface. In this embodiment, the second part 221b may be mounted into the first inner cavity 222i of the shaft sleeve 22, and the outer circumferential surface 221h may rotate and match the arc surface a of the first inner cavity 222i.

As shown in FIG. 52 and FIG. 53, a two-step ladder may be formed on a surface that is of the second part 221b and that faces the end portion 221d (a surface of the two-step ladder is shown by using a shadow in FIG. 53), and the two-step ladder has a similar (or roughly similar) structure to the two-step ladder of the driven member 229 described above. With reference to FIG. 52, FIG. 46, and FIG. 40, the second part 221b may be assembled with the driven member 229 to form a cam mechanism, and the surface of the two-step ladder of the second part 221b may move and match the surface of the two-step ladder of the driven member 229, so that the driven member 229 implements a specific motion (descriptions are further provided below).

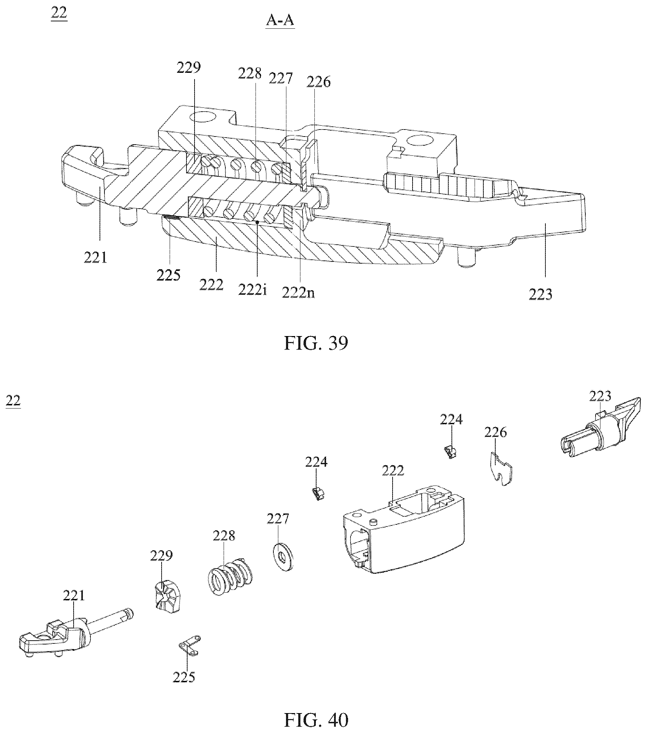

A structure of the third part 221c may be designed based on a requirement, and is not limited to that shown in FIG. 51 to FIG. 53. The third part 221c is configured to be fastened to the inner bearing platform 232g of the third host housing 232 (descriptions are further provided below). As shown in FIG. 40, the elastic member 228 is a component that can provide a rebound force, for example, may be a spring.

The foregoing separately describes structures of the shaft sleeve 222, the bump matching member 227, the first shaft 221, the driven member 229, and the elastic member 228. The following describes an assembly structure including the components.

As shown in FIG. 39, FIG. 45, FIG. 43, and FIG. 46, the driven member 229, the elastic member 228, and the bump matching member 227 all may be located in the first inner cavity 222i of the shaft sleeve 222. The bump matching member 227 is close to the spacer plate 222n of the shaft sleeve 222, and the bump 227a of the bump matching member 227 may face the chute 222q of the spacer plate 222n (or face the matching groove 222p). The driven member 229 is far away from the spacer plate 222n, and the two-step ladder of the driven member 229 is far away from the spacer plate 222n. Both the arc surface 229h and the arc surface 229i of the driven member 229 may be opposite to and match the arc surface a of the first inner cavity 222i, and both the plane 229e and the plane 229f of the driven member 229 may be opposite to and match the plane b of the first inner cavity 222i. In this way, the driven member 229 may move in the first inner cavity 222i, but cannot rotate relative to the first inner cavity 222i.

It is easy to understand that the matching structure including the driven member 229 and the first inner cavity 222i is merely an example. In another embodiment, another appropriate matching structure may be designed based on a requirement, so that the driven member 229 can only move in the first inner cavity 222i, but cannot rotate relative to the first inner cavity 222i (descriptions that the driven member 229 may rotate with the shaft sleeve 222 are provided below).

As shown in FIG. 39, the elastic member 228 is located between the driven member 229 and the bump matching member 227. One end of the elastic member 228 may press against the driven member 229, and the other end may press against the bump matching member 227.

As shown in FIG. 51, FIG. 39, FIG. 41, and FIG. 42, both the main portion 221g of the first part 221a of the first shaft 221 and the second part 221b may be located in the first inner cavity 222i of the shaft sleeve 222. The end portion 221d of the first part 221a may be located in the first region 222c of the second inner cavity 222j of the shaft sleeve 222, and a part or all of the slot 221e of the first part 221a may be located in the first region 222c.

As shown in FIG. 51, FIG. 46, FIG. 45, and FIG. 42, the first part 221a may pass through the through hole 229g of the driven member 229, the elastic member 228, the through hole 227c of the bump matching member 227, and the through hole of the spacer plate 222n. The two-step ladder of the second part 221b may face the two-step ladder of the driven member 229, and the two-step ladder of the second part 221b may match the two-step ladder of the driven member 229, so that the second part 221b and the driven member 229 form a cam mechanism.

As shown in FIG. 53 and FIG. 45, a plane 221i of one concave space 221f of the main portion 221g may be opposite to and match the plane 227d of the through hole 227b of the bump matching member 227. A plane 221i of the other concave space 221f of the main portion 221g may be opposite to and match the plane 227e of the through hole 227b of the bump matching member 227. The outer circumferential surface of the main portion 221g may be opposite to and match the arc surface 227c of the through hole 227b of the bump matching member 227. In this way, the bump matching member 227 may move along the main portion 221g in the first inner cavity 222i, but cannot rotate around the main portion 221g.

It is easy to understand that the matching structure including the main portion 221g and the bump matching member 227 is merely an example. In another embodiment, another appropriate matching structure may be designed based on a requirement, so that the bump matching member 227 can only move along the main portion 221g but cannot rotate around the main portion 221g.

With reference to FIG. 51 and FIG. 39, the third part 221c of the first shaft 221 may be located outside the shaft sleeve 222.

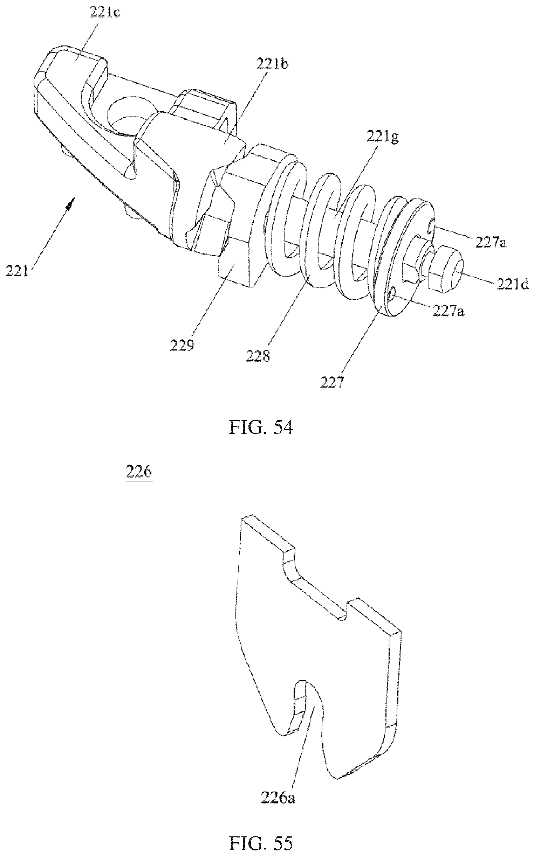

FIG. 54 may intuitively show an assembly structure including the first shaft 221, the driven member 229, the elastic member 228, and the bump matching member 227.

As shown in FIG. 39 and FIG. 50, the gasket 225 may be fastened to the first inner cavity 222i of the shaft sleeve 222. The first part 225a of the gasket 225 may be located between the third part 221c of the first shaft 221 and the shaft sleeve 222. The second part 225b of the gasket 225 may be located between the driven member 229 and the shaft sleeve 222. In an entire motion process of the driven member 229, the second part 225b may always press against the driven member 229. Because the second part 225b is tilted relative to the first part 225a, the second part 225b can press the driven member 229 against the inner surface of the first inner cavity 222i of the shaft sleeve 222, so that the driven member 229 closely matches the inner surface of the first inner cavity 222i. In this way, it can be avoided that the driven member 229 shakes due to a manufacturing error during moving. In another embodiment, based on an actual requirement, the gasket 225 may not be provided.

As shown in FIG. 55, the limiting member 226 may be basically in a plate shape, and a structure of the limiting member 226 may be designed based on a requirement. For example, an outline of the limiting member 226 may adapt to a shape of the first region 222c of the second inner cavity 222i of the shaft sleeve 22. An opening 226a may be formed on the limiting member 226.

With reference to FIG. 39, FIG. 52, and FIG. 55, the limiting member 226 may be located in the first region 222c of the second inner cavity 222i of the shaft sleeve 22 and be in contact with the spacer plate 222n of the shaft sleeve 22, and an edge of the opening 226a of the limiting member 226 may be clamped into the slot 221e of the first part 221a of the first shaft 221. Therefore, the limiting member 226 can limit the first shaft 221, prevent the first shaft 221 from being detached from the shaft sleeve 22, and ensure that relative positions of the first shaft 221 and the shaft sleeve 22 remain unchanged, so as to ensure reliable assembly of the driven member 229, the elastic member 228, the bump matching member 227, and the shaft sleeve 22.

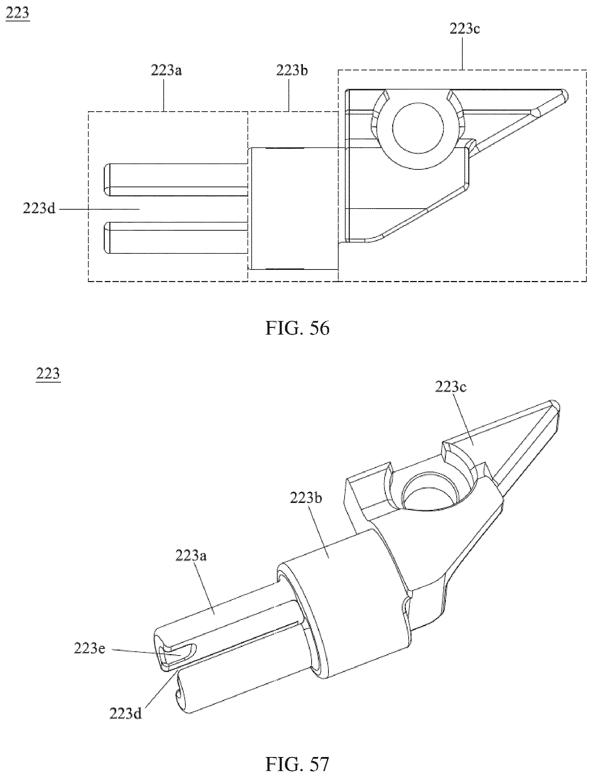

As shown in FIG. 56, FIG. 57, and FIG. 58, the second shaft 223 may be of an integrated structure, and may include a first part 223a, a second part 223b, and a third part 223c that are sequentially connected. It may be understood that, in FIG. 56, three dashed-line boxes are used to distinguish the first part 223a, the second part 223b, and the third part 223c. This is merely intended to intuitively describe rough positions of the first part 223a, the second part 223b, and the third part 223c, and is not intended to strictly limit boundaries between the first part 223a, the second part 223b, and the third part 223c.

As shown in FIG. 56 to FIG. 58, both the first part 223a and the second part 223b may be roughly cylinders. A structure of the third part 223c may be designed based on a requirement. FIG. 56 to FIG. 58 are merely examples. A channel 223d may be formed on the second shaft 223, and the channel 223d may basically extend in an axial direction of the first part 223a. The channel 223d may pass through two opposite ends of the first part 223a in the radial direction, and pass through one end of the second part 223b and one end of the third part 223c in the radial direction of the second part 223b. In this way, the first part 223a may be divided into two completely disconnected parts by the channel 223d, and the second part 223b and the third part 223c each may be divided into two connected parts by the channel 223d.

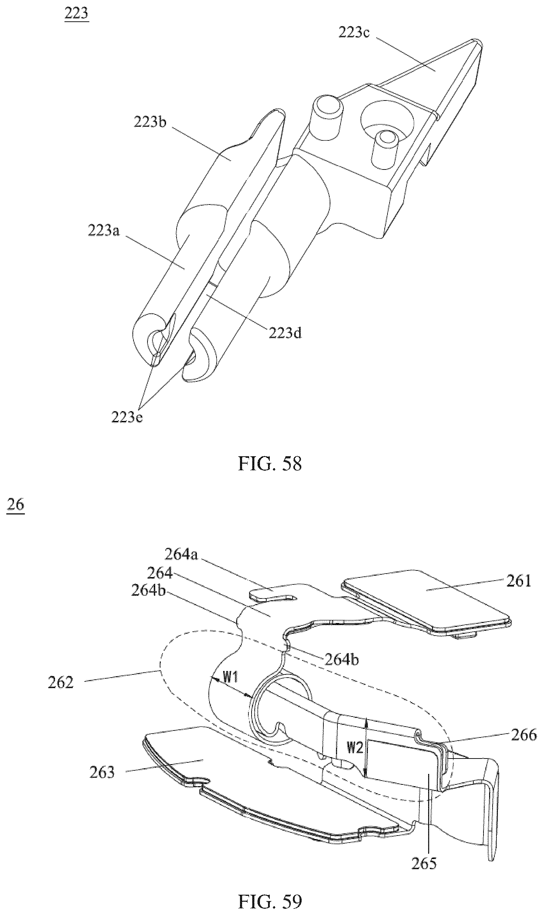

As shown in FIG. 57 and FIG. 58, an end that is of the first part 223a and that is far away from the second part 223b has a groove 223e, and the groove 223e may be specifically provided on an inner surface of the channel 223d. There may be two grooves 223e, each part of the first part 223a has one groove 223e, and openings of the two grooves 223e are opposite.

In this embodiment, a flexible circuit board may be mounted on the second shaft 223. Details are described below.

FIG. 59, FIG. 60, and FIG. 61 show schematic structures after a flexible circuit board 26 is bent and wound (the flexible circuit board 26 is bent and wound after being mounted on the second shaft 223). Actually, the flexible circuit board 26 is in an unfolded state before being mounted on the second shaft 223, and in the unfolded state, the flexible circuit board 26 may be roughly of a long strip-shaped structure.

As shown in FIG. 59 to FIG. 61, the flexible circuit board 26 may include an electrical connection end 261 and an electrical connection end 263. After the flexible circuit board 26 is unfolded, the electrical connection end 261 and the electrical connection end 263 are respectively two ends in an extension direction of the flexible circuit board 26. The electrical connection end 261 and the electrical connection end 263 each are configured for electrical signal transmission, and may include a connector.

For example, the electrical connection end 261 may be connected to the first host circuit board assembly 212. For example, the connector of the electrical connection end 261 may be connected to a connector on the circuit board 212a of the first host circuit board assembly 212, to electrically connect the flexible circuit board 26 and the first host circuit board assembly 212.

For example, the electrical connection end 263 may be electrically connected to the second host circuit board assembly 235, a flexible circuit board connecting the function button 24 and a motor (for example, the function button 24 and the motor may share the same flexible circuit board), and the like. The flexible circuit board connecting the function button 24 and the motor may be fastened, for example, on a side that is of the second bracket 231a and that is far away from the opening of the third accommodation groove 231f. A magnetic field sensor (for example, a Hall effect sensor or a magnetometer) may be further disposed on the flexible circuit board. For example, there may be two magnetic field sensors, and the two magnetic field sensors may be respectively close to the groove wall of the third accommodation groove 231f and the groove wall of the fourth accommodation groove 231g.

As shown in FIG. 59 to FIG. 61, the flexible circuit board 26 may further include a connection part 264 and a mounting part 262. The connection part 264 connects the mounting part 262 and the electrical connection end 261, and the mounting part 262 is further connected to the electrical connection end 263.

As shown in FIG. 59 to FIG. 61, the connection part 264 has a grounding portion 264a and a limiting portion 264b. The grounding portion 264a may be, for example, close to the electrical connection end 261, and the limiting portion 264b may be, for example, far away from the electrical connection end 261. The limiting portion 264b may be, for example, in a lug shape. For example, there may be two limiting portions 264b, and the two limiting portions 264b are respectively located at edges of two sides of the connection part 264.

As shown in FIG. 59 to FIG. 61, the mounting part 262 is configured to match the second shaft 223, and may be in a bent and wound state. For example, in a perspective of FIG. 59, a part of the mounting part 262 may be folded to form a laminated layer, and therefore the part may be referred to as a laminated part. The other part of the mounting part 262 may be connected to the laminated part and wound to form a ring, and therefore the part may be referred to as a wound part. The wound part may be located at an end of the laminated part. It may be understood that, in FIG. 59, the mounting part 262 is marked by using a dashed box. This is merely intended to intuitively describe a rough position of the mounting part 262, and is not intended to strictly limit a boundary of the mounting part 262.

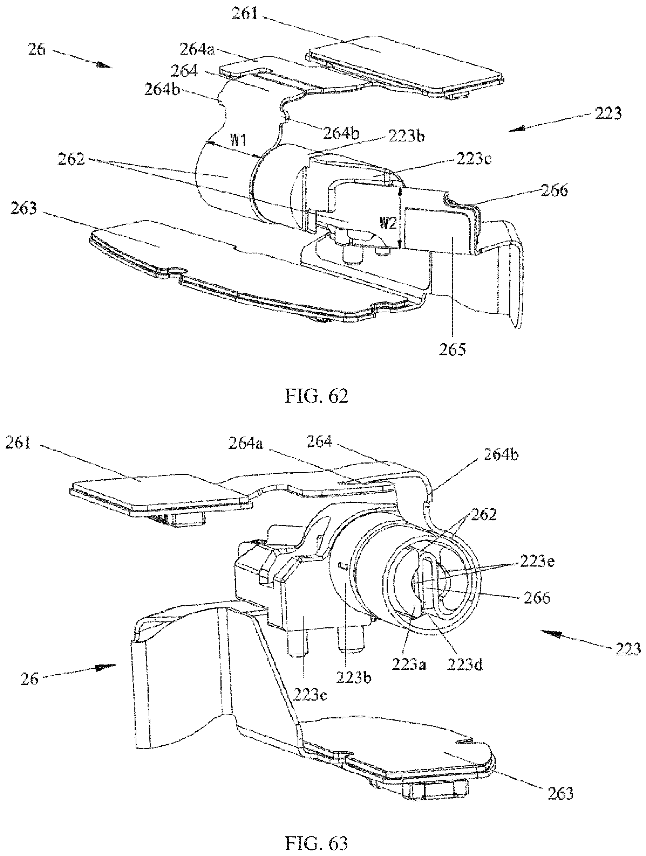

In this embodiment, a quantity of wires in the flexible circuit board 26 needs to meet a design requirement, and a width size of the flexible circuit board 26 affects the quantity of wires in the flexible circuit board 26. Therefore, the width size (for example, a minimum width size) of the flexible circuit board 26 needs to meet the design requirement. FIG. 59 and FIG. 62 show a width size W1 of the wound part and a folding width size W2 of the laminated part (an unfolded width of an unfolded laminated part is approximately 2×W2) of the mounting part 262 of the flexible circuit board 26, where the width size W1 of the wound part and the folding width size W2 of the laminated part may be designed based on a requirement.

As shown in FIG. 59 to FIG. 61, the flexible circuit board 26 may further include a separation bracket 266. A structure of the separation bracket 266 may be designed based on a requirement, for example, roughly in a flat-plate shape. A quantity of separation brackets 266 may be determined based on a requirement, and there may be a single separation bracket 266 or at least two separation brackets 266. The separation bracket 266 is clamped between folded layers of the laminated part, and each layer may be connected (for example, bonded) to the separation bracket 266.

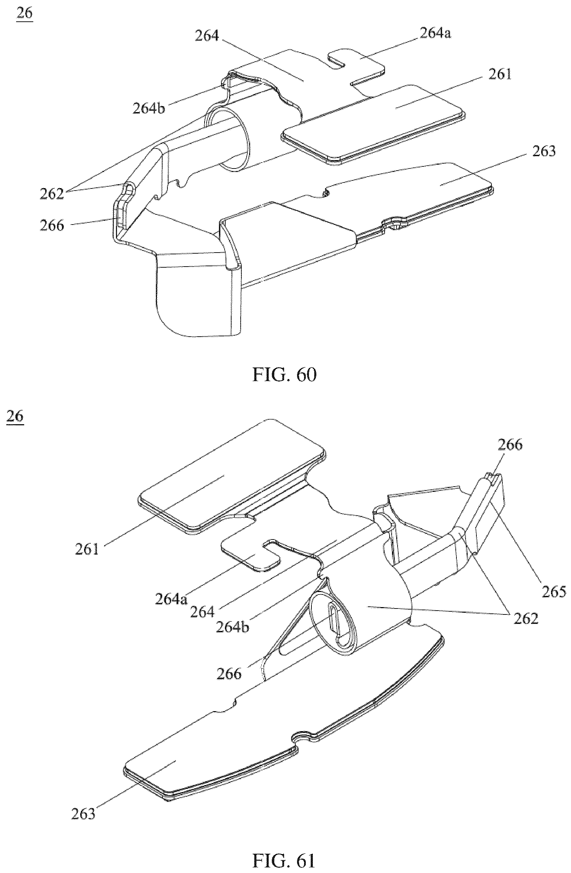

In this embodiment, the unfolded width of the laminated part is generally small, and it is difficult to maintain a folded form after the laminated part is folded (the folded layers are easily tilted). However, because the separation bracket 266 is provided, the separation bracket 266 may enable the laminated part to maintain the folded form. In addition, the separation bracket 266 may also limit a bending radius of the laminated part, to avoid damage caused by excessive bending of the laminated part. In another embodiment, based on a product requirement, the separation bracket 266 may not be provided. As shown in FIG. 59 and FIG. 61, the flexible circuit board 26 may further include a protective layer 265. For example, the protective layer 265 may be attached to a surface of the laminated part, and may be located at an end that is of the laminated part and that is far away from the wound part. A material of the protective layer 265 may be, for example, Mylar (Mylar). In this embodiment, the position and the material of the protective layer 265 may alternatively be designed based on a product requirement, and are not limited to the foregoing descriptions.

In this embodiment, the laminated part may be fastened to the third host housing 232, and the protective layer 265 may separate the laminated part from the third host housing 232, to prevent the flexible circuit board 26 from being damaged due to friction between the laminated part and the third host housing 232 (descriptions are further provided below). In addition, the protective layer 265 may further enhance a structure of the laminated part. In another embodiment, based on a product requirement, the protective layer 265 may not be provided.

FIG. 62 and FIG. 63 each show an assembly structure including the flexible circuit board 26 and the second shaft 223. When the flexible circuit board 26 is assembled with the second shaft 223, the laminated part of the mounting part 262 of the flexible circuit board 26 in the unfolded state may be first folded. In this case, the wound part of the mounting part 262 may continue to be in an unfolded state. With reference to FIG. 63, FIG. 63, and FIG. 58, the entire mounting part 262 is then mounted from the third part 223c of the second shaft 223 into the channel 223d of the second shaft 223, so that the wound part of the mounting part 262 is positioned to the first part 223a of the second shaft 223. In this case, the wound part may be bent, so that the wound part is wound around the first part 223a, and a quantity of coils of the wound part may be determined based on an actual requirement. After the winding is completed, there is a specific distance between the wound part and an end portion that is of the first part 223a and that is far away from the second part 223b (that is, the wound part does not cover the end portion of the first part 223a). This helps avoid that the wound part is scratched and a life is affected (descriptions are further provided below). Both the electrical connection end 261 and the electrical connection end 263 of the flexible circuit board 26 are located outside the second shaft 223. The electrical connection end 261 and the electrical connection end 263 may be bent to adapt to an inner space of the host 2. The protective layer 265 and the connection part 264 of the flexible circuit board 26 may also be exposed outside the second shaft 223.

In this embodiment, an inner ring of the wound part of the flexible circuit board 26 is directly in contact with the first part 223a of the second shaft 223. A joint between the wound part and the laminated part may be fastened to the first part 223a, and a fastening manner may be, for example, bonding. Another region of the wound part may not be fastened and remain in a natural winding state, and the region may be relaxed to increase a diameter of the part, or may be tightened to decrease a diameter of the part.

In this embodiment, because the wound part of the flexible circuit board 26 is wound around the first part 223a of the second shaft 223, the width size W1 of the wound part may be ensured by using an axial size of the first part 223a. Because the laminated part of the flexible circuit board 26 is accommodated, in a folded state, in the channel 223d of the second shaft 223, the second shaft 223 needs only a small space to accommodate the laminated part whose unfolded width is 2×W2. This helps implement miniaturization of the second shaft 223, and further helps implement miniaturization of the host 2.

In conclusion, the second shaft 223 of the foregoing structure is designed, and the flexible circuit board 26 is mounted on the second shaft 223 in a bending and winding manner, so that an electrical connection of the host 2 can be implemented, the width size of the flexible circuit board 26 can be ensured to meet the design requirement, and miniaturization of the host 2 can be implemented.

In this embodiment, the second shaft 223 on which the flexible circuit board 26 is mounted may be mounted to the second inner cavity 222j of the shaft sleeve 222.

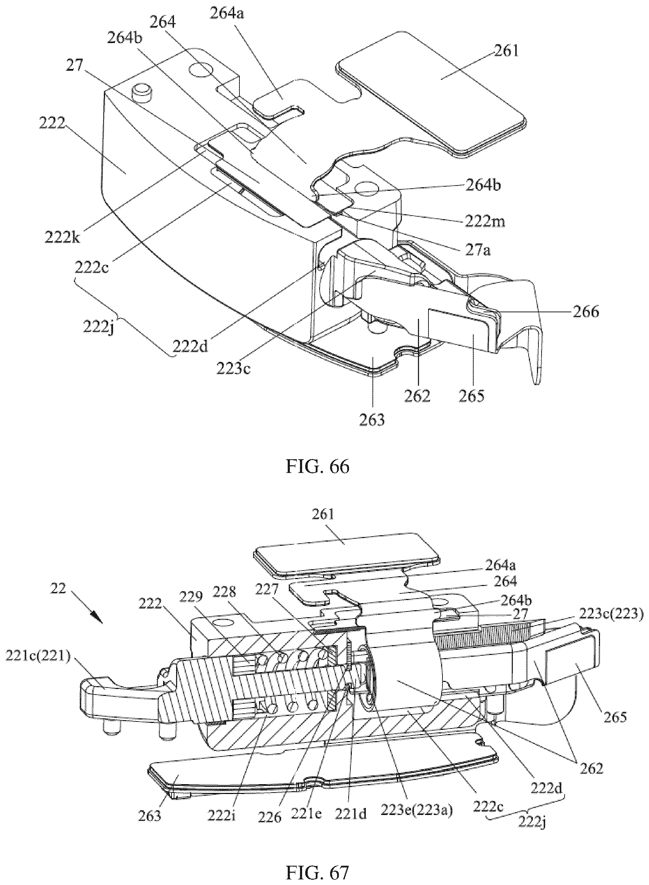

With reference to FIG. 57 and FIG. 67, the first part 223a of the second shaft 223 is located in the first region 222c of the shaft sleeve 222. The second part 223b of the second shaft 223 may be located in the second region 222d of the second inner cavity 222j. The outer circumferential surface of the second part 223b may rotate and match the inner surface of the second region 222d. In other words, the outer circumferential surface of the second part 223b may be in contact with or may not be in contact with the inner surface of the second region 222d (with a small gap), and the inner surface of the second region 222d may rotate relative to the outer circumferential surface of the second part 223b. The third part 223c of the second shaft 223 is located outside the shaft sleeve 222.

As shown in FIG. 59, FIG. 64, and FIG. 67, the entire wound part of the flexible circuit board 26 is located in the first region 222c. A part of the laminated part of the flexible circuit board 26 is located in the first region 222c and the second region 222d, and the other part of the laminated part is located outside the shaft sleeve 222. Both the electrical connection end 261 and the electrical connection end 263 of the flexible circuit board 26 are located outside the shaft sleeve 222. The connection part 264 of the flexible circuit board 26 may pass through the opening of the first region 222c, and both the grounding portion 264a and the limiting portion 264b of the connection part 264 are located outside the shaft sleeve 222.

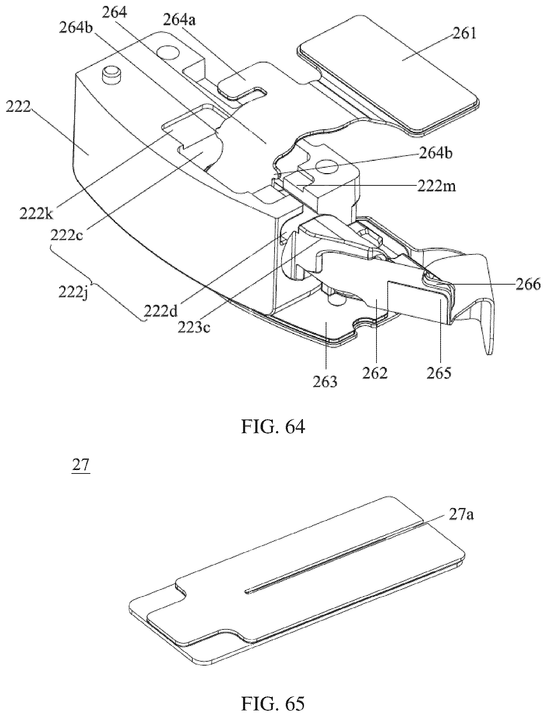

With reference to FIG. 64, in this embodiment, the electrical connection end 261 of the flexible circuit board 26 may be fastened to the first host circuit board assembly 212, and the electrical connection end 261 may move with the first part 21 of the host 2. Therefore, the connection part 264 connected to the electrical connection end 261 also moves with the electrical connection end 261. To enable the connection part 264 to move based on a design requirement, ensure that a motion of the connection part 264 is controllable, and avoid fatigue damage of the connection part 264, the connection part 264 may be clamped by using a clamping member, so as to limit the connection part 264. Descriptions are provided below.

As shown in FIG. 65, a clamping member 27 may be roughly in a sheet shape, and a clamping gap 27a may be provided on the clamping member 27. The clamping gap 27a may be basically in a straight-line shape. One end of the clamping gap 27a passes through the clamping member 27, and the other end does not pass through the clamping member 27. The clamping member 27 may be manufactured by using a material that has good insulation and moisture resistance, for example, a Mylar (Mylar) sheet.

As shown in FIG. 65 and FIG. 66, the connection part 264 may penetrate the clamping gap 27a of the clamping member 27, the limiting portion 264b of the connection part 264 may be clamped on an edge of the clamping gap 27a, the clamping member 27 may be fastened to the groove 222k and the groove 222m of the shaft sleeve 222, and the clamping member 27 covers at least a part of the first region 222c. In this way, the clamping member 27 can clamp the connection part 264 and limit the connection part 264. When the connection part 264 moves, because the clamping member 27 exists, a motion stroke of the connection part 264 meets a design requirement, and fatigue damage is not easily generated. In addition, the limiting portion 264b is designed to facilitate accurate positioning of the clamping member 27 and the flexible circuit board 26 during assembly in a production line, thereby ensuring an assembly yield. In another embodiment, the design of clamping the connection part 264 by using the clamping member 27 may be canceled.

The foregoing describes structures and assembly of the second shaft 223, the flexible circuit board 26, the shaft sleeve 222, and the clamping member 27. The following describes an overall assembly structure of the rotating shaft assembly 22 and an assembly relationship between the flexible circuit board 26, the second shaft 223, and the first shaft 221.

FIG. 67 shows a sectional view of an assembly structure including the rotating shaft assembly 22, the flexible circuit board 26, and the clamping member 27. To clearly represent the flexible circuit board 26, the flexible circuit board 26 is not sectioned. As shown in FIG. 67, an assembly relationship between the first shaft 221, the driven member 229, the elastic member 228, the bump matching member 227, and the shaft sleeve 222, and an assembly relationship between the second shaft 223, the flexible circuit board 26, the clamping member 27, and the shaft sleeve 222 are described above, and are not repeated herein. As described above, the end portion of the first part 223a of the second shaft 223 is not covered by the wound part of the flexible circuit board 26. This facilitates insertion of the end portion 221d of the first shaft 221 into the groove 223e of the first part 223a of the second shaft 223. There may be a specific gap between the end portion 221d and the wound part in the axial direction of the first shaft 221, to avoid interference between the end portion 221d and the wound part.

In addition, as shown in FIG. 44, FIG. 38, and FIG. 40, one shaft contact member 224 may be fastened in the mounting groove 222g that is of the shaft sleeve 222 and that is close to the second part 221b of the first shaft 221, and the shaft contact member 224 is in contact with the second part 221b. Similarly, another shaft contact member 224 may be fastened in the groove that is of the shaft sleeve 222 and that is close to the second part 223b of the second shaft 223, and the shaft contact member 224 is in contact with the second part 223b (due to a perspective reason, the groove that is assembled in the shaft sleeve 222 and that is close to the second part 223b and the shaft contact member 224 in the groove are not displayed). In this embodiment, the shaft contact member 224 may be a conductor, for example, a metal spring.

The following describes assembly structures of the rotating shaft assembly 22, the flexible circuit board 26, and the first part 21 and the second part 23 of the host 2 one by one.

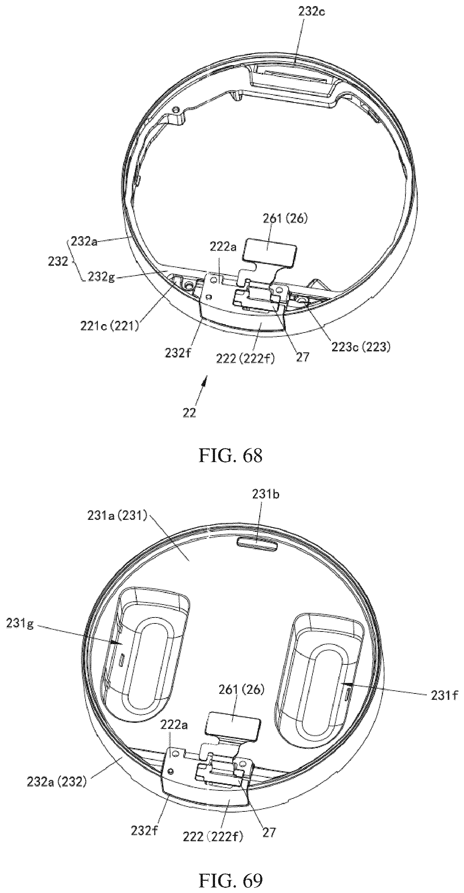

As shown in FIG. 68, both the third part 221c of the first shaft 221 and the third part 223c of the second shaft 223 may be fastened to the inner bearing platform 232g of the third host housing 232. The shaft sleeve 222 may be located in the rotating shaft mounting space 232f of the third host housing 232, and the shaft sleeve 222 may rotate in the rotating shaft mounting space 232f. The second outer surface 222f of the shaft sleeve 222 may face an outer side of the circumferential side wall 232a of the third host housing 232. The electrical connection end 261 of the flexible circuit board 26 may be located on the inner side of the circumferential side wall 232a.

With reference to FIG. 67 and FIG. 68, the electrical connection end 263 of the flexible circuit board 26 may be located on the inner side of the circumferential side wall 232a, and is fastened to the inner bearing platform 232g. For example, the electrical connection end 263 may have an adhesive, and the electrical connection end 263 may be bonded to the inner bearing platform 232g. With reference to FIG. 67, FIG. 24, and FIG. 68, the protective layer 265 of the flexible circuit board 26 may be located on the inner side of the circumferential side wall 232a, and located between the circumferential side wall 232a and the laminated part of the flexible circuit board 26, to prevent friction caused by direct contact between the laminated part and the circumferential side wall 232a, and avoid damage to the flexible circuit board 26 due to the friction.

As shown in FIG. 69, the second bracket 231a of the second host housing 231 may be assembled and fastened to the third host housing 232, and the second host housing 231 may be located on the inner side of the circumferential side wall 232a. In a perspective of FIG. 69, the opening of the third accommodation groove 231f and the opening of the fourth accommodation groove 231g on the second bracket 231a face upward. The second bracket 231a covers both the third part 221c of the first shaft 221 and the third part 223c of the second shaft 223. The through hole 231b of the second bracket 231a and the shaft sleeve 222 may be respectively roughly located at two opposite ends of a same diameter of the circumferential side wall 232a. With reference to FIG. 69 and FIG. 68, the through hole 231b may communicate with the second opening 232c of the third host housing 232.

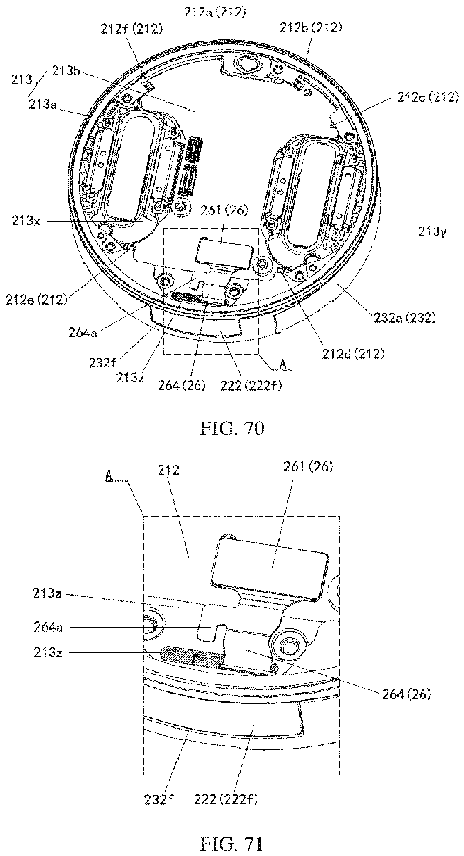

With reference to FIG. 70 and FIG. 69, the first host housing 213 may cover the second host housing 231 and the third host housing 232. From a perspective of FIG. 70, the opening of the first accommodation groove 213y and the opening of the second accommodation groove 213x of the first bracket 213b of the first host housing 213 may face downwards. In this embodiment, the opening of the first accommodation groove 213y may face the opening of the third accommodation groove 231f, and the opening of the first accommodation groove 213y may be aligned with the opening of the third accommodation groove 231f. The opening of the second accommodation groove 213x may face the opening of the fourth accommodation groove 231g, and the opening of the second accommodation groove 213x may be aligned with the opening of the fourth accommodation groove 231g.

With reference to FIG. 70 and FIG. 69, the first frame body 213a in the first host housing 213 may be fixedly connected to a side that is of the shaft sleeve 222 and that has the first outer surface 222a, and the first frame body 213a may cover a part of a region of the first outer surface 222a and a part of a region of the clamping member 27. The other part of the region of the first outer surface 222a and the other part of the region of the clamping member 27 may be exposed from the through hole 213z of the first frame body 213a. The electrical connection end 261 and the connection part 264 of the flexible circuit board 26 may pass through the through hole 213z of the first frame body 213a. The electrical connection end 261 may be connected to the circuit board of the first host circuit board assembly 212, so that the flexible circuit board 26 is electrically connected to the first host circuit board assembly 212. The grounding portion 264a of the connection part 264 may pass through the through hole 213z, and is connected to the first frame body 213a through a conductor, where the conductor may be, for example, conductive foam or a conductive adhesive. In this way, the flexible circuit board 26 can be grounded, to avoid interference to antenna radiation performance of the host 2 (descriptions are further provided below). The limiting portion 264b of the connection part 264 is located in the through hole 213z.

As shown in FIG. 71 and FIG. 69, the through hole 213z of the first frame body 213a may be filled with a sealing material (which is represented by a shadow), the sealing material may fill the through hole 213z and cover the first outer surface 222a and a surface of the clamping member 27, and the sealing material surrounds the connection part 264 of the flexible circuit board 26. The sealing material may be, for example, sealant. The sealing material has a sealing function, and can prevent moisture from intruding the electrical connection end 261 and the first host circuit board assembly 212 through the through hole 213z of the first frame body 213a. The moisture may come from the outside, and the outside moisture may enter the through hole through an assembly gap between the shaft sleeve 222 and the circumferential side wall 232a. The moisture may alternatively come from the inside of the host 2, and the moisture inside the host 2 may enter the through hole through an assembly gap between the shaft sleeve 222 and the second bracket 231a.

In another embodiment, a structure design may be adjusted (for example, a position and/or a size of the through hole of the first frame body 213a may be adjusted), so that only a part of the region of the clamping member 27 may be exposed from the through hole 213z of the first frame body 213a, and the first outer surface 222a of the shaft sleeve 222 is completely covered by the first frame body 213a. Correspondingly, the sealing material in the through hole 213z covers only the surface of the clamping member 27. Alternatively, in another embodiment, based on an actual requirement, the first frame body 213a may not be provided with the through hole 213z, and may be sealed without filling the sealing material.

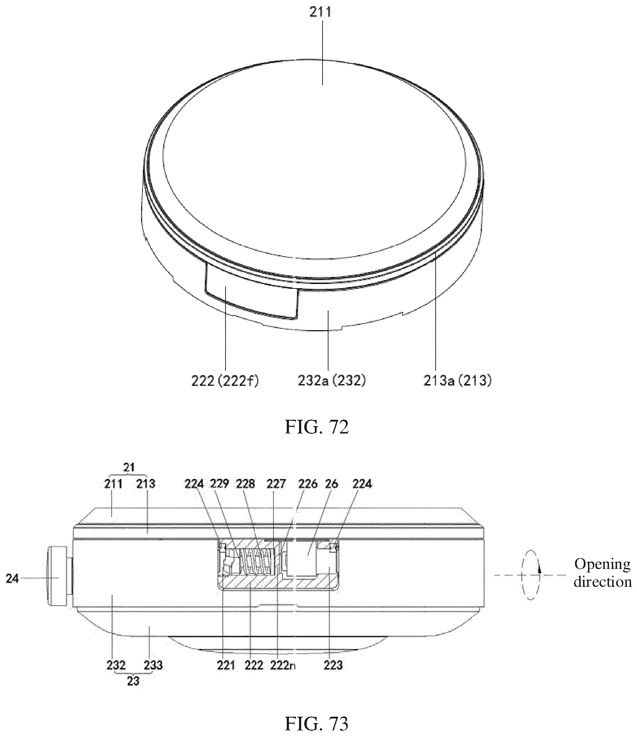

As shown in FIG. 72, the display 211 is mounted on the first host housing 213. With reference to FIG. 72, FIG. 70, and FIG. 6, the display 211 may cover the first bracket 213b of the first host housing 213, the first host circuit board assembly 212, the electrical connection end 261 and the connection part 264 of the flexible circuit board 26, and a part of the first frame body 213a of the first host housing 213. A circumferential edge of the first frame body 213a may surround the display 211. In addition, FIG. 72 shows that in the closed state of the host 2, the second outer surface 222f of the shaft sleeve 222 may be seen as an appearance surface of the host 2.

In conclusion, in the host 2, the shaft sleeve 222 of the rotating shaft assembly 22 is fixedly connected to the first part 21, both the first shaft 221 and the second shaft 223 of the rotating shaft assembly 22 are fixedly connected to the second part 23, and the first part 21 may rotate around the first shaft 221 and the second shaft 223 together with the shaft sleeve 222.

The following describes mechanism motions generated in the host 2 in opening and closing processes of the host 2.

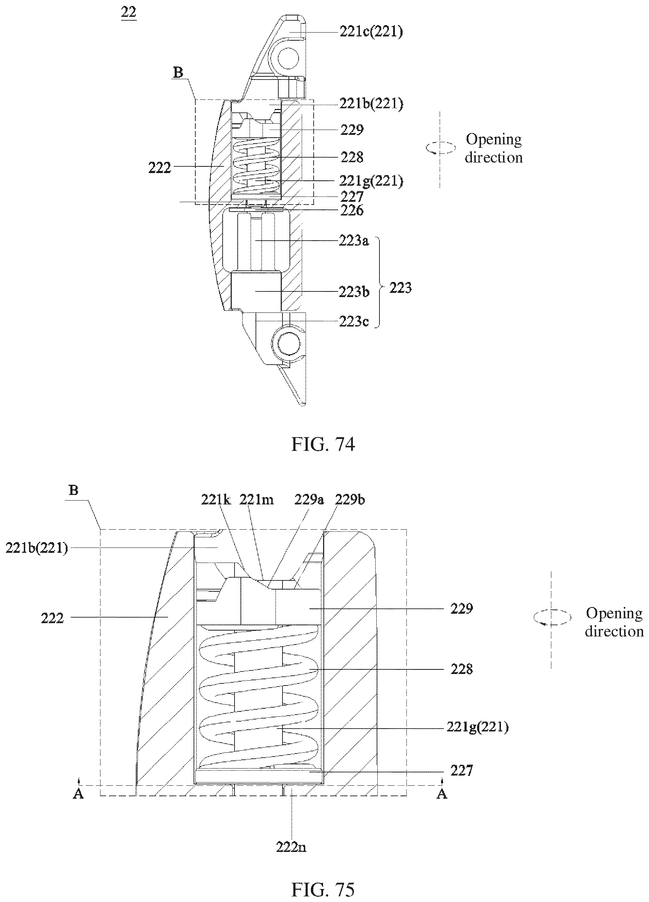

FIG. 73 is a schematic side view of the host 2 in the closed state, and FIG. 74 is a schematic top view of the rotating shaft assembly 22 of the host 2 in FIG. 73. In FIG. 73 and FIG. 74, to display an internal state of the rotating shaft assembly 22, the shaft sleeve 222 is sectioned for display. It should be noted that a section of the shaft sleeve 222 in FIG. 73 is perpendicular to a section of the shaft sleeve 222 in FIG. 74. FIG. 75 is a partially enlarged schematic diagram at a position B in FIG. 74.

As described above, when the host 2 is in the closed state, the latch portion 213d in the first part 21 and the buckle 251e of the open button 25 form a buckle connection, so that the first part 21 is latched by the second part 23.

As shown in FIG. 73 and FIG. 75, when the host 2 is in the closed state, an end of the elastic member 228 presses against the driven member 229, so that the driven member 229 maintains in contact with the second part 221b. A top (namely, an end that is of the first slope 229a and that is far away from the plane 229b) of the first slope 229a of the driven member 229 may be in contact with a top (namely, an end that is of the slope 221k and that is close to the plane 221m) of the slope 221k of the second part 221b of the first shaft 221, and there is a gap between the plane 229b of the driven member 229 and the plane 221m of the second part 221b. A force applied by the slope 221k on the first slope 229a may enable the driven member 229 to have a trend of rotating in an opening direction, and the first part 21 of the host 2 may rotate in the opening direction to be opened relative to the second part 23.

As shown in FIG. 75, due to matching between the driven member 229 and the shaft sleeve 222, when the driven member 229 has a trend of rotating in a clockwise direction, the shaft sleeve 222 also has a trend of rotating in the opening direction. The shaft sleeve 222 is fixedly connected to the first part 21. Therefore, the first part 21 also has a trend of rotating in the opening direction. However, because the first part 21 is latched by the second part 23, the first part 21 cannot actually rotate in the opening direction.

As shown in FIG. 75, the other end of the elastic member 228 presses against the bump matching member 227, so that the bump matching member 227 presses against the spacer plate 222n.

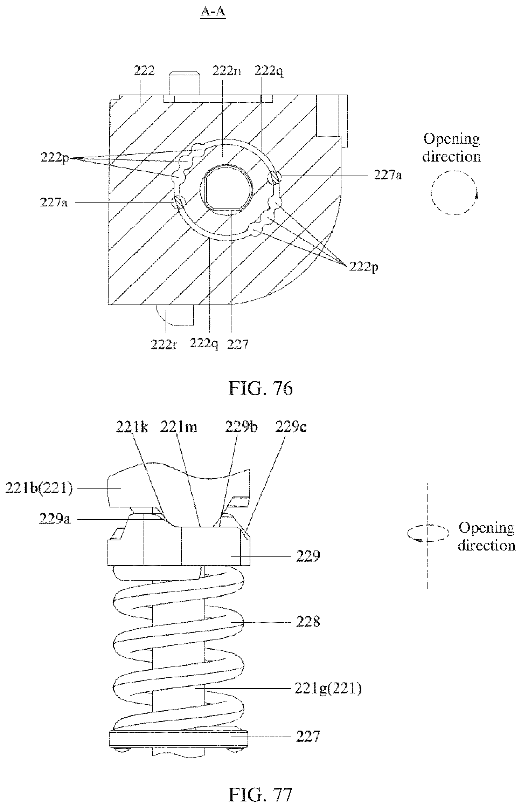

FIG. 76 is a schematic diagram of an A-A sectional structure of FIG. 75. FIG. 76 shows a sectional view of a matching structure including the bump matching member 227 and the spacer plate 222n when the host 2 is in the closed state, where the bumps 227a on the bump matching member 227 are shown by dashed lines. As shown in FIG. 76, the bumps 227a are located in the chute 222q on the spacer plate 222n, and there is a specific spacing between the bump 227a and the matching grooves 222p.

When the user presses the cap 251 of the open button 25, the buckle 251e of the open button 25 and the latch portion 213d of the first part 21 no longer form the buckle connection, and the first part 21 is no longer latched by the second part 23. In this case, the first part 21 starts the first rotation stroke segment.

As shown in FIG. 77 (in FIG. 77, to clearly indicate matching between the driven member 229 and the second part 221b, the shaft sleeve 222 is not shown, and this also applied to the following), under a joint action of the elastic member 228 and the slope 221k, the driven member 229 performs a composite motion. The driven member 229 rotates in the opening direction and moves towards the second part 221b at the same time, until a root portion of the first slope 229a (namely, an end that is of the first slope 229a and that is connected to the plane 229b) is in contact with the top of the slope 221k, and the plane 229b is in contact with the plane 221m (impact of inertia on a position of the driven member 229 may be ignored through a structure design). With reference to FIG. 73, when the driven member 229 moves, the shaft sleeve 222 and the first part 21 also rotate around the second part 221b in the opening direction.

As shown in FIG. 73 and FIG. 2, when the driven member 229, the shaft sleeve 222, and the first part 21 stop rotating, the first part 21 completes the first rotation stroke, and the first part 21 opens the angle a relative to the second part 23, where the angle a may be, for example, about 15°. It is easy to understand that, in the first rotation stroke segment, the first part 21 is driven by the shaft sleeve 222 to rotate. Therefore, the first part 21 automatically rotates, and no external force needs to be applied by the user.

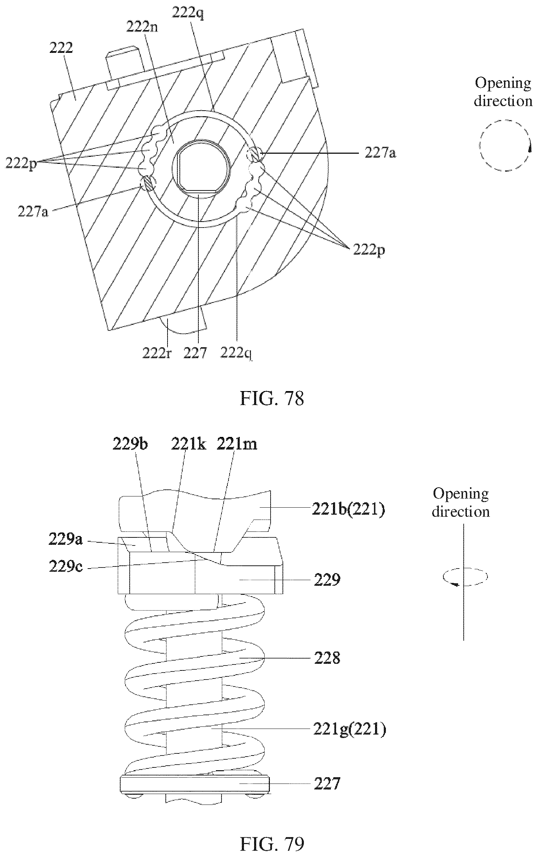

With reference to FIG. 76 and FIG. 78, in the first rotation stroke segment, because the shaft sleeve 222 rotates relative to the bump matching member 227, the bumps 227a of the bump matching member 227 slide in the chute 222q and gradually approach the matching grooves 222p. When the first rotation stroke segment ends, the bumps 227a each may just reach a joint between the chute 222q and the matching groove 222p (as shown in FIG. 78). In the first rotation stroke segment, the bumps 227a always smoothly slide in the chute 222q, no displacement (or referred to as a jolt) in a rotating shaft direction of the shaft sleeve 222 is generated between the bump matching member 227 and the shaft sleeve 222, and the bump matching member 227 does not impact the shaft sleeve 222. Therefore, when the user touches the first part 21, the user cannot experience a touch feeling feedback.

Alternatively, in another embodiment, when the first rotation stroke segment ends, the bumps 227a may enter the matching grooves 222p. When the bumps 227a enter first matching grooves 222p from the chute 222q, a displacement in the rotating shaft direction of the shaft sleeve 222 is generated between the bump matching member 227 and the shaft sleeve 222, and the bump matching member 227 may impact the shaft sleeve 222. Therefore, if the user touches the first part 21, the user may experience a touch feeling feedback.

As shown in FIG. 77, after the first part 21 is opened at the angle a relative to the second part 23, the plane 229b is in contact with the plane 221m, and a joint force applied by the elastic member 228 and the first shaft 221 to the driven member 229 in an axial direction of the main portion 221g is zero. Therefore, the driven member 229 cannot continue to rotate by relying only on driving of the elastic member 228 and the first shaft 221. In other words, the first part 21 cannot continue to automatically rotate. In this case, the user may rotate the first part 21 in the opening direction. The first part 21 may drive the shaft sleeve 222 to rotate in the opening direction, and the shaft sleeve 222 may further drive the driven member 229 to rotate in the opening direction. It is easy to understand that, in a rotation process of the driven member 229, the plane 229b is in slidable contact with the plane 221m. Therefore, the driven member 229 only rotates, and no displacement occurs in the axial direction of the main portion 221g.

As shown in FIG. 79, when the end that is of the plane 229b and that is far away from the first slope 229a is in contact with the top of the slope 221k (or the top of the second slope 229c is in contact with the top of the slope 221k), the first part 21 may complete the second stroke segment. As shown in FIG. 3, when the second stroke segment is completed, the first part 21 is opened at the angle b relative to the second part 23, where the angle b may be, for example, about 75°. As described above, in the second stroke segment, the first part 21 needs to be manually rotated by the user.

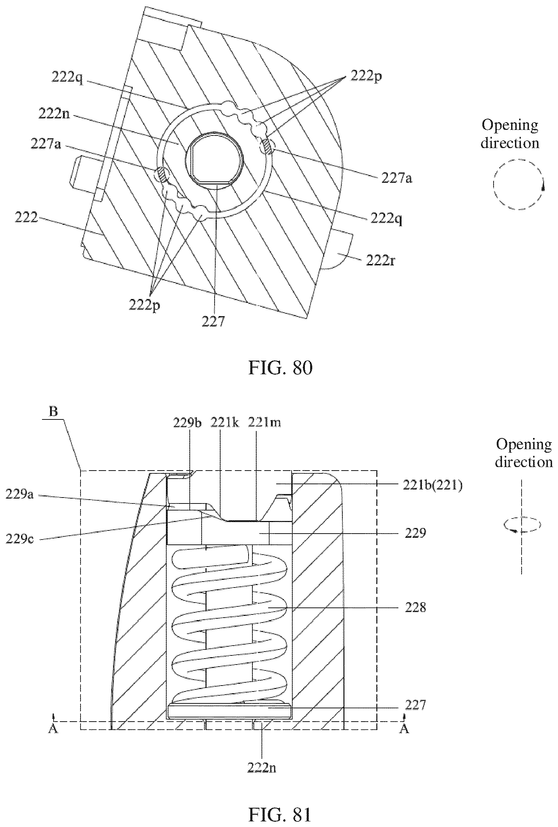

With reference to FIG. 78 and FIG. 80, in the second rotation stroke segment, the bumps 227a sequentially enter the matching grooves 222p. When the second rotation stroke segment, the bumps 227a may slide out of the matching grooves 222p and enter the chute 222q. In the second rotation stroke segment, when the bumps 227a enter and exit each matching groove 222p, a displacement in the rotating shaft direction of the shaft sleeve 222 is generated between the bump matching member 227 and the shaft sleeve 222, and the bump matching member 227 may impact the shaft sleeve 222. Therefore, the user may experience a touch feeling feedback.

As shown in FIG. 3, after the first part 21 is opened at the angle b relative to the second part 23, the first part 21 may start to enter the third stroke segment. A rotation feature of the first part 21 in the third stroke segment is similar to a rotation feature of the first part 21 in the first stroke segment, and the first part 21 also automatically rotates in the third stroke segment. Details are described below.

As shown in FIG. 79 and FIG. 81, when the third stroke segment starts, the top of the second slope 229c is in contact with the top of the slope 221k. Under the joint action of the elastic member 228 and the slope 221k, the driven member 229 performs a composite motion. The driven member 229 rotates in the opening direction and moves towards the second part 221b at the same time, until a root portion of the second slope 229c (namely, an end that is of the second slope 229c and that is far away from the plane 229b) is in contact with the top of the slope 221k. When the driven member 229 moves, the shaft sleeve 222 and the first part 21 also rotate around the second part 221b in the opening direction.

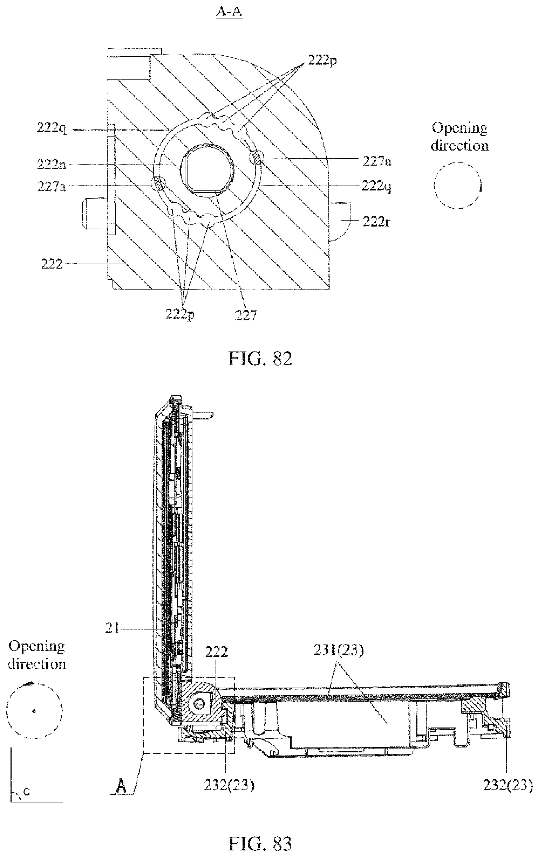

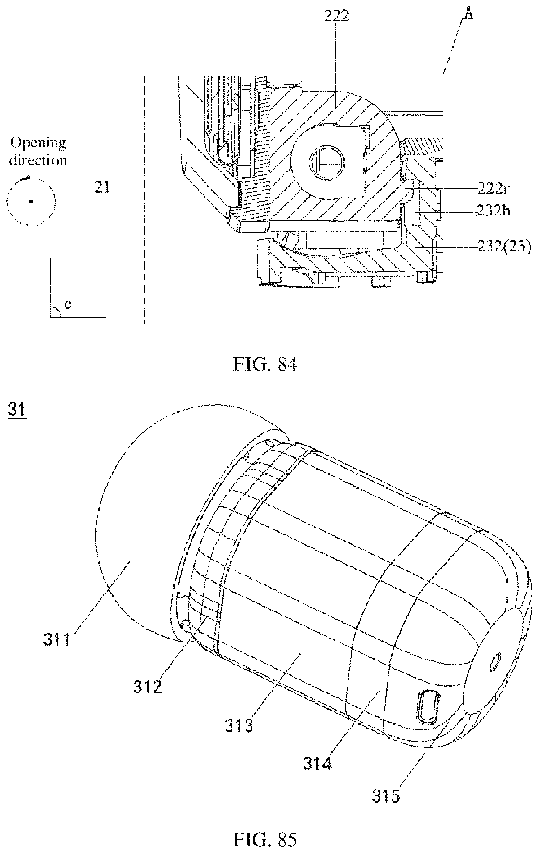

As shown in FIG. 83 and FIG. 84, the limiting protrusion 222r on the shaft sleeve 222 may enter the limiting groove 232h of the third host housing 232, and the limiting protrusion 222r abuts against the inner wall of the limiting groove 232h. In this case, the shaft sleeve 222 cannot continue to rotate in the opening direction, and therefore the first part 21 also stops rotating.

When the driven member 229, the shaft sleeve 222, and the first part 21 stop rotating, the first part 21 completes the third rotation stroke segment. As shown in FIG. 5, the first part 21 is opened at the angle c relative to the second part 23, where the angle c may be, for example, about 90°. It is easy to understand that, in the third stroke segment, the first part 21 is driven by the shaft sleeve 222 to rotate. Therefore, the first part 21 automatically rotates, and no external force needs to be applied by the user.

In this embodiment, the limiting groove 232h matches the limiting protrusion 222r, so that motion limiting can be performed on the first part 21 through the third host housing 232. Because the third host housing 232 has a larger size (compared with the rotating shaft assembly 22), and has good structural strength, assembly reliability of the limiting groove 232h and the limiting protrusion 222r is high, thereby helping ensure matching reliability of the host 2. It may be understood that, based on an actual requirement, in another embodiment, when the third stroke segment ends, the first part 21 may stop rotating through matching between the two-step ladder of the driven member and the two-step ladder of the first shaft 221. There is no need to design the limiting protrusion 222r on the shaft sleeve, and there is also no need to provide the limiting groove 232h on the third host housing 232.

With reference to FIG. 80 and FIG. 82, in the third rotation stroke segment, the bumps 227a smoothly slide in the chute 222q, no displacement in the rotating shaft direction of the shaft sleeve 222 is generated between the bump matching member 227 and the shaft sleeve 222, and the bump matching member 227 does not impact the shaft sleeve 222. Therefore, when the user touches the first part 21, the user cannot experience a touch feeling feedback.

With reference to FIG. 73, FIG. 67, and FIG. 62, in a process of opening the first part 21, the electrical connection end 261 of the flexible circuit board 26 rotates with the first part 21, the wound part of the flexible circuit board 26 may be gradually loosened, and a diameter of the wound part may be gradually increased.

According to the foregoing descriptions of the opening process of the host 2, it is easy to understand that in an entire process of closing the opened first part 21, the first part 21 needs to be manually rotated in an opposite direction of the opening direction until the first part 21 is latched by the open button. In a stroke in which the opening angle of the first part 21 is reduced from the angle b to the angle a, because the bumps 227a sequentially slide into and out of each matching groove 222p, the bump matching member 227 may impact the shaft sleeve 222, and therefore there is a touch feeling feedback. In another stroke, because the bumps 227a slide smoothly in the chute 222q, the bump matching member 227 does not impact the shaft sleeve 222, and therefore there is no touch feeling feedback. In addition, in a process of closing the first part 21, the electrical connection end 261 of the flexible circuit board 26 rotates with the first part 21, the wound part of the flexible circuit board 26 may be gradually tightened, and a diameter of the wound part may be gradually decreased.

According to the foregoing descriptions, it is easy to understand that the assembly structure including the first shaft 221, the driven member 229, the elastic member 228, and the shaft sleeve 222 in the rotating shaft assembly 22 is used to construct a cam mechanism and implement opening and closing of the host 2. The second shaft 223 in the rotating shaft assembly 22 is configured for mounting and winding the flexible circuit board 26. In this embodiment, two shafts, namely, the first shaft 221 and the second shaft 223, are separately designed, so that the flexible circuit board 26 is easily assembled to the second shaft 223 and the shaft sleeve 222.

Due to a manufacturing error, the first shaft 221 and the second shaft 223 may not be concentric after being assembled (the axis of the first shaft 221 does not overlap the axis of the second shaft 223). If no corresponding measure is taken, stress is generated when the rotating shaft assembly 22 performs a mechanism motion, reliability of the rotating shaft assembly 22 is reduced, and an abnormal voice may be further caused. In this embodiment, the end portion 221d of the first shaft 221 matches the groove 223e of the second shaft 223, so that an assembly tolerance can be absorbed, and stress caused by eccentricity can be reduced or avoided.

Different from this embodiment, in another embodiment, the first shaft and the second shaft may not be connected, and the end portion of the second shaft may not be provided with a groove configured to accommodate the end portion of the first shaft. Alternatively, in another embodiment, there may be no design in which a flexible circuit board is wound around a shaft, and an integrated single shaft may be used to replace the first shaft 221 and the second shaft 223. In this case, the limiting member 226 may be canceled.

According to the foregoing descriptions, it is easy to understand that the assembly structure including the elastic member 228, the bump matching member 227, and the shaft sleeve 222 in the rotating shaft assembly 22 is used to implement a touch feeling feedback in the opening and closing processes of the host 2. In another embodiment, the touch feeling feedback design may be canceled. To be specific, the bump matching member 227 and the chute 222q and the matching grooves 222p on the spacer plate 222n of the shaft sleeve 222 may be canceled. In this case, the elastic member may directly press against the spacer plate 222n.

In this embodiment, when the shaft sleeve 222 rotates, the shaft contact member 224 mounted on the shaft sleeve 222 rotates with the shaft sleeve 222, and the shaft contact member 224 maintains contact with the first shaft 221 and the second shaft 223. In other words, the shaft contact member 224 is in slidable contact with the first shaft 221 and the second shaft 223.

### Two feeding paths of an antenna system of the host 2

In this embodiment, both the first frame body 213a and the third host housing 232 of the host 2 may be used as antennas in the antenna system of the host 2. The following describes two feeding paths of the antenna system of the host 2.

As shown in FIG. 70, the first frame body 213a may be in contact with the feeding spring 212f of the first host circuit board assembly 212, so that a radio frequency signal can be fed into the first frame body 213a through the feeding spring 212f. In addition, the first frame body 213a may be in contact with the grounding spring 212b, the grounding spring 212c, the grounding spring 212d, and the grounding spring 212e of the first host circuit board assembly 212. In this way, the first frame body 213a can be grounded. Therefore, the first frame body 213a can be used as an antenna.

As described above, the first frame body 213a is connected to the shaft sleeve 222, the shaft contact member 224 on the shaft sleeve 222 is in contact with both the first shaft 221 and the second shaft 223, and both the first shaft 221 and the second shaft 223 are connected to the third host housing 232. Therefore, the radio frequency signal can be transmitted from the first frame body 213a to the third host housing 232 through the shaft sleeve 222, the shaft contact member 224, the first shaft 221, and the second shaft 223. Therefore, the third host housing 232 can also be used as an antenna.

It can be learned that, the first host circuit board assembly 212 is connected to the first frame body 213a and the third host housing 232 through a physical mechanical structure, to form a first feeding path of the antenna system.

When the host 2 is in the closed state, in an axial direction (or a thickness direction of the host 2) of the first frame body 213a, there is a tiny gap between the first frame body 213a and the third host housing 232, and the gap is, for example, 0.1 mm. Because of the gap, the first frame body 213a may feed the third host housing 232 through coupling, so that the third host housing 232 can be used as an antenna.

It can be learned that, the first host circuit board assembly 212 is connected to the first frame body 213a through a physical mechanical structure, and then is electrically coupled to the third host housing 232, to form a second feeding path of the antenna system.

When the host 2 is in the closed state, radiation of the third host housing 232 in the second feeding path is strong, and the host 2 and the first frame body 213a jointly ensure antenna performance through the third host housing 232. When the host 2 is in the open state, radiation of the third host housing 232 in the second feeding path is weak. In this case, antenna performance is ensured mainly by relying on radiation of the first frame body 213a. However, compared with that in the closed state of the host 2, a radiation direction of the antenna system of the host 2 in the open state changes, so that a communication requirement of the host 2 in the open state can be met. Therefore, in this embodiment, two feeding paths of the antenna system are designed, so that different communication requirements of the host 2 in the open state and the closed state can be met, and antenna performance of the host 2 in different states can be ensured.

It is easy to understand that, in another embodiment, there may be no second feeding path. In other words, the first frame body 213a does not feed the third host housing 232 through coupling.

In this embodiment, the flexible circuit board 26 may cause interference to radiation performance of the first frame body 213a and the third host housing 232, and in particular, a larger length of the flexible circuit board 26 causes more severe interference. As described above, the grounding portion 264a of the flexible circuit board 26 may be connected to the first frame body 213a through the conductor. In this way, the flexible circuit board 26 can be grounded, to avoid interference of the flexible circuit board 26 to the antenna radiation performance of the host 2. In another embodiment, based on a product requirement, the foregoing grounding design may not be performed on the flexible circuit board 26.

### Earphones 3

In this embodiment, structures of the first earphone 31 and the second earphone 32 may be completely consistent. The following uses the first earphone 31 as an example for description.

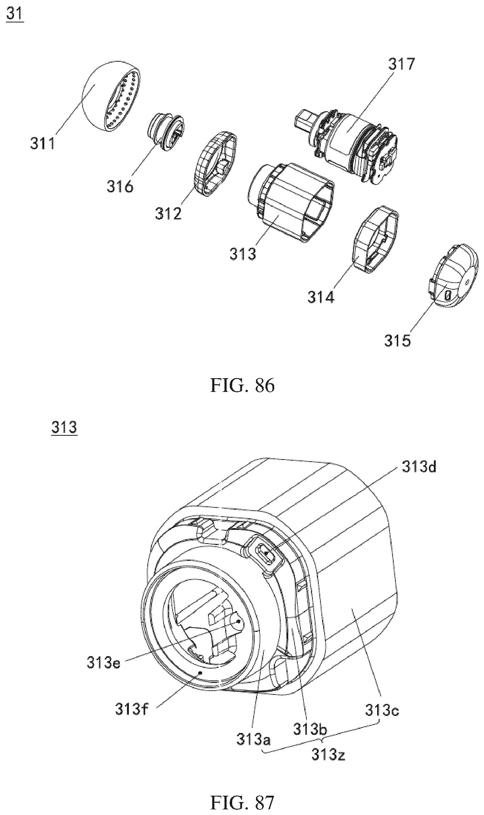

As shown in FIG. 85 and FIG. 86, the first earphone 31 may include an earplug 311, an earplug support assembly 316, a first electrode 312, an earphone front-housing assembly 313, a second electrode 314, an earphone rear-housing assembly 315, and an electronic assembly 317. Both the earplug support assembly 316 and the first electrode 312 may be mounted on one end of the earphone front-housing assembly 313, and both the second electrode 314 and the earphone rear-housing assembly 315 may be mounted on the other end of the earphone front-housing assembly 313. The earplug 311 and the earplug support assembly 316 are located at a same end of the earphone front-housing assembly 313, and the earplug 311 is mounted at an end that is of the earplug support assembly 316 and that is far away from the earphone front-housing assembly 313. The electronic assembly 317 may be mounted in a space enclosed by the earplug support assembly 316, the first electrode 312, the earphone front-housing assembly 313, the second electrode 314, and the earphone rear-housing assembly 315.

The following first describes structures and assembly of the earplug 311, the earplug support assembly 316, the first electrode 312, the earphone front-housing assembly 313, the second electrode 314, and the earphone rear-housing assembly 315 in the first earphone 31, and then describes a structure and assembly of the electronic assembly 317.

As shown in FIG. 85, in this embodiment, the first electrode 312, the earphone front-housing assembly 313, the second electrode 314, and the earphone rear-housing assembly 315 may roughly form an octahedron appearance. An outer circumferential surface of the octahedron may include planes and arc surfaces. The planes and the arc surfaces are connected and alternately arranged to form a circle (to be specific, each plane is connected between two arc surfaces, and each arc surface is connected between two planes). The octahedron appearance of the first earphone 31 is in a centrosymmetric shape. In another embodiment, the first earphone may alternatively have another centrosymmetric appearance shape. For example, the first earphone is roughly cylindrical, tetrahedron, or the like.

In this embodiment, a radial size of the first earphone 31 may be greater than a groove depth of the first accommodation groove 213y. For example, the radial size of the first earphone 31 may be at least twice the groove depth of the first accommodation groove 213y. The radial size may be a distance between two planes that are opposite to each other on the first earphone 31.

### Earphone front-housing assembly 313

As shown in FIG. 87, FIG. 88, and FIG. 89, the earphone front-housing assembly 313 may include an earphone front housing 313z, a noise reduction microphone mesh 313j, and an earphone magnet 313g.

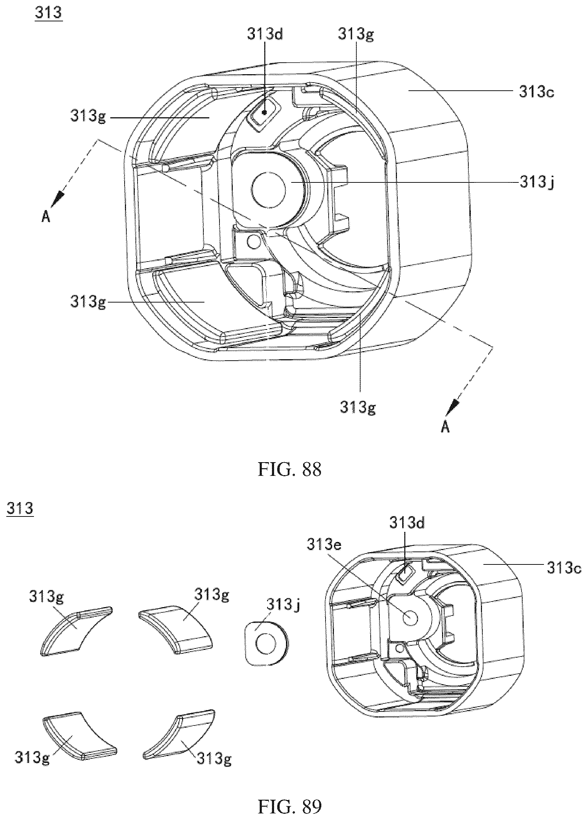

As shown in FIG. 87 and FIG. 88, the earphone front housing 313z may be in a hollow tubular structure with openings at two ends. The earphone front housing 313z may include a first part 313a, a second part 313b, and a third part 313c that are sequentially connected. A circumferential length of the first part 313a may be less than a circumferential length of the second part 313b, and the circumferential length of the second part 313b may be less than a circumferential length of the third part 313c. The circumferential length refers to a size in a direction of a center line that surrounds the tubular structure of the earphone front housing 313z. The third part 313c may be roughly of an octahedron tubular structure, and a wall of the third part 313c may include flat parts and arc-shaped parts. The flat parts and the arc-shaped parts are connected and alternately arranged to form a circle (to be specific, each flat part is connected between two arc-shaped parts, and each arc-shaped part is connected between two flat parts).

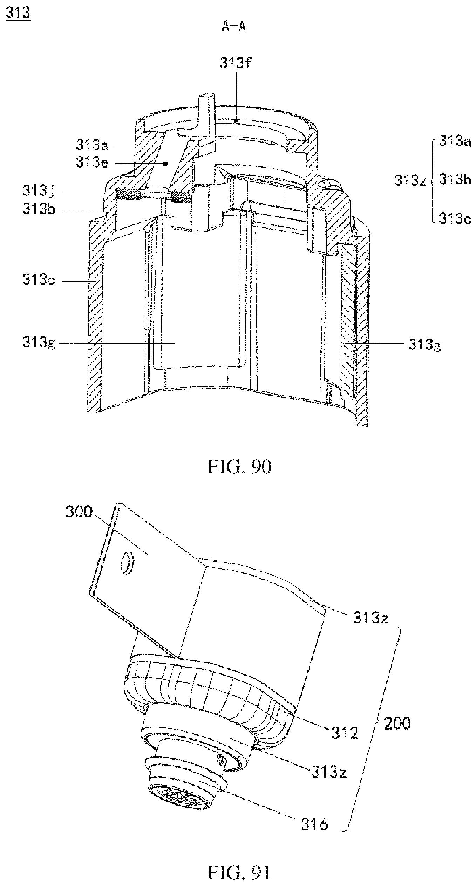

As shown in FIG. 87 and FIG. 90, an end that is of the first part 313a and that is far away from the second part 313b may form a mounting groove 313f, and the mounting groove 313f may enclose a circle. A voice pickup channel 313e may be further provided in a wall of the earphone front housing 313z, and the voice pickup channel 313e may extend roughly along a straight line. One end of the voice pickup channel 313e passes through a bottom surface of the mounting groove 313f, and the other end of the voice pickup channel 313e is connected to an inner cavity of the earphone front housing 313z. The second part 313b may be provided with a through hole 313d, and the through hole 313d is connected to the inner cavity of the earphone front-housing 313z.

### Noise reduction microphone mesh 313j

The noise reduction microphone mesh 313j may be roughly in a sheet shape, and may include several layers of materials, such as an acoustic mesh and an adhesive layer. As shown in FIG. 89 and FIG. 90, the noise reduction microphone mesh 313j may be fastened in the earphone front housing 313z, and an end that is of the voice pickup channel 313e and that is far away from the mounting groove 313f is sealed, so that a voice in the voice pickup channel 313e may pass through the noise reduction microphone mesh 313j.

### Earphone magnet 313g

As shown in FIG. 89, the earphone magnet 313g in this embodiment may be a single magnet. The earphone magnet 313g may have a single magnetic field direction. Alternatively, the earphone magnet 313g may have at least two magnetic field directions, and the earphone magnet 313g may form a Halbach array (which may be obtained by magnetizing different physical regions of a single magnet in different directions). For example, the earphone magnet 313g is a Halbach array having two different magnetic field directions.

In another embodiment, the earphone magnet may be formed by splicing at least two single magnets. The earphone magnet may have at least two magnetic field directions, and the earphone magnet forms a Halbach array.

As shown in FIG. 89, the earphone magnet 313g in this embodiment may be roughly of a curved plate structure, and the curved plate structure may be bent in a direction surrounding a center line of the first earphone 31. A shape of the earphone magnet 313g may adapt to a shape of an inner wall of the third part 313c of the earphone front-housing 313z. The earphone magnet 313g may be fastened to the inner wall of the third part 313c of the earphone front housing 313z, for example, fastened to an inner wall of the arc-shaped part of the third part 313c.

As shown in FIG. 89, there may be four earphone magnets 313g in this embodiment, the four earphone magnets 313g may be evenly distributed on the inner wall of the third part 313c at an equal spacing, and one earphone magnet 313g is mounted on an inner wall of each arc-shaped part of the third part 313c. Specifications of the four earphone magnets 313g may be the same, and magnetic field directions of the four earphone magnets 313g may be consistent.

In another embodiment, a quantity of earphone magnets may be designed based on a product requirement. For example, there may be only one earphone magnet, the earphone magnet may enclose a closed ring structure, and a shape of the earphone magnet may match the shape of the inner wall of the third part 313c. The earphone magnet may form a Halbach array, and the earphone magnet and four regions that are in a one-to-one correspondence with four arc-shaped parts of the third part 313c may have different magnetic field directions.

Alternatively, for example, there may be three earphone magnets, each earphone magnet may be of a curved structure surrounding a center line of the first earphone, and the three earphone magnets may be distributed on the inner wall of the third part of the earphone front housing at a spacing. The three earphone magnets may be evenly distributed at an equal spacing or unevenly distributed at a non-equal spacing. In this design, the third part of the earphone front housing may be roughly of an octahedron tubular structure or roughly of a cylindrical structure.

### Assembly jig 100 and assembly technique of the earphone magnet 313g

In this embodiment, to ensure that the magnet can be mounted accurately, an assembly jig may be used to assist in mounting the earphone magnet 313g. According to a product assembly requirement, the earphone magnet 313g and the earphone front housing 313z may be directly assembled, and the assembly jig may be customized based on this. Alternatively, as shown in FIG. 91, the earplug support assembly 316, the first electrode 312, and the like may be first mounted on the earphone front housing 313z to form an intermediate assembly 200, and then the earphone magnet 313g is mounted in the earphone front housing 313z of the intermediate assembly 200. The assembly jig may be customized based on this. The following uses the latter assembly manner as an example for description.

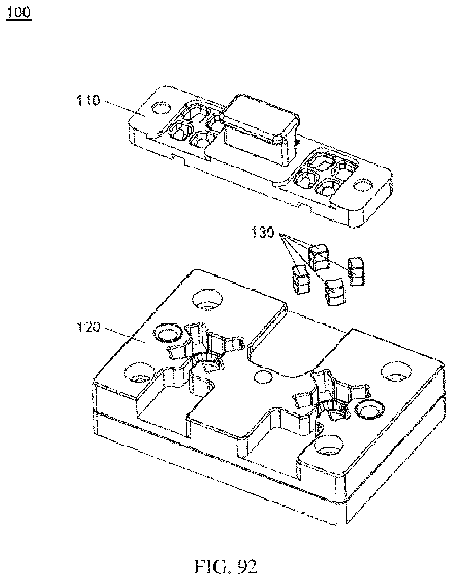

As shown in FIG. 91 and FIG. 92, to assemble the intermediate assembly 200, this embodiment provides the assembly jig 100. The intermediate assembly 200 may include the earplug support assembly 316, the first electrode 312, and the earphone front housing 313z that are pre-assembled (assembly structures of the earplug support assembly 316, the first electrode 312, and the earphone front housing 313z are described in detail below). For ease of taking, placing, and positioning the intermediate assembly 200, a clamp 300 may be sleeved on a periphery of the earphone front housing 313z in the intermediate assembly 200. The clamp 300 may be in a hoop shape, and the clamp 300 wraps and clamps the earphone front housing 313z. The clamp 300 may also be used in another assembly process of the first earphone 31.

As shown in FIG. 92, the assembly jig 100 in this embodiment may include a base 120, a jig magnet 130, and an upper cover 110.

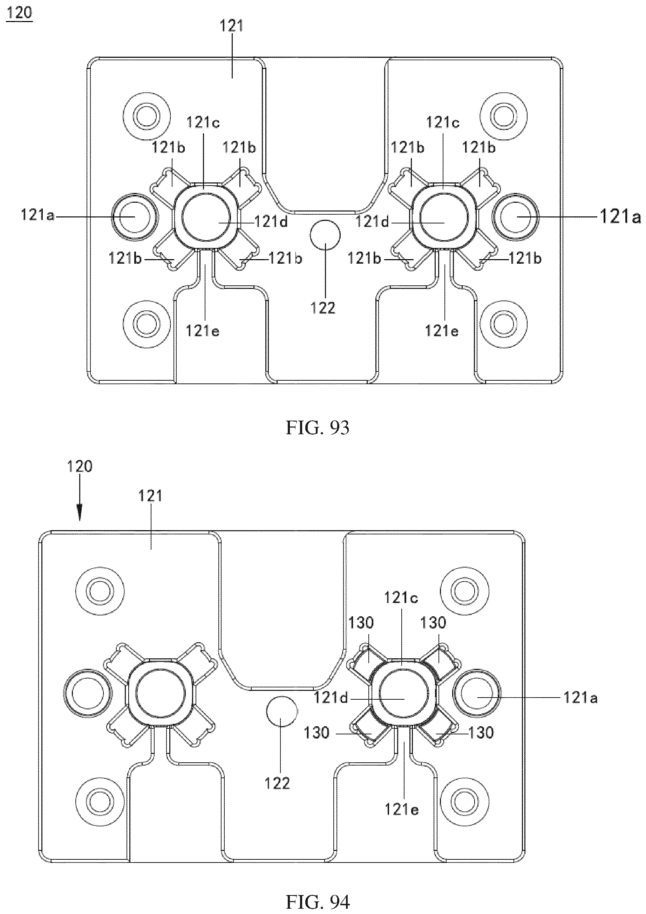

As shown in FIG. 93 and FIG. 94, the base 120 may include a base plate 121 and a base magnet 122 fastened on the base plate 121. The base plate 121 may be provided with an upper cover positioning hole 121a. For example, there are two upper cover positioning holes 121a, and the two upper cover positioning holes 121a are respectively located at two ends of the base plate 121. A workpiece positioning groove 121c, jig magnet mounting grooves 121b, and a clamp accommodation groove 121e may be further provided in a region (for example, a right region in a perspective of FIG. 93) of the base plate 121.

As shown in FIG. 93, an inner surface of a bottom of the workpiece positioning groove 121c may be shaped with an outer surface of the first electrode 312. A through hole 121d may be provided on a bottom wall of the workpiece positioning groove 121c, and the through hole 121d is configured to allow the earphone front housing 313z and the earplug support assembly 316 to pass through.

As shown in FIG. 93, the jig magnet mounting grooves 121b may be located on an outer side of the workpiece positioning groove 121c, and may be connected to the workpiece positioning groove 121c. It may be considered that the jig magnet mounting grooves 121b penetrate the side wall of the workpiece positioning groove 121c. A quantity of jig magnet mounting grooves 121b may be consistent with a quantity of jig magnets 130. For example, there are four jig magnet mounting grooves 121b. The four jig magnet mounting grooves 121b may be distributed around the workpiece positioning groove 121c at an equal spacing.

With reference to FIG. 92 and FIG. 94, one jig magnet 130 may be mounted in each jig magnet mounting groove 121b. The jig magnet 130 may include only a single magnet, or may be formed by connecting at least two single magnets.

As shown in FIG. 93, the clamp accommodation groove 121e may be located on a periphery of the workpiece positioning groove 121c, and may be connected to the workpiece positioning groove 121c. The clamp accommodation groove 121e may be located between two jig magnet mounting grooves 121b.

As shown in FIG. 93, a same workpiece positioning groove 121c, a same through hole 121d, same jig magnet mounting grooves 121b, and a same jig accommodation groove 121e may also be provided in another region (for example, a left region in the perspective of FIG. 93) of the base plate 121. This design enables the assembly jig 100 to assemble two intermediate assemblies 200 at the same time. The positioning grooves 121c, the through holes 121d, the jig magnet mounting grooves 121b, and the clamp accommodation grooves 121e in the two regions of the base plate 121 may be located between the two upper cover positioning holes 121a.

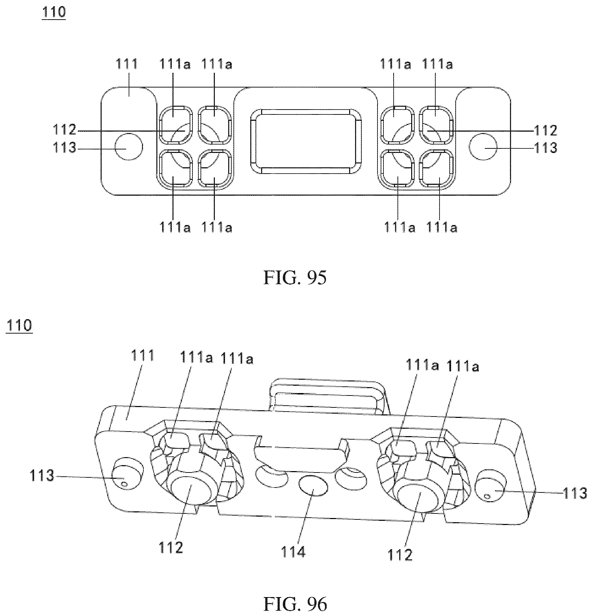

As shown in FIG. 95 and FIG. 96, the upper cover 110 may include a cover plate 111, an upper cover positioning rod 113, an upper cover limiting rod 112, and an upper cover magnet 114.

There may be two upper cover positioning rods 113, and the two upper cover positioning rods 113 are respectively located at two ends of the cover plate 111. Magnet placement through holes 111a may be provided in a region (for example, a right region in a perspective of FIG. 95) of the cover plate 111. A quantity of magnet placement through holes 111a may be consistent with the quantity of earphone magnets 313g. For example, there are also four magnet placement through holes 111a. The four magnet placement through holes 111a may roughly form a 2×2 matrix.

The upper cover limiting rod 112 is disposed on one side of the cover plate 111 in a thickness direction, and a center of the upper cover limiting rod 112 may be roughly located between the four magnet placement through holes 111a. In addition, for each magnet placement through hole 111a and the upper cover limiting rod 112, a part of a projection of the upper cover limiting rod 112 in an axial direction of the magnet placement through hole 111a falls within a projection of the magnet placement through hole 111a in the axial direction of the magnet placement through hole 111a. In other words, from the perspective of FIG. 95, each magnet placement through hole 111a has a part of the upper cover limiting rod 112, and the part may be referred to as a limiting part. It is easy to understand that a quantity of limiting parts is the same as the quantity of earphone magnets 313g. A shape of the upper cover limiting rod 112 may adapt to a shape of the inner cavity of the earphone front housing 313z.

The upper cover magnet 114 may be fastened to the cover plate 111, and may be located on a same side of the cover plate 111 as the upper cover limiting rod 112.

As shown in FIG. 95 and FIG. 96, the same magnet placement through holes 111a and upper cover limiting rod 112 may also be provided in another region (for example, a left region in the perspective of FIG. 95) of the cover plate 111. This design enables the assembly jig 100 to assemble two intermediate assemblies 200 at the same time. The magnet placement through holes 111a and the upper cover limiting rods 112 in the two regions of the cover plate 111 may be located between the two upper cover positioning rods 113.

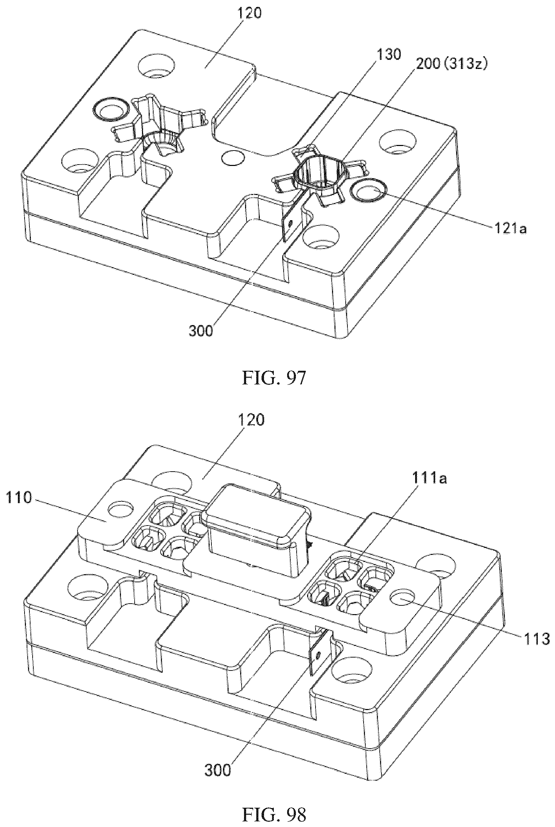

With reference to FIG. 97 to FIG. 101, the following schematically describes a process of using the assembly jig 100 to mount four earphone magnets 313g into one intermediate assembly 200.

With reference to FIG. 91 and FIG. 97, the clamp 300 and the intermediate assembly 200 are first positioned to the base 120, so that an annular part of the clamp 300 is placed in the workpiece positioning groove 121c, and the other part of the clamp 300 is placed in the clamp accommodation groove 121e; the earplug support assembly 316 and the earphone front housing 313z enter the through hole 121d; the first electrode 312 enters the workpiece positioning groove 121c, and an outer surface of the first electrode 312 matches an inner surface of the workpiece positioning groove 121c. In this case, each jig magnet 130 may correspond to one mounting position, in the earphone front housing 313z, for mounting the earphone magnet 313g.

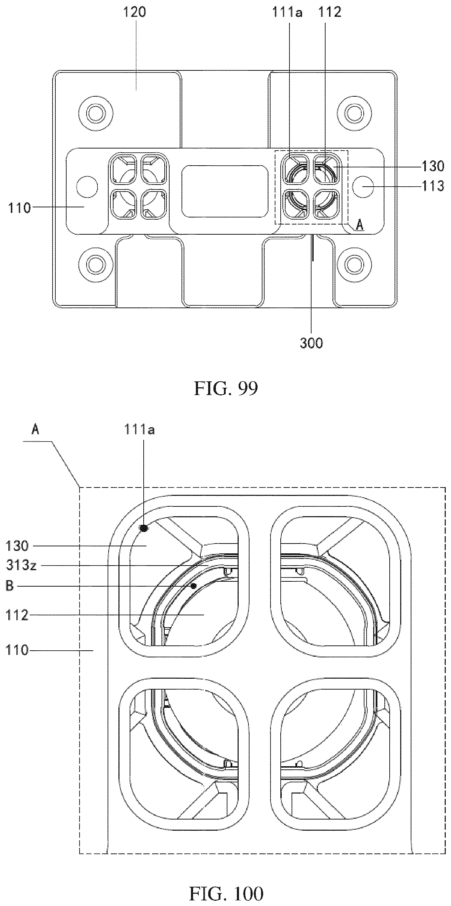

With reference to FIG. 98, FIG. 96, and FIG. 97, the upper cover 110 is mounted on the base 120, so that the cover plate 111 is in contact with the base 120; and the upper cover positioning rod 113 is inserted into the upper cover positioning hole 121a, so that the upper cover magnet 114 is magnetically attracted to the base magnet 122. With reference to FIG. 96 and FIG. 91, in this case, the upper cover limiting rod 112 in the upper cover 110 is inserted into the inner cavity of the earphone front housing 313z. With reference to FIG. 99, FIG. 100, and FIG. 94, each magnet placement through hole 111a has a part of the workpiece positioning groove 121c. In other words, projections of different regions of the workpiece positioning groove 121c in the axial direction of the magnet placement through hole 111a respectively fall into each magnet placement through hole 111a. From perspectives of FIG. 99 and FIG. 100, each magnet placement through hole 111a of the upper cover 110 has a part of the earphone front housing 313z. In other words, projections of different regions of the earphone front housing 313z in the axial direction of the magnet placement through hole 111a respectively fall into each magnet placement through hole 111a.

In addition, as shown in FIG. 100, a gap B is formed between each limiting part of the upper cover limiting rod 112 and an inner wall of the earphone front housing 313z (for brevity, only one gap B is marked in the figure). Each gap B is used for mounting one earphone magnet 313g. There is one jig magnet 130 near each gap B.

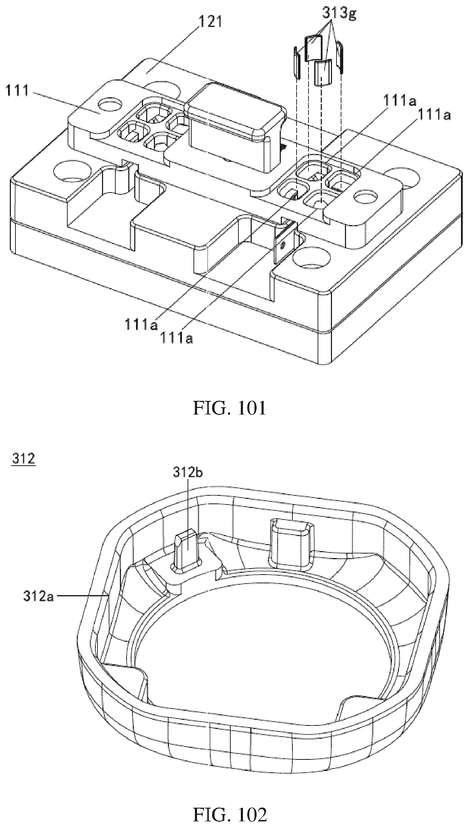

As shown in FIG. 101, four earphone magnets 313g are respectively inserted into four gaps B from the four magnet placement through holes 111a, so that there is one earphone magnet 313g in each gap B, and each earphone magnet 313g is positioned to a mounting position in the earphone front housing 313z. The jig magnet 130 near each gap B may be magnetically attracted to the earphone magnet 313g in the gap B, so that the earphone magnet 313g may be maintained at the mounting position in the earphone front housing 313z. In this way, pre-positioning of the earphone magnets 313g can be completed.

Then, the upper cover 110 may be removed to expose the intermediate assembly 200 and the earphone magnets 313g that are pre-positioned in the intermediate assembly 200. Then, the earphone magnet 313g may be fastened on the inner wall of the earphone front housing 313z by using an appropriate technique. For example, the earphone magnet 313g may be bonded to the inner wall of the earphone front housing 313z by using a dispensing technique. An adhesive used in the dispensing technique may be, for example, a quick-dry adhesive.

It is easy to understand from the foregoing descriptions that the base 120 can position the intermediate assembly 200 well, a matching structure including the upper cover 110 and the base 120 can accurately limit mounting spaces of the earphone magnets 313g, and the jig magnets 130 can conveniently and reliably maintain the earphone magnets 313g in the mounting positions of the earphone front housing 313z. Therefore, using the assembly jig 100 can greatly improve assembly precision and reliability of the earphone magnets 313g, make an assembly technique simple, and achieve good mass production.

### First electrode 312

As shown in FIG. 102, the first electrode 312 may include an electrode body 312a and a conduction portion 312b. The electrode body 312a may be roughly of a ring structure surrounding the center line of the first earphone 31. The conduction portion 312b may be roughly columnar, and the conduction portion 312b may protrude from an inner surface of the electrode main body 312a. The first electrode 312 may be made of a conductive material, for example, a metal material.

With reference to FIG. 102 and FIG. 87, the first electrode 312 may be mounted to the earphone front housing 313z. The electrode body 312a of the first electrode 312 matches the second part 313b of the earphone front housing 313z. The conduction portion 312b of the first electrode 312 may pass through the through hole 313d of the earphone front housing 313z, and is electrically connected to a circuit board (descriptions are provided below) of a first earphone circuit board assembly located in the inner cavity of the earphone front housing 313z, so that the first electrode 312 is used as a charging electrode. Descriptions of a detailed assembly structure are further provided below.

### Earplug support assembly 316

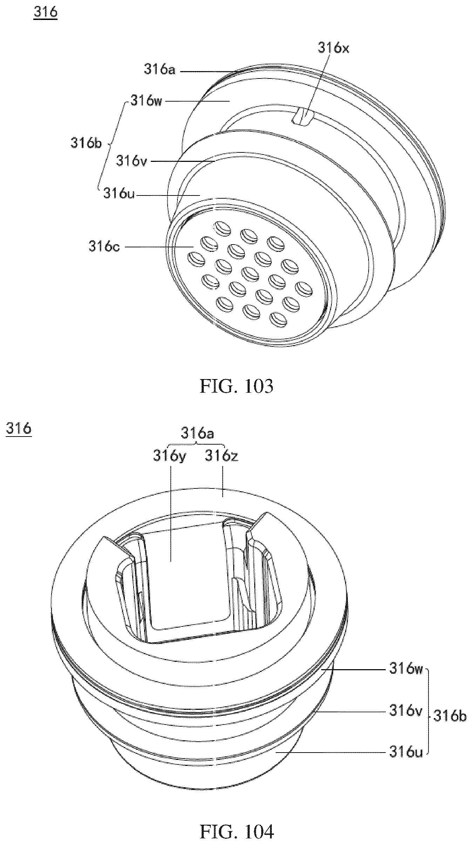

As shown in FIG. 103, FIG. 104, and FIG. 105, the earplug support assembly 316 may include an earplug support 316b, a front vent acoustic mesh 316a, and a speaker mesh 316c.

As shown in FIG. 103 to FIG. 105, the earplug support 316b may include a support body 316u, a first skirt edge 316v, and a second skirt edge 316w. The support body 316u may be roughly of a hollow tubular structure with openings at two ends. Both the first skirt edge 316v and the second skirt edge 316w may be bosses protruding from an outer circumferential surface of the support body 316u, and both the first skirt edge 316v and the second skirt edge 316w may surround the support body 316u. Both the first skirt edge 316v and the second skirt edge 316w may be located between the two ends of the support body 316u. There is a specific spacing between the first skirt edge 316v and the second skirt edge 316w.

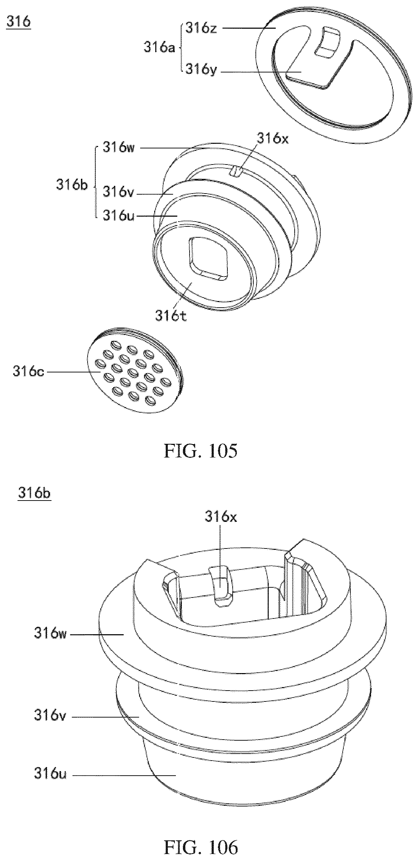

As shown in FIG. 106 and FIG. 103, an end that is of the support body 316u and that is close to the second skirt edge 316w may have a notch and roughly form a C-shaped structure. This end of the support body 316u may further have a front vent 316x, and the front vent 316x passes through a wall of the support body 316u. An opening that is of the front vent 316x and that is on the outer circumferential surface of the support body 316u may be located on a side that is of the second skirt edge 316w and that faces the first skirt edge 316v, and the opening may be connected to the second skirt edge 316w.

As shown in FIG. 105, an end that is of the support body 316u and that is close to the first skirt edge 316v may form a mounting groove 316t, a through hole is provided on a bottom wall of the mounting groove 316t, and the through hole communicates with an inner cavity of the support body 316u.

In this embodiment, the entire earplug support 316b may be manufactured by using a conductive material, or only a part of the earplug support 316b is manufactured by using a conductive material. The conductive material is, for example, metal. The earplug support 316b may accommodate a speaker in the electronic assembly 317 (descriptions are provided below). Therefore, the earplug support 316b may also be referred to as a voice-emitting mouth.

The front vent acoustic mesh 316a may be roughly in a sheet shape, and may include several layers of materials, such as an acoustic mesh and an adhesive layer. A bent front vent acoustic mesh 316a is shown in the figure. As shown in FIG. 105, the front vent acoustic mesh 316a may include a fastening region 316z and a blocking region 316y. The fastening region 316z may be in a ring shape. The blocking region 316y may be in a rectangular strip shape, and the blocking region 316y may be connected to an inner side of the fastening region 316z. The blocking region 316y can allow air and sound waves to pass through.

As shown in FIG. 105, FIG. 104, and FIG. 106, the front vent acoustic mesh 316a may be mounted to the earplug support 316b. The fastening region 316z may be mounted on a side that of the second skirt edge 316w and that is far away from the first skirt edge 316v. For example, an adhesive layer in the fastening region 316z may be bonded to the side of the second skirt edge 316w. The blocking region 316y may be bent into the inner cavity of the support body 316u, and is attached to an inner wall of the support body 316u. For example, an adhesive layer in the blocking region 316y may be bonded to the inner wall of the support body 316u. In addition, the blocking region 316y may block the front vent 316x.

With reference to FIG. 103, FIG. 104, and FIG. 87, the earplug support 316b may be mounted in the mounting groove 313f of the earphone front housing 313z. For example, the earplug support 316b may be bonded to the bottom surface of the mounting groove 313f through the adhesive layer in the fastening region 316z. Descriptions of a detailed assembly structure are further provided below.

### Speaker mesh 316c

As shown in FIG. 105, the speaker mesh 316c may be roughly in a sheet shape, and may include several layers of material, such as an acoustic mesh, an adhesive layer, and a PET sheet. A plurality of voice-emitting holes may be provided on the speaker mesh 316c.

As shown in FIG. 105, the speaker mesh 316c may be mounted in the mounting groove 316t of the support body 316u. A voice (from the speaker, where descriptions are provided below) in the inner cavity of the support body 316u enters a human ear through the speaker mesh 316c.

Based on a product requirement, in another embodiment, the earplug support may further have another appropriate structure, and is not limited to the foregoing descriptions. A front vent may not be provided on the earplug support, but may be provided on the earphone front housing 313z. For example, the front vent is provided on the first part 313a of the earphone front housing 313z, and is connected to the voice pickup channel 313e. An aperture of the front vent may be small (for example, less than 0.22 mm). In this case, the front vent acoustic mesh 316a may be omitted.

### Earplug 311

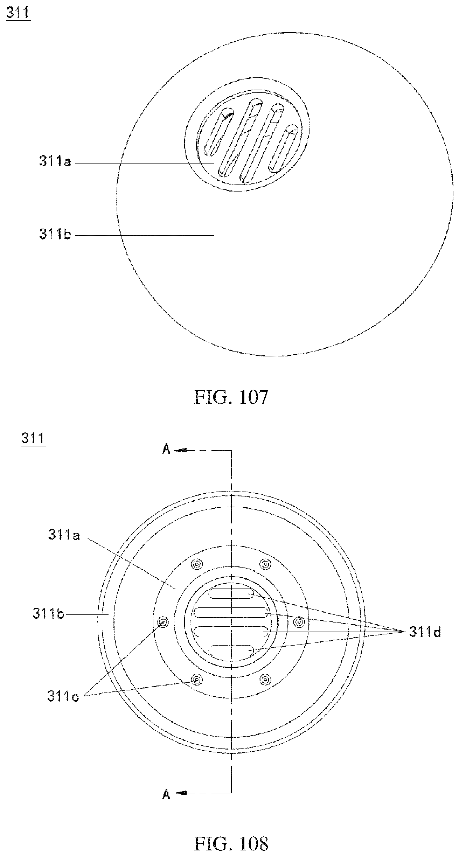

As shown in FIG. 107, FIG. 108, and FIG. 109, the earplug 311 may include an earplug inner cover 311a and an earplug outer cover 311b, and the earplug inner cover 311a and the earplug outer cover 311b may be fixedly connected.

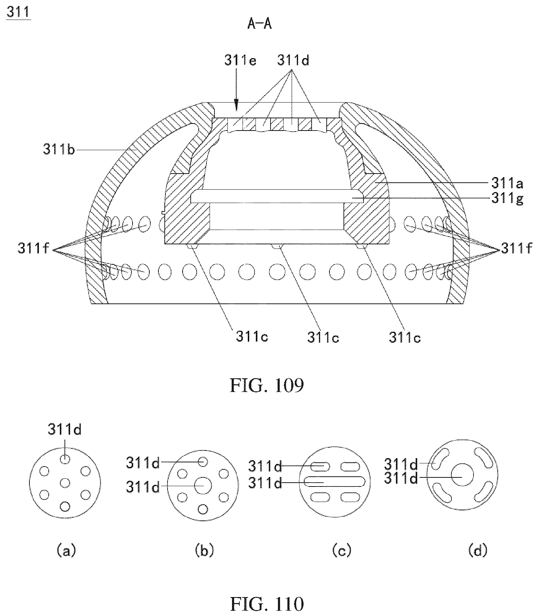

As shown in FIG. 108 and FIG. 109, the earplug inner cover 311a may be roughly of a hollow rotary body structure with openings at two ends. Several voice-emitting through holes 311d may be formed at an end of the earplug inner cover 311a in an axial direction, and all these voice-emitting through holes 311d are connected to an inner cavity of the earplug inner cover 311a. These voice-emitting through holes 311d are spaced from each other and may be arranged according to a specific rule.

As shown in FIG. 108, in an implementation, these voice-emitting through holes 311d may be arranged side by side. Shapes of the voice-emitting through holes 311d may be consistent or similar. For example, each voice-emitting through hole 311d may be a runway-shaped hole. In another implementation, shapes and an arrangement manner of the voice-emitting through holes 311d may be designed based on a product requirement. For example, FIG. 110 shows shapes and arrangements of four types of voice-emitting through holes 311d.

In this embodiment, a speaker is provided in the inner cavity of the earplug inner cover 311a, and a voice from the speaker may pass through the voice-emitting through holes 311d to enter a human ear (descriptions are further provided below). An end that is of the earplug inner cover 311a and on which the voice-emitting through holes 311d are formed may be of an ear scale-proof structure, and the ear scale-proof structure can reduce or prevent ear scale from entering the speaker.

As shown in FIG. 109, a slot 311g may be further formed on an inner wall of the earplug inner cover 311a, the slot 311g encloses a circle, and the slot 311g may be far away from the voice-emitting through holes 311d. The slot 311g is configured to match the first skirt edge 316v of the earplug support 316b, so that the earplug inner cover 311a is mounted to the earplug support 316b (a detailed assembly structure is further described below).

As shown in FIG. 108 and FIG. 109, several second bumps 311c may be provided on a surface of an end that is of the earplug inner cover 311a and that is far away from the voice-emitting through holes 311d, and these second bumps 311c may be spaced from each other and enclose a circle.

As shown in FIG. 107 to FIG. 109, the earplug outer cover 311b may be roughly a hollow rotary body with openings at two ends. An end of the earplug outer cover 311b in an axial direction may be fixedly connected to the end that is of the earplug inner cover 311a and on which the voice-emitting through holes 311d are formed. The earplug outer cover 311b may surround a periphery of the earplug inner cover 311a. Several first bumps 311f may be provided on an inner wall of the other end of the earplug outer cover 311b in the axial direction. These second bumps 311c may be spaced from each other and enclose a circle.

In this embodiment, the earplug inner cover 311a may be made of a harder material that is not easy to deform, to form a reliable connection to the earplug support 316b, and accommodate and protect the earplug support 316b. The earplug outer cover 311b may be made of a softer material that is easy to deform, to be attached to and adapt to an ear canal.

### Second electrode 314

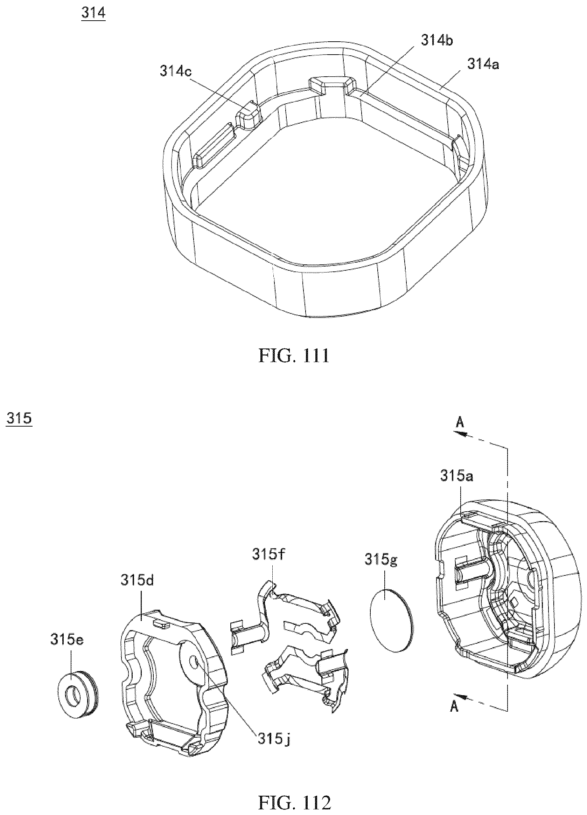

As shown in FIG. 111, the second electrode 314 may include an electrode body 314a, an inner bearing platform 314b, and a conduction portion 314c. The electrode body 314a may be roughly of a ring structure surrounding the center line of the first earphone 31. The inner bearing platform 314b is located on an inner side of the electrode body 314a, and the inner bearing platform 314b may surround the electrode body 314a. The conduction portion 314c may be roughly columnar, and the conduction portion 314c may be located on the inner side of the electrode body 314a, and may protrude from the inner bearing platform 314b. The second electrode 314 may be made of a conductive material, for example, a metal material.

With reference to FIG. 111 and FIG. 88, the second electrode 314 may be connected to the earphone front housing 313z. The electrode body 314a of the second electrode 314 matches the third part 313c of the earphone front housing 313z. The conduction portion 314c of the second electrode 314 may be electrically connected to a circuit board (descriptions are provided below) that is located in the second electrode 314 and that is in a second earphone circuit board assembly 317g, so that the second electrode 314 is used as another charging electrode. Descriptions of a detailed assembly structure are further provided below.

### Earphone rear-housing assembly 315

As shown in FIG. 112, FIG. 113, and FIG. 114, the earphone rear-housing assembly 315 may include an earphone rear housing 315a, a first primary microphone mesh 315g, an antenna 315f, a rear housing support 315d, and a second primary microphone mesh 315e. The first primary microphone mesh 315g, the antenna 315f, the rear housing support 315d, and the second primary microphone mesh 315e may all be accommodated on an inner side of the earphone rear housing 315a.

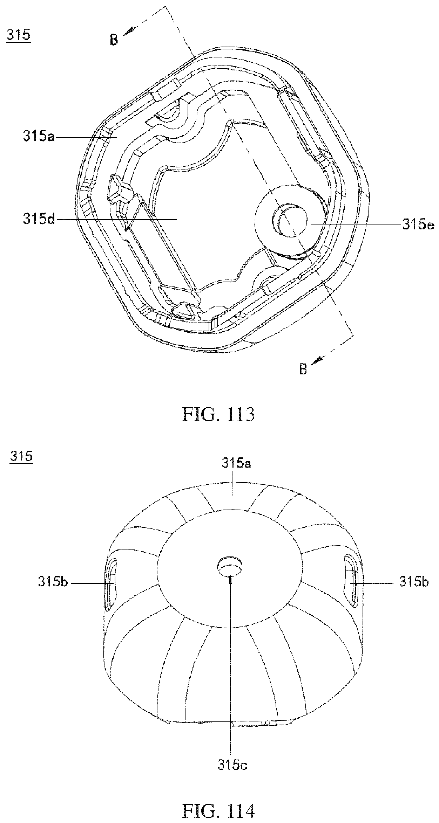

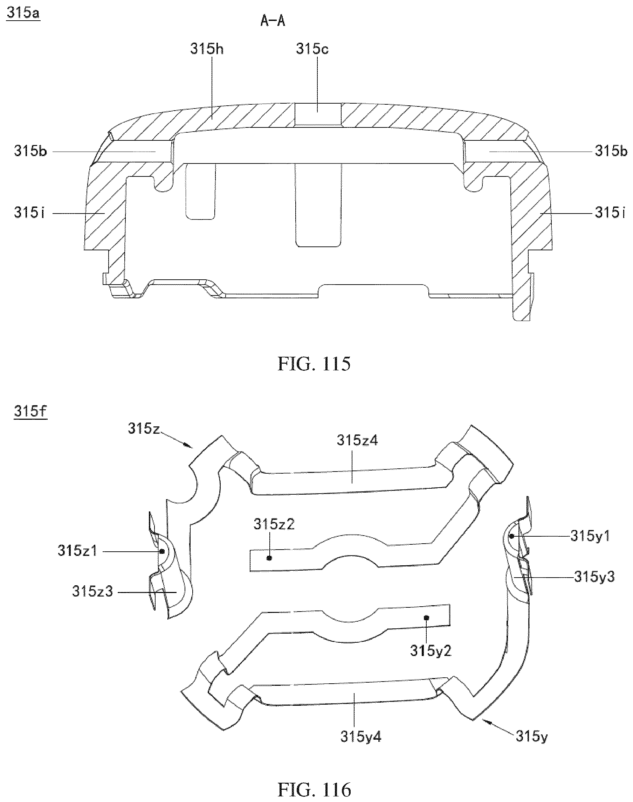

As shown in FIG. 113, FIG. 114, and FIG. 115 (FIG. 115 is a schematic diagram of an A-A sectional structure of the earphone rear housing 315a in FIG. 112), the earphone rear housing 315a may be roughly in a bowl shape. The earphone rear housing 315a may include a bottom wall 315h and a circumferential side wall 315i surrounding a circumferential edge of the bottom wall 315h, and the circumferential side wall 315i and the bottom wall 315h form an open cavity. A voice pickup through hole 315c may be provided on the bottom wall 315h, and the voice pickup through hole 315c communicates with an inner cavity of the earphone rear housing 315a. Several wind noise prevention through holes 315b may be provided on the circumferential side wall 315i, and the wind noise prevention through holes 315b are connected to the inner cavity of the earphone rear housing 315a. For example, there may be two wind noise prevention through holes 315b, and the two wind noise prevention through holes 315b may be basically symmetrically distributed on two sides of the voice pickup through hole 315c. Alternatively, a quantity of wind noise prevention through holes 315b may be greater than or equal to 2, for example, three or four, and these wind noise prevention through holes 315b may be disposed at a spacing.

### Antenna 315f

In this embodiment, the antenna 315f may be a common-mode antenna, and may include two antenna branches that are physically separated but can work in a coupled manner. The two antenna branches are coupled to enable the antenna 315f to work in a specified frequency band. The antenna 315f may be, for example, a Bluetooth antenna, and the specified frequency band may be, for example, 2.4 GHz.

As shown in FIG. 116, in an implementation 1 of this embodiment, the antenna 315f may include a first antenna branch 315z and a second antenna branch 315y. The first antenna branch 315z and the second antenna branch 315y each may be roughly of a bent narrow-strip structure.

As shown in FIG. 116, the first antenna branch 315z may include a first segment 315z3 and a second segment 315z4, and the first segment 315z3 and the second segment 315z4 are bent and connected. For example, the first segment 315z3 and the second segment 315z4 may be roughly perpendicular to each other. An end that is of the first segment 315z3 and that is far away from the second segment 315z4 is referred to as a head end 315z1, and an end that is of the second segment 315z4 and that is far away from the first segment 315z3 is referred to as a tail end 315z2. In other words, the head end 315z1 and the tail end 315z2 are respectively two opposite ends of the first antenna branch 315z. The first segment 315z3 may be roughly in a straight-line shape, and the second segment 315z4 may be in a bent shape.

As shown in FIG. 116, similarly, the second antenna branch 315y may include a third segment 315y3 and a fourth segment 315y4, and the third segment 315y3 and the fourth segment 315y4 are bent and connected. For example, the third segment 315y3 and the fourth segment 315y4 may be roughly perpendicular to each other. An end that is of the third segment 315y3 and that is far away from the fourth segment 315y4 is referred to as a head end 315y1, and an end that is of the fourth segment 315y4 and that is far away from the third segment 315y3 is referred to as a tail end 315y2. In other words, the head end 315y1 and the tail end 315y2 are respectively two opposite ends of the second antenna branch 315y. The third segment 315y3 may be roughly in a straight-line shape, and the fourth segment 315y4 may be in a bent shape. As shown in FIG. 116, the first antenna branch 315z and the second antenna branch 315y may be basically centrally symmetric. In other words, the first antenna branch 315z basically overlaps the second antenna branch 315y after being rotated around a center by 180°. For an entire region occupied by the first antenna branch 315z and the second antenna branch 315y, from the head end 315z1 to the tail end 315z2 of the first antenna branch 315z, the first antenna branch 315z is bent and extends along an outward-inward path (for example, in a perspective of FIG. 116, the first antenna branch 315z is bent in the clockwise direction); and from the head end 315y1 to the tail end 315y2 of the second antenna branch 315y, the second antenna branch 315y is bent and extends along an outward-inward path (for example, in the perspective of FIG. 116, the second antenna branch 315y is bent in the clockwise direction). The head end 315z1 and the head end 315y1 are on an outer side, and the head end 315z1 is far away from the head end 315y1. Both the tail end 315z2 and the tail end 315y2 are located between the head end 315z1 and the head end 315y1, the tail end 315z2 is close to the tail end 315y2, and the tail end 315z2 and the tail end 315y2 are coupled, so that the antenna 315f works in the 2.4G frequency band.

In the following descriptions, both the head end 315z1 and the head end 315y1 are connected to a feeding point on a circuit board of a third earphone circuit board assembly 317h in the electronic assembly 317, so that both the first antenna branch 315z and the second antenna branch 315y can receive and send signals. The two feeding points may be symmetric with respect to the center line of the first earphone 31.

With reference to FIG. 116, FIG. 112, and FIG. 115, in the implementation 1, the antenna 315f may be disposed on an inner wall of the earphone rear housing 315a, both the head end 315z1 and the head end 315y1 may be located on an inner surface of the circumferential side wall 315i of the earphone rear housing 315a, and both the tail end 315z2 and the tail end 315y2 may be located on an inner surface of the bottom wall 315h of the earphone rear housing 315a. For the first antenna branch 315z, from the head end 315z1 to the tail end 315z2, the second segment 315z4 of the first antenna branch 315z may extend roughly in a direction from the circumferential side wall 315i to the bottom wall 315h; and for the second antenna branch 315y, from the head end 315y1 to the tail end 315y2, the fourth segment 315y4 of the second antenna branch 315y may also extend roughly in the direction from the circumferential side wall 315i to the bottom wall 315h.

The antenna 315f may be, for example, formed on the inner wall of the earphone rear housing 315a by using a laser direct structuring (laser direct structuring, LDS) technique. In other words, the antenna 315f may be, for example, an LDS antenna.

Different wearing angles of the first earphone 31 in the ear canal enable the first antenna branch 315z to be closer to the human body, or the second antenna branch 315y to be closer to the human body. Antenna performance of an antenna branch closer to the human body deteriorates (for example, antenna efficiency is lower), and signal quality of the antenna deteriorates.

Therefore, when the first earphone 31 works at different wearing angles, the first earphone 31 may detect which antenna branch of the antenna 315f has better signal quality, select the antenna branch (an antenna branch that is farther away from the human body) with better signal quality as a feeding end, and use the other antenna branch as a grounding end. For example, a received signal strength (received signal strength indicator, RSSI) value may be detected to determine signal quality of the antenna branch. A controller and a switch circuit may be built in the first earphone 31. The controller is configured to: determine an antenna branch with better signal quality; and switch, through the switch circuit, the antenna branch as the feeding end, and an antenna branch with worse signal quality as the grounding end. For example, the controller may be disposed on the circuit board in the second earphone circuit board assembly 317g (descriptions are provided below). For example, the switch circuit may be disposed on the circuit board in the third earphone circuit board assembly 317h (descriptions are provided below). It may be understood that positions of the controller and the switch circuit may be designed based on a requirement, and are not limited to the foregoing descriptions.

For example, when the first earphone 31 is worn at a first wearing angle, the second antenna branch 315y is farther away from the human body. The first earphone 31 may detect that signal quality of the second antenna branch 315y is better, select the second antenna branch 315y as the feeding end, and use the first antenna branch 315z as the grounding end. Alternatively, when the first earphone 31 is worn at a second wearing angle, the first antenna branch 315z is farther away from the human body. The first earphone 31 may detect that signal quality of the first antenna branch 315z is better, select the first antenna branch 315z as the feeding end, and use the second antenna branch 315y as the grounding end.

According to the antenna 315f in this implementation, two antenna branches that are centrally symmetrically distributed and work in a coupled manner are designed, so that antenna performance of the first earphone 31 can be ensured when the user wears the first earphone 31 at different wearing angles, thereby ensuring communication quality of the first earphone 31 and ensuring user experience.

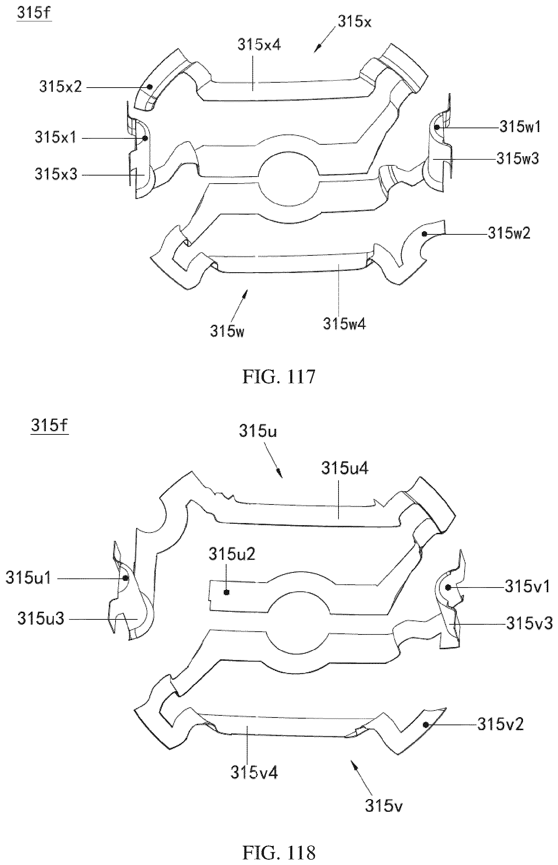

As shown in FIG. 117, in an implementation 2 of this embodiment, the antenna 315f may include a first antenna branch 315x and a second antenna branch 315w. The first antenna branch 315x and the second antenna branch 315w each may be roughly of a bent narrow-strip structure.

As shown in FIG. 117, the first antenna branch 315x may include a first segment 315x3 and a second segment 315x4, and the first segment 315x3 and the second segment 315x4 are bent and connected. For example, the first segment 315x3 and the second segment 315x4 may be roughly perpendicular to each other. An end that is of the first segment 315x3 and that is far away from the second segment 315x4 is referred to as a head end 315x1, and an end that is of the second segment 315x4 and that is far away from the first segment 315x3 is referred to as a tail end 315x2. In other words, the head end 315x1 and the tail end 315x2 are respectively two opposite ends of the first antenna branch 315x. The first segment 315x3 may be roughly in a straight-line shape, and the second segment 315x4 may be in a bent shape.

As shown in FIG. 117, similarly, the second antenna branch 315w may include a third segment 315w3 and a fourth segment 315w4, and the third segment 315w3 and the fourth segment 315w4 are bent and connected. For example, the third segment 315w3 and the fourth segment 315w4 may be roughly perpendicular to each other. An end that is of the third segment 315w3 and that is far away from the fourth segment 315w4 is referred to as a head end 315w1, and an end that is of the fourth segment 315w4 and that is far away from the third segment 315w3 is referred to as a tail end 315w2. In other words, the head end 315w1 and the tail end 315w2 are respectively two opposite ends of the second antenna branch 315w. The third segment 315w3 may be roughly in a straight-line shape, and the fourth segment 315w4 may be in a bent shape.

As shown in FIG. 117, the first antenna branch 315x and the second antenna branch 315w may be basically centrally symmetric.

Different from those in the implementation 1, in the implementation 2, for an entire region occupied by the first antenna branch 315x and the second antenna branch 315w, from the head end 315x1 to the tail end 315x2 of the first antenna branch 315x, the first antenna branch 315x is bent and extends along an inward-outward path (for example, in a perspective of FIG. 117, the first antenna branch 315x is bent in a counterclockwise direction); and from the head end 315w1 to the tail end 315w2 of the second antenna branch 315w, the second antenna branch 315w is bent and extends along an inward-outward path (for example, in the perspective of FIG. 117, the second antenna branch 315w is bent in the counterclockwise direction). The head end 315x1, the tail end 315x2, the head end 315w1, and the tail end 315w2 are all on an outer side. The head end 315x1 is close to the head end 315w1, and coupling is generated, so that the antenna 315f works in the 2.4G frequency band.

As shown in FIG. 117, FIG. 112, and FIG. 115, in the implementation 2, the antenna 315f may be disposed on the inner wall of the earphone rear housing 315a. Both the head end 315x1 and the head end 315w1 may be located on an inner surface of the circumferential side wall 315i of the earphone rear housing 315a. Both the tail end 315x2 and the tail end 315w2 may be located on an inner surface of the bottom wall 315h of the earphone rear housing 315a, and may be close to the circumferential side wall 315i. Different from those in the implementation 1, for the first antenna branch 315x, from the head end 315x1 to the tail end 315x2, the second segment 315x4 of the first antenna branch 315x may extend roughly in a direction from the bottom wall 315h to the circumferential side wall 315i; and for the second antenna branch 315w, from the head end 315w1 to the tail end 315w2, the fourth segment 315w4 of the second antenna branch 315w may also extend roughly in the direction from the bottom wall 315h to the circumferential side wall 315i.

The implementation 2 provides another topology structure of the antenna 315f, to meet an antenna design requirement of the first earphone 31.

As shown in FIG. 118, in an implementation 3 of this embodiment, the antenna 315f may include a first antenna branch 315u and a second antenna branch 315v. The first antenna branch 315u and the second antenna branch 315v each may be roughly of a bent narrow-strip structure.

As shown in FIG. 118, the first antenna branch 315u may include a first segment 315u3 and a second segment 315u4, and the first segment 315u3 and the second segment 315u4 are bent and connected. For example, the first segment 315u3 and the second segment 315u4 may be roughly perpendicular to each other. An end that is of the first segment 315u3 and that is far away from the second segment 315u4 is referred to as a head end 315u1, and an end that is of the second segment 315u4 and that is far away from the first segment 315u3 is referred to as a tail end 315u2. In other words, the head end 315u1 and the tail end 315u2 are respectively two opposite ends of the first antenna branch 315u. The first segment 315u3 may be roughly in a straight-line shape, and the second segment 315u4 may be in a bent shape.

As shown in FIG. 118, similarly, the second antenna branch 315v may include a third segment 315v3 and a fourth segment 315v4, and the third segment 315v3 and the fourth segment 315v4 are bent and connected. For example, the third segment 315v3 and the fourth segment 315v4 may be roughly perpendicular to each other. An end that is of the third segment 315v3 and that is far away from the fourth segment 315v4 is referred to as a head end 315v1, and an end that is of the fourth segment 315v4 and that is far away from the third segment 315v3 is referred to as a tail end 315v2. In other words, the head end 315v1 and the tail end 315v2 are respectively two opposite ends of the second antenna branch 315v. The third segment 315v3 may be roughly in a straight-line shape, and the fourth segment 315v4 may be in a bent shape.

Different from those in the implementation 1, in the implementation 3, for an entire region occupied by the first antenna branch 315u and the second antenna branch 315v, from the head end 315u1 to the tail end 315u2 of the first antenna branch 315u, the first antenna branch 315u is bent and extends along an outward-inward path (for example, in a perspective of FIG. 118, the first antenna branch 315u is bent in the clockwise direction); and from the head end 315v1 to the tail end 315v2 of the second antenna branch 315v, the second antenna branch 315v is bent and extends along an inward-outward path (for example, in the perspective of FIG. 118, the second antenna branch 315v is bent in a counterclockwise direction). The head end 315u1, the head end 315v1, and the tail end 315v2 are all on an outer side, and the tail end 315u2 is on an inner side. The tail end 315u2 is close to the head end 315v1, and coupling is generated, so that the antenna 315f works in the 2.4G frequency band.

As shown in FIG. 117, FIG. 112, and FIG. 115, in the implementation 3, the antenna 315f may be disposed on the inner wall of the earphone rear housing 315a. Both the head end 315u1 and the head end 315v1 may be located on an inner surface of the circumferential side wall 315i of the earphone rear housing 315a. Both the tail end 315u2 and the tail end 315v2 may be located on an inner surface of the bottom wall 315h of the earphone rear housing 315a, and the tail end 315v2 may be further close to the circumferential side wall 315i. Different from those in the implementation 1, for the first antenna branch 315u, from the head end 315u1 to the tail end 315u2, the second segment 315u4 of the first antenna branch 315u may extend roughly in a direction from the circumferential side wall 315i to the bottom wall 315h; and for the second antenna branch 315v, from the head end 315v1 to the tail end 315v2, the fourth segment 315v4 of the second antenna branch 315v may extend roughly in a direction from the bottom wall 315h to the circumferential side wall 315i.

The implementation 3 provides another topology structure of the antenna 315f, to meet an antenna design requirement of the first earphone 31.

The foregoing implementations schematically enumerate three topology structures and three coupling manners of the antenna 315f. Embodiments of this application are actually not limited thereto. Another topology structure and coupling manner of the antenna 315f may alternatively be designed based on a product requirement. For example, from the head end to the tail end, the second segment may extend roughly in the direction from the bottom wall 315h to the circumferential side wall 315i, and the fourth segment may extend roughly in the direction from the circumferential side wall 315i to the bottom wall 315h. The head end of the first antenna branch may be coupled to the tail end of the second antenna branch, so that the antenna 315f works in the specified frequency band.

The foregoing describes three types of schematic topology structures of the antenna 315f. It may be understood that, in this embodiment, a specific structure of the antenna 315f may be designed based on a product requirement, and is not limited to the foregoing descriptions. For ease of description, the antenna 315f in the implementation 1 is used as an example for the following descriptions of content related to the antenna 315f.

### First primary microphone mesh 315g

The first primary microphone mesh 315g may be roughly in a circular sheet shape, and may include several layers of materials, such as an acoustic mesh and an adhesive layer. With reference to FIG. 112 and FIG. 115, the first primary microphone mesh 315g may be fixedly connected to the bottom wall 315h of the earphone rear housing 315a. For example, an adhesive layer in the first primary microphone mesh 315g may be bonded to the bottom wall 315h. In addition, the first primary microphone mesh 315g covers the voice pickup through hole 315c, and a voice entering the voice pickup through hole 315c may pass through the first primary microphone mesh 315g and enter the inner cavity of the earphone rear housing 315a.

### Rear housing support 315d

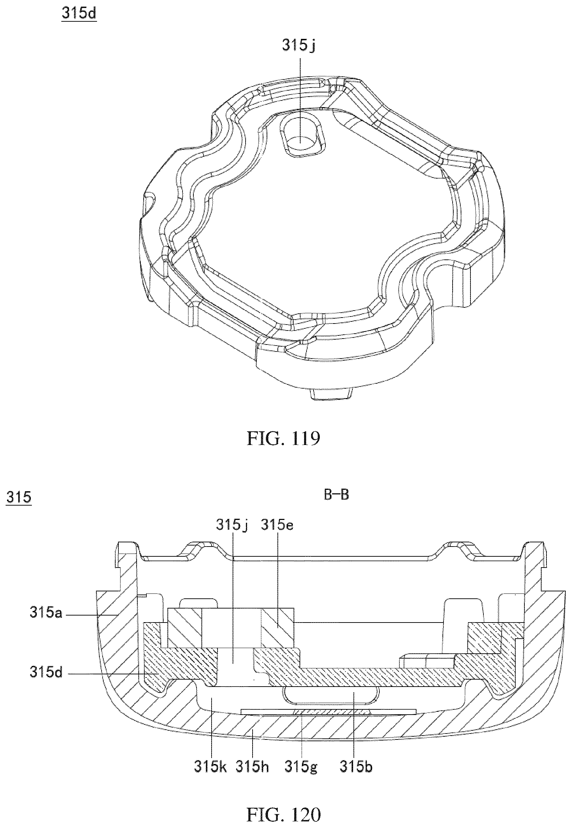

As shown in FIG. 112 and FIG. 119, the rear housing support 315d may be roughly in a cover shape. A through hole 315j may be provided on the rear housing support 315d.

### Second primary microphone mesh 315e

As shown in FIG. 112, the second primary microphone mesh 315e may be roughly in a circular sheet shape, and may include several layers of materials, such as an acoustic mesh, foam, and an adhesive layer. With reference to FIG. 112 and FIG. 119, the second primary microphone mesh 315e may be fastened to one side of the rear housing support 315d. For example, an adhesive layer in the second primary microphone mesh 315e may be bonded to the side of the rear housing support 315d. In addition, the second primary microphone mesh 315e covers the through hole 315j, and a voice entering the through hole 315j may pass through the second primary microphone mesh 315e.

FIG. 120 is a B-B sectional view of the earphone rear-housing assembly 315 in FIG. 113, and FIG. 120 may represent an assembly structure of the earphone rear-housing assembly 315. As shown in FIG. 120, the first primary microphone mesh 315g may be fastened to the inner surface of the bottom wall 315h of the earphone rear housing 315a. With reference to FIG. 120 and FIG. 114, the first primary microphone mesh 315g covers the voice pickup through hole 315c (the voice pickup through hole 315c is not displayed in FIG. 120 due to a position of a sectional surface in FIG. 113). The rear housing support 315d is mounted in the inner cavity of the earphone rear housing 315a, and there is a specific spacing between the rear housing support 315d and each of the bottom wall 315h and the first primary microphone mesh 315g. Therefore, the rear housing support 315d and the earphone rear housing 315a enclose a wind noise prevention cavity 315k. The wind noise prevention through hole 315b is connected to the wind noise prevention cavity 315k.

As shown in FIG. 120, the second primary microphone mesh 315e is located in the inner cavity of the earphone rear housing 315a, the second primary microphone mesh 315e may be fastened to a side that is of the rear housing support 315d and that is far away from the bottom wall 315h, and the second primary microphone mesh 315e covers the through hole 315j of the rear housing support 315d.

The foregoing describes in detail the structures of the earplug 311, the earplug support assembly 316, the first electrode 312, the earphone front-housing assembly 313, the second electrode 314, and the earphone rear-housing assembly 315 in the first earphone 31. The following describes an overall assembly structure including the components.

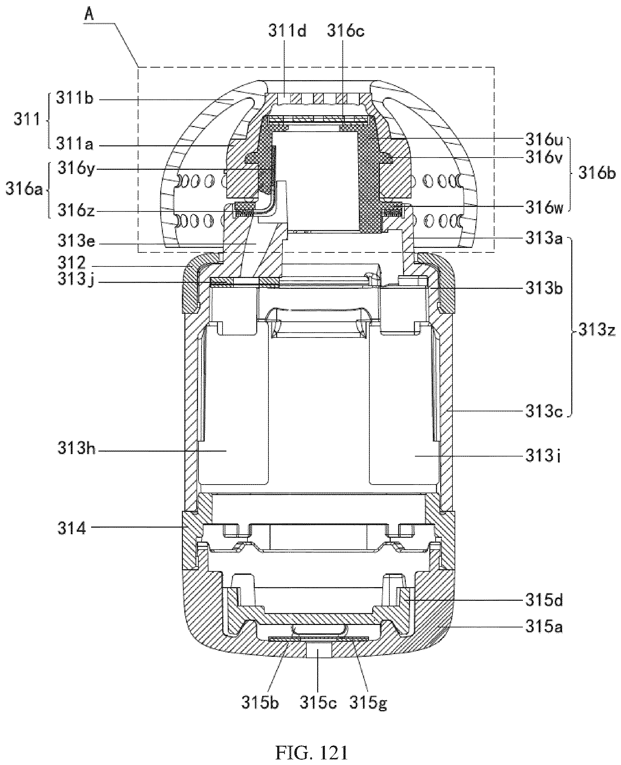

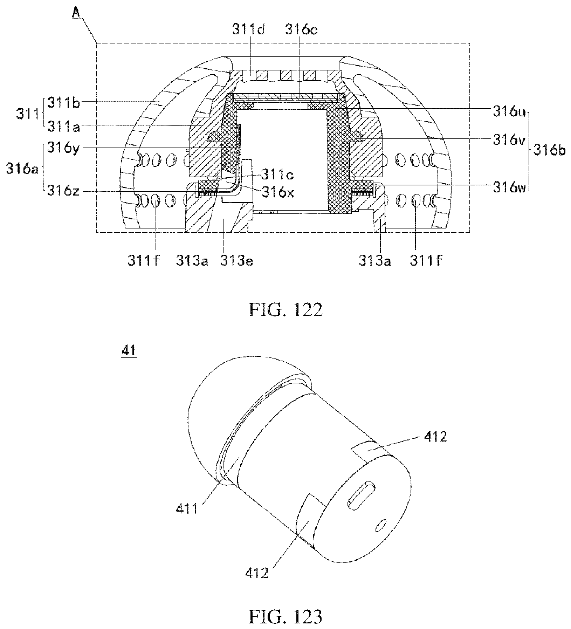

FIG. 121 is a schematic diagram of a sectional structure of the first earphone 31. Some structures are not displayed due to a position selection of a sectional section. FIG. 122 is a partially enlarged schematic diagram at a position A in FIG. 121.

As shown in FIG. 121, the first electrode 312 may match the second part 313b of the earphone front housing 313z. With reference to FIG. 102 and FIG. 87, the conduction portion 312b of the first electrode 312 may pass through the through hole 313d on the second part 313b, and extend into the inner cavity of the earphone front housing 313z.

As shown in FIG. 121 and FIG. 122, the earplug support 316b may match the first part 313a of the earphone front housing 313z. With reference to FIG. 122 and FIG. 90, the second skirt edge 316w of the earplug support 316b may be bonded to the mounting groove 313f of the first part 313a through the fastening region 316z of the front vent acoustic mesh 316a. The support body 316u of the earplug support 316b may extend into the inner cavity of the earphone front housing 313z. In addition, as shown in FIG. 122, the front vent 316x on the earplug support 316b may be close to the voice pickup channel 313e on the earphone front housing 313z, and the blocking region 316y of the front vent acoustic mesh 316a is located between the front vent 316x and the voice pickup channel 313e.

As shown in FIG. 122, the earplug inner cover 311a may be sleeved on a periphery of the earplug support 316b. With reference to FIG. 109 and FIG. 122, the slot 311g of the earplug inner cover 311a may match the first skirt edge 316v of the earplug support 316b, and there may be a specific spacing between the end that is of the earplug inner cover 311a and on which the voice-emitting through holes 311d are provided and the speaker mesh 316c on the earplug support 316b. The second bumps 311c on the earplug inner cover 311a may be in contact with the second skirt edge 316w of the earplug support 316b, so that there is a gap between the earplug inner cover 311a and the second skirt edge 316w, to prevent the earplug inner cover 311a from blocking the front vent 316x near the second skirt edge 316w. It may be understood that the second bumps 311c may be staggered with the front vent 316x, to prevent the second bumps 311c from blocking the front vent 316x.

As shown in FIG. 122, the earplug outer cover 311b surrounds a periphery of the earplug inner cover 311a, a lower end of the earplug outer cover 311b may surround a periphery of the first part 313a of the earphone front housing 313z, and first bumps 311f on the inner wall of the earplug outer cover 311b may also surround the periphery of the first part 313a. Designing the first bumps 311f may increase structural strength of the earplug outer cover 311b, so that when the first earphone 31 is worn by the user, shaking or vibration of the earplug outer cover 311b is reduced, thereby reducing a "stethoscope effect".

As shown in FIG. 121, the second electrode 314 is connected to the third part 313c of the earphone front housing 313z and the earphone rear housing 315a.

In this embodiment, the earplug support assembly 316, the earphone front-housing assembly 313, the second electrode 314, and the earphone rear-housing assembly 315 may enclose the inner cavity of the first earphone 31, and the electronic assembly 317 is accommodated in the inner cavity.

In this embodiment, after the first earphone 31 is placed in position in the third accommodation groove 231f, the first electrode 312 may be in contact with the first charging spring 231e in the third accommodation groove 231f, and the second electrode 314 may be in contact with the second charging spring 231c, so that the host 2 charges the first earphone 31. Because the first electrode 312 and the second electrode 314 each are of a 360-degree closed ring structure, when the first earphone 31 is placed in the third accommodation groove 231f at any angle, the first electrode 312 may always be in contact with the first charging spring 231e, and the second electrode 314 may always be in contact with the second charging spring 231c, to ensure that the host 2 charges the first earphone 31. Such a structure of the first electrode 312 and the second electrode 314 enables the user to place the first earphone 31 in the third accommodation groove 231f at will. This improves user experience.

It is easy to understand that, in another embodiment, one of the first electrode and the second electrode has a 360-degree closed ring structure, and the other electrode is not 360-degree closed, but forms an open ring structure. In this way, it can also be ensured that, on a premise that the first earphone can be charged, the first earphone is randomly placed within a specific angle range.

For example, for the first earphone 41 shown in FIG. 123, the first electrode 411 still has a 360-degree closed ring structure, but there are two or more second electrodes 412, the second electrodes 412 are disposed at a spacing, and the second electrodes 412 may be distributed on a same circle. Each second electrode 412 may be of an open ring structure. Alternatively, in another embodiment, there is a single second electrode 412, and the second electrode 412 is of an open ring structure with a notch. For example, a surrounding angle of the second electrode 412 may be 120 degrees, 180 degrees, 270 degrees, or the like (but less than 360 degrees).

Alternatively, in another embodiment, neither the first electrode nor the second electrode is 360-degree closed, and the first electrode and the second electrode each are of a single open ring structure with a notch. Alternatively, one of the first electrode and the second electrode is of a single open ring structure with a notch, and a quantity of the other electrode is at least two, where the at least two electrodes are disposed at a spacing and distributed on a same circle. Alternatively, there are at least two first electrodes and two second electrodes, and the first electrodes and the second electrodes are disposed at spacings and distributed on a same circle. The design may also ensure that, on the premise that the first earphone can be charged, the first earphone can be randomly placed within a specific angle range.

In this embodiment, the first electrode 312 is electrically connected to the first charging spring 231e, or the second electrode 314 is electrically connected to the second charging spring 231c, and the first electrode 312 or the second electrode 314 may be further configured to implement communication between the first earphone 31 and the host 2. To be specific, the first electrode 312 or the second electrode 314 may be further multiplexed as a communication electrode of the first earphone 31, to implement communication between the first earphone 31 and the host 2.

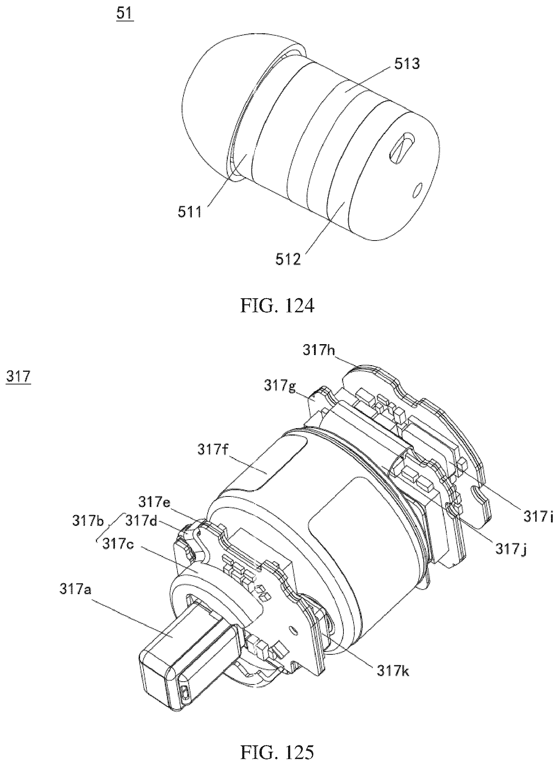

Different from that this embodiment, in another embodiment, as shown in FIG. 124, the first earphone 51 may have a first electrode 512 and a second electrode 512, and the first electrode 512 and the second electrode 512 are dedicated to implementing charging of the first earphone 51 by the host. In addition, the first earphone 51 further has a communication electrode 513, and the communication electrode 513 is dedicated to communication with the host. It may be understood that the first electrode 512, the second electrode 512, and the communication electrode 513 shown in FIG. 124 each are of a 360-degree closed ring structure, and this is merely an example. Actually, structures, quantities, and distribution of first electrodes 512, second electrodes 512, and communication electrodes 513 may all be designed based on a product requirement.

### Electronic assembly 317

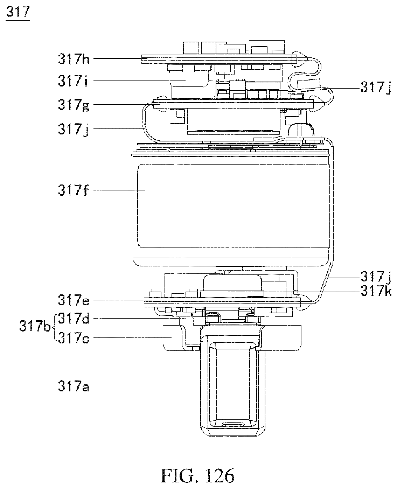

FIG. 125 and FIG. 126 each show a schematic structure of the electronic assembly 317 according to this embodiment. It may be understood that a structure of the electronic assembly 317 to be described below is merely an example, and is not intended to limit embodiments of this application.

As shown in FIG. 125 and FIG. 126, the electronic assembly 317 may include the first earphone circuit board assembly 317e, the second earphone circuit board assembly 317g, the third earphone circuit board assembly 317h, a flexible circuit board 317j, a speaker 317a, a wearing detection plate 317b, a secondary microphone 317k, an earphone battery 317f, and a primary microphone 317i.

### First earphone circuit board assembly 317e, second earphone circuit board assembly 317g, and third earphone circuit board assembly 317h

The first earphone circuit board assembly 317e, the second earphone circuit board assembly 317g, and the third earphone circuit board assembly 317h are sequentially stacked and arranged at spacings, and the three may be electrically connected through the flexible circuit board 317j. The first earphone circuit board assembly 317e, the second earphone circuit board assembly 317g, and the third earphone circuit board assembly 317h each may include a circuit board and a circuit and a component arranged on the circuit board.

For example, a wearing detection sensor may be arranged on the circuit board of the first earphone circuit board assembly 317e, and the wearing detection sensor is configured to implement wearing detection of the first earphone 31. The wearing detection sensor may include, for example, at least one of a gravity sensor (gravity sensor, G-sensor), an inertial measurement unit (inertial measurement unit, IMU) sensor, a bone conduction sensor, an infrared (infrared radiation, IR) sensor, a voice accelerometer (voice accelerometer, VACC), a voice pickup unit (voice pickup unit, VPU), and the like. A magnetic field sensor may be further arranged on the circuit board of the first earphone circuit board assembly 317e, and the magnetic field sensor is configured to detect a variation of a magnetic flux of a host magnet, to implement box-in and box-out detection of the first earphone 31 (a principle of box-in and box-out detection is further described below). The magnetic field sensor is, for example, a Hall effect sensor or a magnetometer. For example, there may be two magnetic field sensors. For example, a charging circuit and a discharging circuit may be arranged on the circuit board of the second earphone circuit board assembly 317g. For example, a radio frequency circuit may be arranged on the circuit board of the third earphone circuit board assembly 317h.

### Speaker 317a

As shown in FIG. 126, the speaker 317a may be electrically connected to the circuit board of the first earphone circuit board assembly 317e. The speaker 317a may be located on a side that is of the first earphone circuit board assembly 317e and that is far away from the second earphone circuit board assembly 317g.

### Wearing detection plate 317b

As shown in FIG. 125 and FIG. 126, the wearing detection plate 317b may include a plate 317c and a connection pin 317d that are connected, and the connection pin 317d is led out from the plate 317c, and may be electrically connected (for example, soldered) to the circuit board of the first earphone circuit board assembly 317e. The plate 317c may be located on a same side of the first earphone circuit board assembly 317e as the speaker 317a. The wearing detection plate 317b can conduct electricity, for example, may be made of a metal material. When the wearing detection plate 317b is close to the human body, a coupling capacitance can be generated. When a distance between the wearing detection plate 317b and the human body changes, a coupling capacitance value changes. Wearing detection of the first earphone 31 may be implemented through detecting and processing of the coupling capacitance value of the wearing detection plate 317b.

### Secondary microphone 317k

As shown in FIG. 125 and FIG. 126, the secondary microphone 317k is located on a side that is of the first earphone circuit board assembly 317e and that is far away from the speaker 317a, and may be electrically connected to the circuit board of the first earphone circuit board assembly 317e. The secondary microphone 317k may be arranged on the circuit board of the first earphone circuit board assembly 317e. A through hole may be provided at a part, corresponding to the secondary microphone 317k, on the circuit board of the first earphone circuit board assembly 317e, and a voice can be picked up by the secondary microphone 317k through the through hole. The secondary microphone 317k is configured to implement noise reduction, and may be further configured to perform wearing detection.

### Earphone battery 317f

As shown in FIG. 125 and FIG. 126, the earphone battery 317f may be located between the first earphone circuit board assembly 317e and the second earphone circuit board assembly 317g. An electrode pin of the earphone battery 317f may be electrically connected to the circuit board of the first earphone circuit board assembly 317e.

### Primary microphone 317i

As shown in FIG. 125 and FIG. 126, the primary microphone 317i may be located between the second earphone circuit board assembly 317g and the third earphone circuit board assembly 317h, and may be electrically connected to the circuit board of the third earphone circuit board assembly 317h. The primary microphone 317i may be arranged on the circuit board of the third earphone circuit board assembly 317h. A through hole may be provided at a position, corresponding to the primary microphone 317i, on the circuit board of the third earphone circuit board assembly 317h, and a human voice may be picked up by the primary microphone 317i through the through hole.

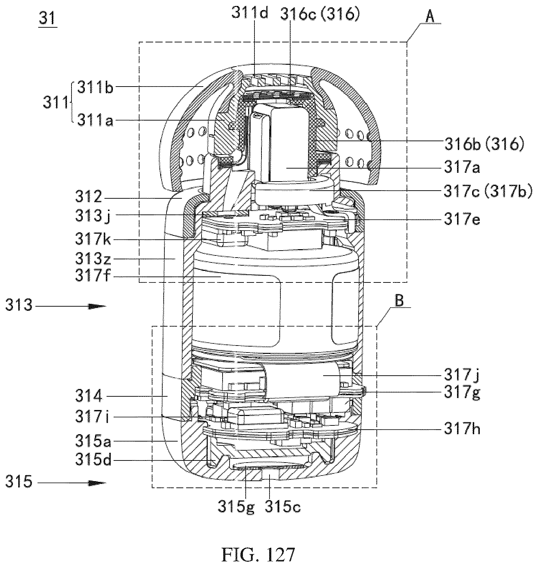

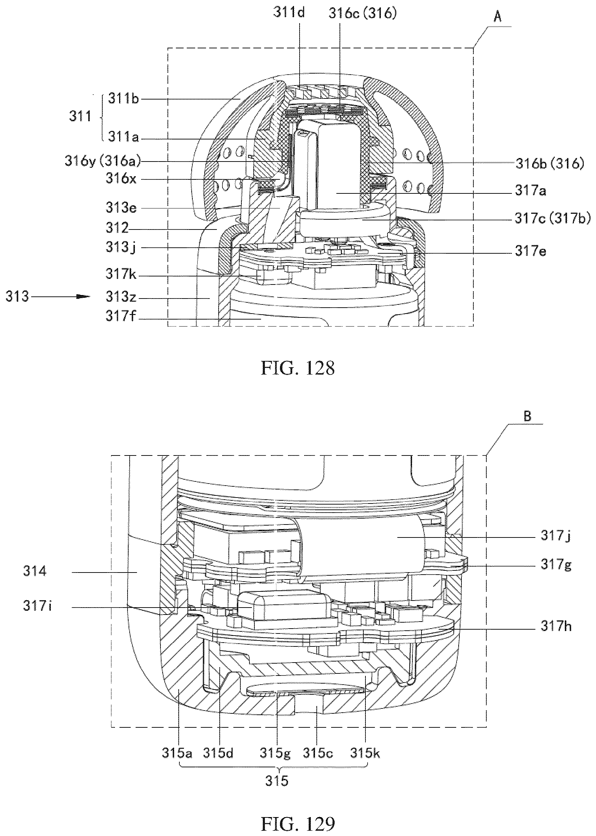

FIG. 127 shows an assembly structure including the electronic assembly 317 and another component of the first earphone 31. FIG. 128 is a partially enlarged schematic diagram at a position A in FIG. 127, and FIG. 129 is a partially enlarged schematic diagram at a position B in FIG. 127.

As shown in FIG. 127, the electronic assembly 317 may be accommodated in an inner cavity enclosed by the earplug support assembly 316, the earphone front-housing assembly 313, the second electrode 314, and the earphone rear-housing assembly 315.

As shown in FIG. 128, at least a part of the speaker 317a may be located in the inner cavity of the earplug support 316b. A sound wave emitted by the speaker 317a may be transmitted through the speaker mesh 316c and the voice-emitting through hole 311d, and enter the ear canal. Because of the front vent 316x, atmospheric pressure in the inner cavity of the earplug support 316b is balanced with external atmospheric pressure, to ensure that the speaker 317a can normally work. In addition, the front vent 316x can also improve a noise reduction depth of the secondary microphone 317k.

As shown in FIG. 128, for example, the plate 317c of the wearing detection plate 317b may be fixedly connected (for example, soldered) to an end that is of the earplug support 316b and that is far away from the speaker mesh 316c, and the wearing detection plate 317b and the earplug support 316b may be connected to form a conductor having a large area. Therefore, both the wearing detection plate 317b and the earplug support 316b may generate coupling capacitances, so that the wearing detection plate 317b and the earplug support 316b may be used for wearing detection. In other words, in addition to providing support and accommodating functions, the earplug support 316b may be further reused as a detection plate for wearing detection.

It may be understood that, based on a product requirement, the assembly structure including the wearing detection plate and the earplug support may alternatively be in another form, and is not limited to the foregoing descriptions. For example, if only a part of the earplug support is made of a conductive material, the wearing detection plate may be fixedly connected to the part of the earplug support, and the assembly structure including the wearing detection plate and the earplug support may be designed based on respective structures of the wearing detection plate and the earplug support and an inner space of the first earphone.

In this embodiment, the wearing detection plate 317b and the earplug support 316b are jointly used as a detection plate for wearing detection, so that an area of the detection plate can be increased, and consistency and reliability of wearing detection can be ensured. Because the earplug support 316b is closer to the inside of the ear canal than the wearing detection plate 317b, capacitance detection data of the earplug support 316b is more accurate and reliable. This helps improve overall reliability of wearing detection. In addition, when the earplug support 316b is reused as a detection plate used for wearing detection, an overall size of the first earphone 31 is not affected, and a stacking space inside the first earphone 31 can be further reduced.

In addition, if the earplug support 316b is manufactured by using a material with high strength such as metal, a wall thickness and an overall structural size of the earplug support 316b may be small on a premise that structural strength of the earplug support 316b meets a requirement. This can enable the earplug outer cover 311b to have a sufficient compression deformation space, thereby helping ensure wearing comfort of the user.

In this embodiment, for example, the wearing detection sensor, the wearing detection plate 317b, and the earplug support 316b may be jointly used to implement wearing detection. This design can greatly improve consistency and reliability of wearing detection, and reduce a probability of false detection.

Based on a product requirement, in another embodiment, any one or any two of the wearing detection sensor, the wearing detection plate 317b, and the earplug support 316b may alternatively be used to implement wearing detection.

As shown in FIG. 128, the first earphone circuit board assembly 317e may be located in the earphone front housing 313z. With reference to FIG. 102, FIG. 87, FIG. 88, and FIG. 128, the conduction portion 312b of the first electrode 312 may pass through the through hole 313d of the earphone front housing 313z, and is electrically connected (for example, soldered) to the circuit board of the first earphone circuit board assembly 317e, so that the first electrode 312 is used as a charging electrode.

As shown in FIG. 128, a side of the circuit board of the first earphone circuit board assembly 317e may be attached to the noise reduction microphone mesh 313j. The secondary microphone 317k is located on the other side of the circuit board, and the secondary microphone 317k may correspond to the noise reduction microphone mesh 313j. Noise in the ear canal may sequentially pass through the speaker mesh 316c, the voice pickup channel 313e, the noise reduction microphone mesh 313j, and the through hole that is on the circuit board of the first earphone circuit board assembly 317e and that corresponds to the secondary microphone 317k, and be picked up by the secondary microphone 317k. The speaker 317a may generate a phase-inverted signal whose phase is opposite to a phase of the noise signal, and the phase-inverted signal may cancel the noise signal. In this way, the first earphone 31 can implement active noise reduction.

When the first earphone 31 works, the voice of the speaker 317a and the noise in the ear canal may pass through the front vent acoustic mesh 316a, and leak to the outside through the front vent 316x. In this way, pressure inside and outside the ear canal can be balanced, to improve wearing comfort of the user. The front vent acoustic mesh 316a that blocks the front vent 316x may alternatively be removed. In this case, the front vent 316x may be made small. For example, a diameter of the front vent 316x is less than 0.22 mm.

In addition, the secondary microphone 317k may also be used for wearing detection, and a principle is that the speaker 317a may send a sound wave signal of a specific frequency. If the first earphone 31 is not worn by the user, a large quantity of sound wave signals may be leaked to the outside through the front vent 316x, and signal strength of the sound wave signals picked up by the secondary microphone 317k is low. If the first earphone 31 is worn by the user, because the front vent 316x is blocked to an extent or completely, the secondary microphone 317k can pick up more sound wave signals, and signal strength of the sound wave signals picked up by the secondary microphone 317k is high. Therefore, whether the first earphone 31 is worn by the user may be determined through detection on signal strength of a signal picked up by the secondary microphone 317k.

As shown in FIG. 129, the second earphone circuit board assembly 317g may be located on an inner side of the second electrode 314. With reference to FIG. 111 and FIG. 129, the conduction portion 314c of the second electrode 314 may be electrically connected (for example, soldered) to the circuit board of the second earphone circuit board assembly 317g, so that the second electrode 314 is used as a charging electrode.

As shown in FIG. 129, the third earphone circuit board assembly 317h may be carried on the rear housing support 315d. With reference to FIG. 129 and FIG. 120, a side that is of the third earphone circuit board assembly 317h and that is far away from the primary microphone 317i may be attached to the second primary microphone mesh 315e. The primary microphone 317i may correspond to the second primary microphone mesh 315e. A voice emitted by the user may sequentially pass through the voice pickup through hole 315c, the first primary microphone mesh 315g, the through hole 315j on the rear housing support 315d, the second primary microphone mesh 315e, and the through hole that is on the circuit board of the third earphone circuit board assembly 317h and that corresponds to the primary microphone 317i, and be picked up by the primary microphone 317i.

With reference to FIG. 129 and FIG. 120, after entering a wind noise prevention cavity 315k from one wind noise prevention through hole 315b, an external airflow may flow out of the wind noise prevention cavity 315k from another wind noise prevention through hole 315b. In this way, wind noise caused by the external airflow can be reduced or prevented from being picked up by the primary microphone 317i.

With reference to FIG. 116 and FIG. 129, the head end 315z1 and the head end 315y1 of the antenna 315f each are connected to, for example, soldered to, a feeding point on the circuit board of the third earphone circuit board assembly 317h. The two feeding points may be symmetric with respect to the center line of the first earphone 31. In this way, the antenna 315f can radiate and receive signals.

### Features and functions of the wearable device 1

In this embodiment, because the wearable device 1 includes the host 2 and the earphone, the wearable device 1 may have the following features and functions. For some features or functions that the host 2 and the earphone both have, because the first earphone (for example, the first earphone 31, the first earphone 41, and the first earphone 51) is completely consistent with the second earphone, for brevity, the first earphone 31 is mainly used as an example for description.

### 1. When the host 2 is opened, the first earphone 31 is attached to the first part 21 of the host 2.

With reference to FIG. 1 and FIG. 4, in this embodiment, when the host 2 is in the closed state, the first earphone 31 is accommodated in a space enclosed by the first accommodation groove 213y of the first part 21 and the third accommodation groove 231f of the second part 23.

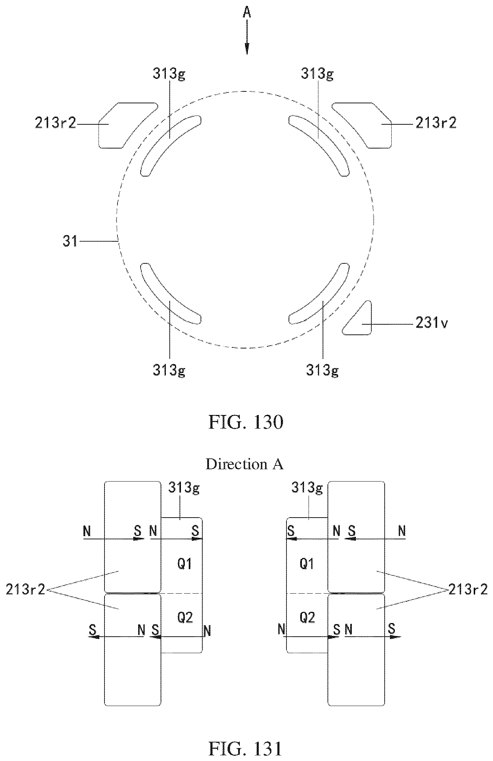

FIG. 130 shows, from a side-view perspective, a position relationship between the first host attachment magnet 213r2 in the first part 21, the second host attachment magnet 231v in the second part 23, and the earphone magnet 313g in the first earphone 31 when the host 2 is in the closed state. As shown in FIG. 130, the first host attachment magnet 213r2 and the second host attachment magnet 231v each are magnetically attracted to the earphone magnet 313g.

In this embodiment, a magnetic field of the first host attachment magnet 213r2 is strong, and a magnetic attraction force between the first host attachment magnet 213r2 and the earphone magnet 313g is large; and a magnetic field of the second host attachment magnet 231v is weak, and a magnetic attraction force between the second host attachment magnet 231v and the earphone magnet 313g is small. Refer to FIG. 1 to FIG. 4. When the host 2 is gradually opened from the closed state, because the magnetic attraction force of the first host attachment magnet 213r2 is greater than the magnetic attraction force of the second host attachment magnet 231v, the first earphone 31 is attached to the first part 21, and rotates with the first part 21 relative to the second part 23.

In this embodiment, to enable a strong magnetic attraction force between the first host attachment magnet 213r2 and the earphone magnet 313g, an appropriate magnet design may be performed.

As shown in FIG. 131, in an implementation 1 of this embodiment, each first host attachment magnet 213r2 is a Halbach array formed by splicing two single magnets, and magnetic field directions (represented by using arrows pointing from N to S) of the two single magnets are different, so that each first host attachment magnet 213r2 has two magnetic field directions. With reference to FIG. 131 and FIG. 130, schematically, in each first host attachment magnet 213r2, a magnetic field direction of one single magnet (for example, a single magnet in an upper part in FIG. 131) roughly points from a radial outer side of the first earphone 31 to a radial inner side, and a magnetic field direction of the other single magnet (for example, a single magnet in a lower part in FIG. 131) roughly points from the radial inner side of the first earphone 31 to the radial outer side.

As shown in FIG. 131, each earphone magnet 313g may be a Halbach array formed by a single magnet, and different parts of each earphone magnet 313g may have different magnetic field directions. With reference to FIG. 131 and FIG. 130, schematically, a magnetic field direction of a part Q1 of each earphone magnet 313g roughly points from the radial outer side of the first earphone 31 to the radial inner side, and a magnetic field direction of the other part Q2 roughly points from the radial inner side of the first earphone 31 to the radial outer side. A design in which each earphone magnet 313g is a single magnet can reduce assembly difficulty of the earphone magnet 313g. In another implementation, each earphone magnet 313g may alternatively be formed by splicing several (for example, two) single magnets.

The design of the first host attachment magnet 213r2 and the earphone magnet 313g enables the first host attachment magnet 213r2 to be magnetically attracted to the earphone magnet 313g. In addition, through product verification, this design enables a large magnetic attraction force between the first host attachment magnet 213r2 and the earphone magnet 313g.

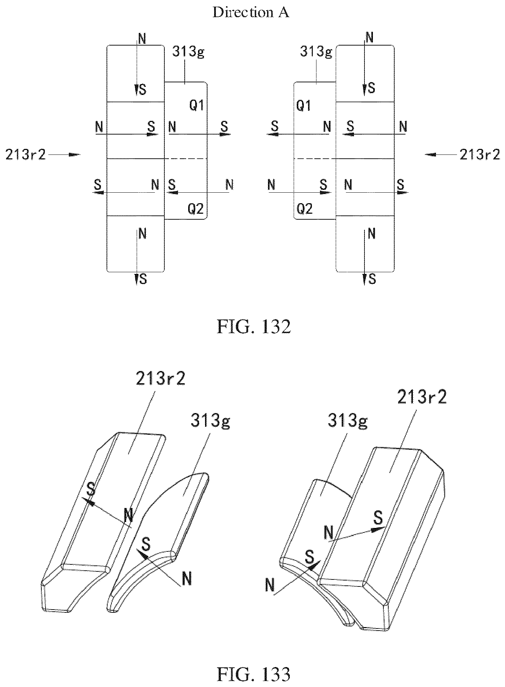

Different from that in the implementation 1, as shown in FIG. 132, in an implementation 2 of this embodiment, each first host attachment magnet 213r2 is a Halbach array having four magnetic field directions. Each first host attachment magnet 213r2 may be formed by splicing four single magnets, or may be a single magnet having four magnetic field directions. The magnet design in the implementation 2 can meet a design requirement that the first earphone 31 is magnetically attracted to the first part 21.

Different from that in the implementation 1, as shown in FIG. 133, in an implementation 3 of this embodiment, each first host attachment magnet 213r2 is a single magnet having a single magnetic field direction. For example, the magnetic field direction of each first host attachment magnet 213r2 may roughly point from the radial inner side of the first earphone 31 to the radial outer side. Each earphone magnet 313g is a single magnet having a single magnetic field direction. For example, the magnetic field direction of each earphone magnet 313g may roughly point from the radial inner side of the first earphone 31 to the radial outer side. The magnet design in the implementation 3 can meet a design requirement that the first earphone 31 is magnetically attracted to the first part 21.

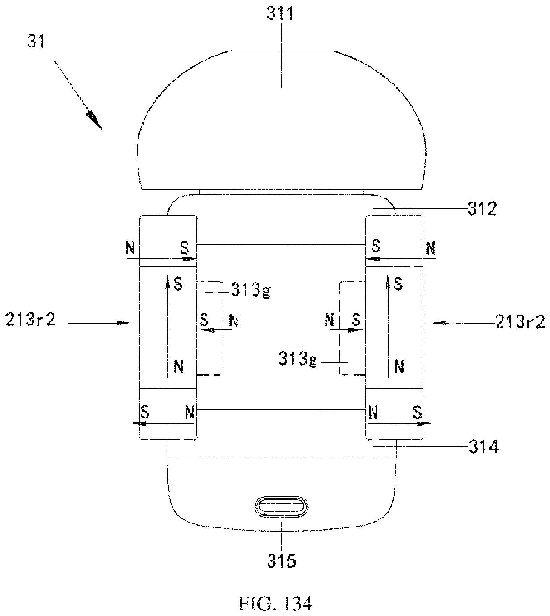

Different from that in the implementation 1, as shown in FIG. 134, in an implementation 4 of this embodiment, each first host attachment magnet 213r2 is a Halbach array having three magnetic field directions. Each first host attachment magnet 213r2 may be formed by splicing three single magnets, or may be a single magnet having three magnetic field directions. Each earphone magnet 313g may have a single magnetic field direction. In addition, the first electrode 312 and the second electrode 314 may be manufactured by using a material that can be magnetically attracted by the first host attachment magnet 213r2, for example, a magnetic conductive material (for example, steel plate cold common (steel plate cold common, SPCC) or SUS430). Both the first electrode 312 and the second electrode 314 may be magnetically attracted to the first host attachment magnet 213r2. The magnet design in the implementation 4 can not only meet a design requirement that the first earphone 31 is magnetically attracted to the first part 21, but also has a simple design structure, is easy to be manufactured, and has low costs.

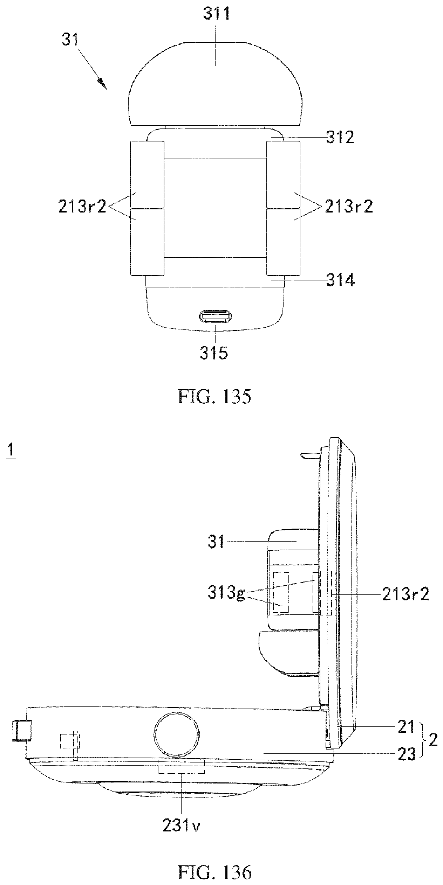

Alternatively, different from that in the implementations, in an implementation 5, the first earphone 31 may not need to have a built-in earphone magnet. The first electrode 312 and the second electrode 314 may be manufactured by using a material that can be magnetically attracted by the first host attachment magnet 213r2, for example, a magnetic conductive material (for example, SPCC or SUS430). As shown in FIG. 135, both the first electrode 312 and the second electrode 314 may be magnetically attracted to the first host attachment magnet 213r2. In the implementation 5, the first host attachment magnet 213r2 may be flexibly designed based on a requirement, and may have a single magnetic field direction or several magnetic field directions. The magnet design in the implementation 5 can not only meet a design requirement that the first earphone 31 is magnetically attracted to the first part 21, but also has a simple design structure, is easy to be manufactured, and has low costs.

In this embodiment, as shown in FIG. 136, because the radial size of the first earphone 31 may be at least twice the groove depth of the first accommodation groove 213y, a majority of the first earphone 31 is exposed outside the first accommodation groove 213y. This design is convenient for the user to directly take the first earphone 31 from the first part 21 after the host 2 is opened.

In the foregoing implementations, the magnet design of the first host attachment magnet 213r2 and the earphone magnet 313g is described. Actually, a magnet design may also be performed on the second host attachment magnet 231v and the earphone magnet 313g with reference to the foregoing principle, provided that magnetic field strength of the second host attachment magnet 231v is less than magnetic field strength of the first host attachment magnet 213r2.

It may be understood from the foregoing descriptions that, based on a product requirement, in another embodiment, magnetic field strength of the first host attachment magnet 213r2 may alternatively be less than magnetic field strength of the second host attachment magnet 231v, so that after the host 2 is opened, the first earphone 31 is not sucked up by the first part 21, but is still accommodated in the second part 23. Alternatively, no first accommodation groove is provided on the first part of the host, and the first earphone may be attached to the first part after the host is opened.

### 2. When the first earphone 31 is placed on the first part 21, the first earphone 31 may be automatically placed in position.

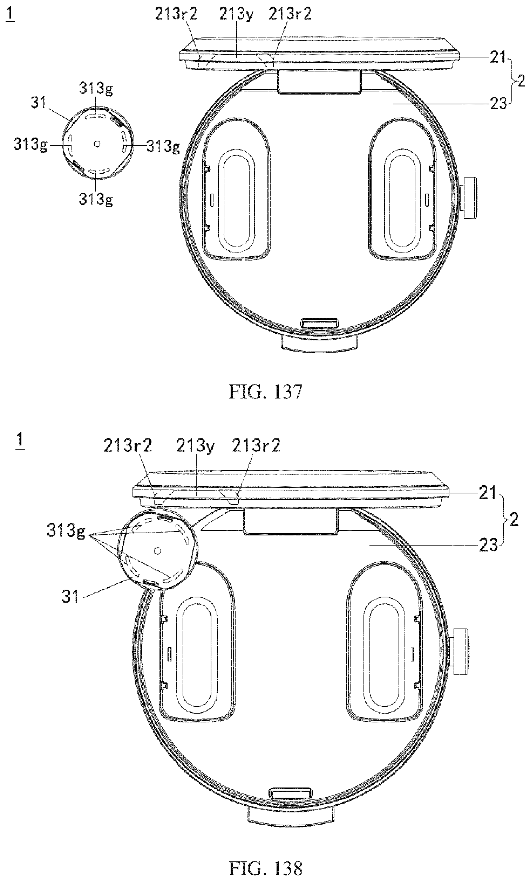

As shown in FIG. 137, FIG. 138, and FIG. 139, after the host 2 is opened and the first earphone 31 is taken out from the host 2, the user may pick up the first earphone 31 and enable the first earphone 31 to be in a posture roughly matching the first accommodation groove 213y (to be specific, the earplug 311 of the first earphone 31 roughly faces an end that is of the first accommodation groove 213y and that is used to accommodate the earplug 311, the earphone rear-housing assembly 315 of the first earphone 31 roughly faces an end that is of the first accommodation groove 213y and that is used to accommodate the earphone rear-housing assembly 315, and the first earphone 31 may rotate around the center line of the first accommodation groove 213y at any angle), and then put the first earphone 31 close to the first accommodation groove 213y. Under an effect of the magnetic attraction force of the first host attachment magnet 213r2 in the first part 21 on the earphone magnet 313g in the first earphone 31, the first earphone 31 is corrected to a posture matching the first accommodation groove 213y, and is automatically adsorbed in the first accommodation groove 213y, so that the first earphone 31 can be accurately and appropriately placed in the first accommodation groove 213y.

According to the automatic in-position design in this embodiment, the user can conveniently place the first earphone 31 on the host 2, and the placement can be completed without precise alignment, thereby improving user experience.

### 3. When the first earphone 31 is placed in the second part 23, and the first earphone 31 is not easy to be separated from the second part 23.

If the user places the first earphone 31 in the third accommodation groove 231f of the second part 23, the first earphone 31 is adsorbed in the third accommodation groove 231f under an effect of the magnetic attraction force of the second host attachment magnet 231v in the second part 23 on the earphone magnet 313g in the first earphone 31. Even if the host 2 is turned over, the first earphone 31 is not detached from the third accommodation groove 231f.

In addition, both the second charging spring 231c and the first charging spring 231e in the third accommodation groove 231f may apply specific extrusion pressure to the first earphone 31, and the extrusion pressure can increase friction between the first earphone 31 and the second host housing 231 in the second part 23, so that it is more difficult for the first earphone 31 to be detached from the third accommodation groove 231f.

### 4. The first earphone 31 may be placed in the accommodation groove at a random angle.

In this embodiment, the first earphone 31 can overlap the first earphone 31 each time the first earphone 31 is rotated around the center line of the first earphone 31 by a specific angle. Therefore, the rotated first earphone 31 can always be accurately accommodated in the first accommodation groove 213y or the third accommodation groove 231f, and adapt to the inner wall of the first accommodation groove 213y or the third accommodation groove 231f. This enables the user to place the first earphone 31 into the first accommodation groove 213y or the third accommodation groove 231f without holding the first earphone 31 at a fixed angle.

For example, for the first earphone 31 that is roughly octahedron, the first earphone 31 can overlap the first earphone 31 each time the first earphone 31 is rotated around the center line of the first earphone 31 by 90°. Even if the user rotates the first earphone 31 by 90°, 180°, 270°, or the like, the first earphone 31 can still adapt to the inner wall of the first accommodation groove 213y or the third accommodation groove 231f. Therefore, the first earphone 31 can be smoothly and accurately placed in the first accommodation groove 213y or the third accommodation groove 231f. In addition, with reference to FIG. 137 to FIG. 139, when the first earphone 31 is placed in the first accommodation groove 213y, because the magnetic force of the first host attachment magnet 213r2 has an angle correction function, even if the user rotates the first earphone 31 randomly (for example, rotates 10°, 35°, or 55°), the magnetic force of the first host attachment magnet 213r2 can correct an angle of the first earphone 31 to a normal angle. In this way, the first earphone 31 can be smoothly and accurately placed into the first accommodation groove 213y, and adapt to the inner wall of the first accommodation groove 213y.

For example, for the first earphone 31 that is roughly cylindrical, the first earphone 31 can overlap the first earphone 31 after being rotated around the center line of the first earphone 31 by any angle. Therefore, even if the user rotates the first earphone 31 by any angle, the first earphone 31 can still adapt to the inner wall of the first accommodation groove or the third accommodation groove. In this way, the first earphone 31 can be smoothly and accurately placed in the first accommodation groove or the third accommodation groove.

### 5. Detection of the open/closed state of the host 2

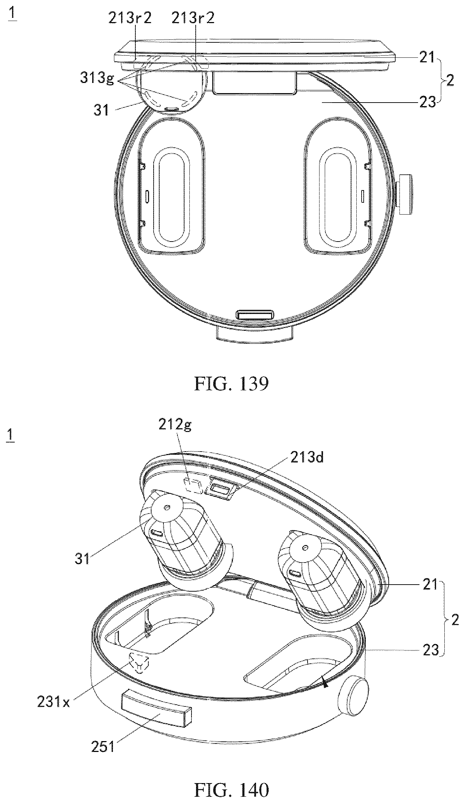

As shown in FIG. 140, the first part 21 of the host 2 has a magnetic field sensor 212g (which may be referred to as a first magnetic field sensor), and the magnetic field sensor 212g may be, for example, disposed on the circuit board 212a in the first part 21. The magnetic field sensor 212g is configured to detect a magnetic flux of the state detection magnet 231x in the second part 23 of the host 2. The magnetic flux of the state detection magnet 231x detected by the magnetic field sensor 212g may be in direct proportion to a spacing between the magnetic field sensor 212g and the state detection magnet 231x. When the host 2 is in the closed state, the magnetic flux detected by the magnetic field sensor 212g is the largest. When the host 2 is completely opened, the magnetic flux detected by the magnetic field sensor 212g is the smallest.

In this embodiment, the magnetic field sensor 212g may be, for example, a Hall effect sensor or a magnetometer. The Hall effect sensor can detect a change of the magnetic flux. When the Hall effect sensor detects that the magnetic flux exceeds a hardware threshold of the Hall effect sensor, the Hall effect sensor can generate a corresponding signal and report the signal to a processor of the host 2. The processor of the host 2 may perform corresponding processing based on the signal of the Hall effect sensor. Different from the Hall effect sensor, the magnetometer can detect a value of the magnetic flux and report the value to the processor of the host 2. The processor of the host 2 may determine whether the magnetic flux detected by the magnetometer exceeds a software threshold built in the processor, and perform corresponding processing based on a determining result. The following uses an example in which the magnetic field sensor 212g is a Hall effect sensor for description.

As shown in FIG. 140, after the user presses the cap 251, the host 2 is gradually opened from the closed state, the spacing between the magnetic field sensor 212g and the state detection magnet 231x gradually increases, and the magnetic flux of the state detection magnet 231x detected by the magnetic field sensor 212g tends to decrease. When the magnetic flux detected by the magnetic field sensor 212g is less than a first threshold, a first signal may be generated. The processor of the host 2 determines, based on the first signal, that the host 2 is in the open state.

On the contrary, when the host 2 is gradually closed from the open state, the spacing between the magnetic field sensor 212g and the state detection magnet 231x gradually decreases, and the magnetic flux of the state detection magnet 231x detected by the magnetic field sensor 212g tends to increase. When the magnetic flux detected by the magnetic field sensor 212g is greater than a second threshold, a second signal may be generated. The processor of the host 2 determines, based on the second signal, that the host 2 is in the closed state.

In this embodiment, when the processor of the host 2 determines that the host 2 is in the open state, the processor controls the display 211 to perform corresponding interface display.

In this embodiment, when it is determined that the host 2 is in the open state and the first earphone 31 is in the third accommodation groove 231f (the following describes how to detect whether the first earphone 31 is located in the third accommodation groove 231f), the communication electrode of the host 2 may send a signal to the communication electrode of the first earphone 31, to wake up the first earphone 31. When it is determined that the host 2 is in the closed state and the first earphone 31 is located in the host 2, the host 2 may start foreign matter detection, and after determining that no foreign matter enters, start charging the first earphone 31. In another embodiment, positions of the magnetic field sensor 212g and the state detection magnet 231x may be interchanged. To be specific, the magnetic field sensor 212g may be in the second part 23, and the state detection magnet 231x may be in the first part 21.

### 6. Detection of an in-box/out-box state of the first earphone 31

The in-box/out-box state of the first earphone 31 refers to a relative position relationship between the first earphone 31 and the first accommodation groove 213y and a relative position relationship between the first earphone 31 and the third accommodation groove 231f, and includes several position states, such as the first earphone 31 is in the first accommodation groove 213y and in the third accommodation groove 231f (the host 2 is closed and the first earphone 31 is in the host 2), the first earphone 31 is located in the first accommodation groove 213y and outside the third accommodation groove 231f (the host 2 is opened and the first earphone 31 is attached to the first part 21), or the first earphone 31 is located in the third accommodation groove 231f and outside the first accommodation groove 213y (the host 2 is opened and the first earphone 31 is attached to the second part 23).

In this embodiment, both the host 2 and the first earphone 31 may detect the in-box/out-box state of the first earphone 31. Descriptions are sequentially provided below.

### (1) The host 2 detects the in-box/out-box state of the first earphone 31

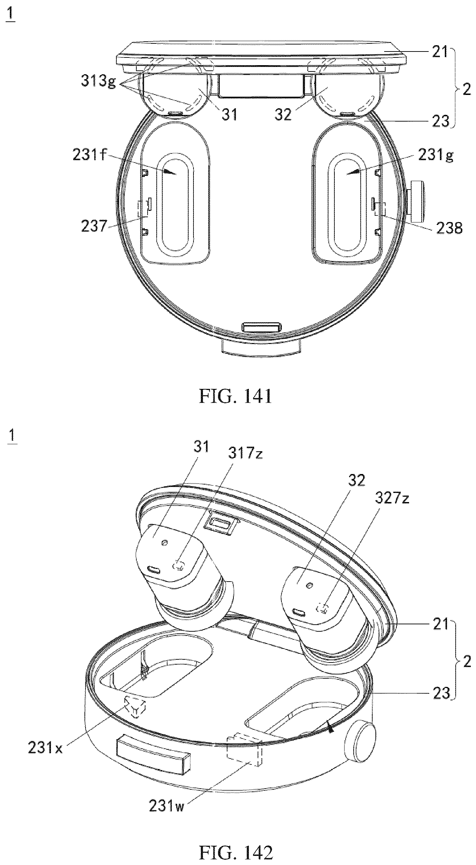

As shown in FIG. 141, the second part 23 of the host 2 has a magnetic field sensor 237 and a magnetic field sensor 238 (both may be referred to as second magnetic field sensors, as shown in dashed boxes). The magnetic field sensor 237 may be close to an outer surface of the groove wall of the third accommodation groove 231f, and the magnetic field sensor 238 may be close to an outer surface of the groove wall of the fourth accommodation groove 231g. The magnetic field sensor 237 and the magnetic field sensor 238 each may be, for example, a single-axis Hall effect sensor or a magnetometer. The following uses an example in which the magnetic field sensor 237 and the magnetic field sensor 238 each are a Hall effect sensor for description.

The magnetic field sensor 237 is configured to detect a change of a magnetic flux of the earphone magnet 313g in the first earphone 31. The magnetic flux of the earphone magnet 313g detected by the magnetic field sensor 237 may be in direct proportion to a distance between the magnetic field sensor 237 and the earphone magnet 313g. When the first earphone 31 is located in the third accommodation groove 231f (which may be that the host 2 is closed and the first earphone 31 is in the host 2, or the host 2 is opened and the first earphone 31 is attached to the second part 23), the magnetic flux detected by the magnetic field sensor 237 is large. When the first earphone 31 leaves the third accommodation groove 231f and is attached to the first part 21, the magnetic flux detected by the magnetic field sensor 237 is small.

In this embodiment, when the magnetic flux detected by the magnetic field sensor 237 is greater than or equal to a third threshold, a third signal may be generated. The processor of the host 2 determines, based on the third signal, that the first earphone 31 is located in the third accommodation groove 231f.

In this embodiment, the processor of the host 2 may determine the in-box/out-box state of the first earphone 31 by combining the third signal sent by the magnetic field sensor 237 and the first signal or the second signal sent by the magnetic field sensor 212g. For example, when the processor receives the third signal and the first signal, the processor determines that the host 2 is opened and the first earphone 31 is attached to the second part 23. When the processor receives the third signal and the second signal, the processor determines that the host 2 is closed and the first earphone 31 is in the host 2.

When the magnetic flux detected by the magnetic field sensor 237 is less than the third threshold but is greater than or equal to a fourth threshold, a fourth signal may be generated. The processor of the host 2 determines, based on the fourth signal, that the first earphone 31 leaves the third accommodation groove 231f and is attached to the first part 21 (as shown in FIG. 141).

Similarly, the magnetic field sensor 238 is configured to detect a change of a magnetic flux of the earphone magnet in the second earphone 32. As described above, the host 2 may determine an in-box/out-box state of the second earphone 32 by using a signal sent by the magnetic field sensor 238 or by combining signals sent by the magnetic field sensor 238 and the magnetic field sensor 212g.

In conclusion, it is easy to understand that the magnetic field sensor 237 located in the second part 23 is configured to determine whether the first earphone 31 is in the third accommodation groove 231f or outside the third accommodation groove 231f. Similarly, the magnetic field sensor 238 located in the second part 23 is configured to detect whether the second earphone 32 is in the fourth accommodation groove 231g or outside the fourth accommodation groove 231g.

In another embodiment, at least one of the magnetic field sensor 237 and the magnetic field sensor 238 may alternatively be located in the first part 21 of the host 2. For example, the magnetic field sensor 237 may be located in the first part 21 (for example, close to the outer surface of the groove wall of the first accommodation groove 213y). The change of the magnetic flux of the earphone magnet 313g in the first earphone 31 may be detected through the magnetic field sensor 237, to determine whether the first earphone 31 is in the first accommodation groove 213y or outside the first accommodation groove 213y. A specific principle is the same as that described above. Details are not described herein again.

In this embodiment, when the host 2 determines that the first earphone 31 is in the third accommodation groove 231f and the host 2 is in the open state, the communication electrode of the host 2 may send a signal to the communication electrode of the first earphone 31, to wake up the first earphone 31. The host 2 may further charge the first earphone 31 through the first charging spring 231e and the second charging spring 231c. In addition, the host 2 may further start a charging overheat protection mechanism (descriptions are provided below). Based on a product requirement, alternatively, the first earphone 31 may not need to be charged and the charging overheat protection mechanism may not be started.

In this embodiment, when the host 2 determines that the first earphone 31 is in the host 2 and the host 2 is in the closed state, the host 2 may start a foreign matter detection mechanism (descriptions are provided below), and may further charge the first earphone 31 and start the charging overheat protection mechanism. Based on a product requirement, alternatively, the first earphone 31 may not need to be charged and the charging overheat protection mechanism may not be started.

In another embodiment, when the host 2 determines that the first earphone 31 is in the first accommodation groove 213y and the host 2 is in the open state, the first earphone 31 is woken up (a principle is described below).

### (2) The first earphone 31 detects the in-box/out-box state of the first earphone 31

As shown in FIG. 142, the first earphone 31 may have a magnetic field sensor 317z (which may be referred to as a third magnetic field sensor, as represented by a dashed box), and the magnetic field sensor 317z may be, for example, disposed on the circuit board of the third earphone circuit board assembly 317h. The magnetic field sensor 317z may be, for example, a Hall effect sensor or a magnetometer. The following uses an example in which the magnetic field sensor 317z is a Hall effect sensor for description.

The magnetic field sensor 317z is configured to detect a change of a magnetic flux of the state detection magnet 231x in the second part 23 of the host 2. The magnetic flux of the state detection magnet 231x detected by the magnetic field sensor 317z may be in direct proportion to a spacing between the magnetic field sensor 317z and the state detection magnet 231x. When the first earphone 31 is located in the third accommodation groove 231f (which may be that the host 2 is closed and the first earphone 31 is in the host 2, or the host 2 is opened and the first earphone 31 is attached to the second part 23), the magnetic flux detected by the magnetic field sensor 317z is large. When the first earphone 31 leaves the third accommodation groove 231f and is attached to the first part 21, the magnetic flux detected by the magnetic field sensor 317z is small.

In this embodiment, when the magnetic flux detected by the magnetic field sensor 317z is greater than or equal to a fifth threshold, a sixth signal may be generated. A controller of the first earphone 31 determines, based on the sixth signal, that the first earphone 31 is located in the third accommodation groove 231f.

In this embodiment, the controller (which may be a central processing unit or a microcontroller unit (microcontroller unit, MCU)) of the first earphone 31 may determine the in-box/out-box state of the first earphone 31 by combining the sixth signal sent by the magnetic field sensor 317z and the first signal or the second signal (the first signal and the second signal may be transmitted through the communication electrode of the host 2 and the communication electrode of the first earphone 31) sent by the magnetic field sensor 212g. For example, when the controller receives the sixth signal and the first signal, the controller determines that the host 2 is opened and the first earphone 31 is attached to the second part 23. When the controller receives the sixth signal and the second signal, the controller determines that the host 2 is closed and the first earphone 31 is in the host 2.

When the magnetic flux detected by the magnetic field sensor 317z is less than the fifth threshold but is greater than or equal to the sixth threshold, a seventh signal may be generated. The controller of the first earphone 31 determines, based on the seventh signal, that the first earphone 31 leaves the third accommodation groove 231f and is attached to the first part 21.

As shown in FIG. 142, the second earphone 32 may also have a magnetic field sensor 327z (represented by a dashed box), and the magnetic field sensor 327z is configured to detect a change of a magnetic flux of the magnet 231w in the second part 23. The magnetic field sensor 327z may be, for example, a single-axis Hall effect sensor. As described above, the second earphone 32 may determine an in-box/out-box state of the second earphone 32 by using a signal sent by the magnetic field sensor 327z or by combining signals sent by the magnetic field sensor 327z and the magnetic field sensor 212g.

In this embodiment, the first earphone 31 detects the in-box/out-box state of the first earphone 31, so that the first earphone 31 performs a corresponding operation.

If the host 2 is in the closed state, and the first earphone 31 detects that the first earphone 31 is located in the third accommodation groove 231f, the first earphone 31 may be in a sleep state.

If the host 2 is in the open state, and the first earphone 31 detects that the first earphone 31 is located in the third accommodation groove 231f, the first earphone 31 may be woken up by the host 2. For example, the communication electrode of the host 2 may send a signal to the communication electrode of the first earphone 31, to wake up the first earphone 31.

If the host 2 is in the open state, and the first earphone 31 detects that the first earphone 31 is attached to the first part 21, a detection signal of the magnetic field sensor 317z triggers the controller of the first earphone 31 to work, to wake up the first earphone 31.

In this embodiment, both the host 2 and the first earphone 31 can detect the in-box/out-box state of the first earphone 31, so that a risk that may be caused by detection performed only by the host 2 or the first earphone 31 can be avoided (for example, if detection is performed only by the host 2, the in-box/out-box state of the first earphone 31 cannot be accurately detected if power of the host 2 is exhausted), and reliability of detection of the in-box/out-box state of the first earphone 31 can be ensured.

### 7. Foreign matter detection mechanism

In this embodiment, if foreign matter (for example, a liquid or a solid or semi-solid dirt) enters the third accommodation groove 231f of the host 2, surfaces of the host 2 and the first earphone 31 may be contaminated, corroded, and rusted, and even a function abnormality may be caused, thereby affecting reliability and service life of the product. In particular, if the second charging spring 231c and the first charging spring 231e in the third accommodation groove 231f are in contact with a large quantity of foreign matter, a charging abnormality (or a communication abnormality) may be caused.

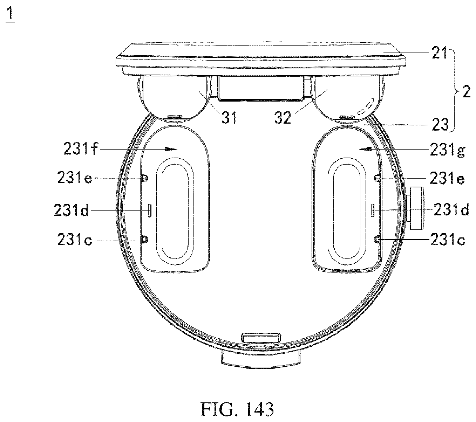

In view of this, as shown in FIG. 143, the foreign matter detection spring 231d is further disposed in the third accommodation groove 231f, and is configured to implement foreign matter detection. A detection principle may be as follows:

When at least one of the foreign matter detection spring 231d, the first charging spring 231e, and the second charging spring 231c is in contact with the foreign matter, a waveform of a charging signal of the host 2 changes. For example, after the foreign matter detection spring 231d and the first charging spring 231e are in contact with the foreign matter, or after the foreign matter detection spring 231d and the second charging spring 231c are in contact with the foreign matter, or after the foreign matter detection spring 231d, the first charging spring 231e, and the second charging spring 231c are in contact with the foreign matter, the waveform of the charging signal of the charging circuit of the host 2 changes. Such a charging signal whose waveform changes may be referred to as an abnormal charging signal. If only at least one of the first charging spring 231e and the second charging spring 231c is in contact with the foreign matter, the waveform of the charging signal of the host 2 does not change. Such a charging signal whose waveform does not change may be referred to as a normal charging signal.

If only one of the first charging spring 231e, the second charging spring 231c, and the foreign matter detection spring 231d is in contact with the foreign matter or none of the first charging spring 231e, the second charging spring 231c, and the foreign matter detection spring 231d is in contact with the foreign matter, the waveform of the charging signal of the host 2 does not change. In other words, the charging circuit generates the normal charging signal.

Therefore, the processor of the host 2 may determine, based on a type of the charging signal, whether there is foreign matter entering the third accommodation groove 231f. For example, when determining that the charging signal is an abnormal charging signal, the processor determines that there is foreign matter entering the third accommodation groove 231f. On the contrary, when determining that the charging signal is a normal charging signal, the processor determines that no foreign matter enters the third accommodation groove 231f.

In this embodiment, when the host 2 determines that there is foreign matter entering the third accommodation groove 231f, the processor in the host 2 may control the charging circuit in the host 2 to be turned off. Therefore, when the first earphone 31 is accommodated in the third accommodation groove 231f, there is no charging current between the first charging spring 231e and the first electrode of the first earphone 31, and there is no charging current between the second charging spring 231c and the second electrode of the first earphone 31. In this way, a charging abnormality (for example, a short circuit) can be prevented.

In this embodiment, when the host 2 determines that there is foreign matter entering the third accommodation groove 231f, the processor of the host 2 may further control an alarm module in the host 2 to send an alarm, so as to send a warning to the user. The alarm module may be, for example, a speaker, a buzzer, or a motor in the host 2. It may be understood that, based on a product requirement, an alarm mechanism is not necessary.

In this embodiment, when the host 2 determines that no foreign matter enters the third accommodation groove 231f, the processor in the host 2 may control the charging circuit in the host 2 to be turned on. Therefore, when the first earphone 31 is accommodated in the third accommodation groove 231f, the host 2 normally charges the first earphone 31.

In another embodiment, based on a product requirement, the host may not have the foreign matter detection mechanism.

### 8. The host 2 charges the first earphone 31

With reference to the foregoing descriptions, because of structure designs of the first electrode and the second electrode in the first earphone 31, after the first earphone 31 is placed in the third accommodation groove 231f at a plurality of rotation angles, the first charging spring 231e can be in contact with the first electrode 312, and the second charging spring 231c can be in contact with the second electrode 314, to ensure that the host 2 normally charges the first earphone 31. This design can simplify user operations and improve user experience.

### 9. Charging overheat protection mechanism of the host 2

In this embodiment, when the host 2 charges the first earphone 31, heat is generated. This may cause an excessively high temperature rise of the host 2 or the first earphone 31. For example, due to improper use of the user or a short circuit of an internal circuit, a charging current of the host 2 is excessively large, and in this case, a temperature rise is easily excessively high. An excessively high temperature affects safety, service life, and reliability of the product, and may affect user experience.

In view of this, the host 2 may have a temperature detection module, and the temperature detection module may be disposed, for example, near the first accommodation groove 213y and/or the third accommodation groove 231f. The temperature detection module may be, for example, a thermistor. The temperature detection module is configured to detect a temperature at a mounting position of the temperature detection module, and report the temperature to the processor of the host 2. The processor may determine, based on detection information of the temperature detection module, whether a temperature rise exceeds a threshold. When the temperature rise is greater than or equal to the threshold, the processor may control the charging circuit of the host 2 to be turned off, so that the host 2 may not charge the first earphone 31, to suppress the temperature rise. If the temperature rise is less than the threshold, the processor may control the charging circuit of the host 2 to be turned on, so that the host 2 can charge the first earphone 31. This charging overheat protection mechanism can improve the safety, service life, and reliability of the product, and ensure user experience.

In this embodiment, when the processor in the host 2 determines that the temperature rise is excessively high, the processor may further control an alarm module in the host 2 to send an alarm, so as to send a warning to the user. The alarm module may be, for example, a speaker, a buzzer, or a motor in the host 2. It may be understood that, based on a product requirement, an alarm mechanism is not necessary.

In another embodiment, based on a product requirement, the host may not have the charging overheat protection mechanism.

The foregoing descriptions are merely specific implementations of this application. The protection scope of this application shall be subject to the protection scope of the claims.

## Claims

1. An open button (25) of an electronic device (1), wherein the electronic device (1) comprises a first part (21) and a second part (23) that can be opened and closed, the first part (21) is a cover of the electronic device (1), and the second part (23) is a body of the electronic device (1);
the open button (25) is configured to be mounted to the second part (23), and the open button (25) comprises a cap (251), an elastic member (252), and a touch-sensitive spring (254);
the cap (251) is configured to form a detachable connection with the first part (21), and the cap (251) has a bump (251b);
the touch-sensitive spring (254) and the bump (251b) are disposed at a spacing, and the touch-sensitive spring (254) generates elastic deformation when being squeezed;
the cap (251) moves towards the touch-sensitive spring (254) when being pressed, so that the detachable connection is released, and the bump (251b) of the cap (251) squeezes the touch-sensitive spring (254); and
the elastic member (252) presses against the cap (251), and is configured to provide a rebound force for the cap (251) when the cap (251) moves towards the touch-sensitive spring (254).

2. The open button (25) according to claim 1, wherein
the cap (251) has a buckle (251e), the buckle (251e) is disposed opposite to the bump (251b) at a spacing, and the buckle (251e) is configured to form a detachable buckle (251e) connection with a latch portion on the second part (23);
the touch-sensitive spring (254) is located between the bump (251b) and the buckle (251e), and the touch-sensitive spring (254) and the buckle (251e) are disposed at a spacing; and
the cap (251) can move towards the touch-sensitive spring (254) when being pressed, so that the buckle (251e) is separated from the latch portion, and the buckle (251e) connection is released.

3. The open button (25) according to claim 2, wherein
the cap (251) comprises a pressing portion and a bearing portion, two ends of the bearing portion each are connected to the pressing portion, and the bearing portion and the pressing portion enclose an open space; and the bump (251b) of the cap (251) is located on a side that is of the pressing portion and that faces the open space, and the buckle (251e) is located on the bearing portion;
the touch-sensitive spring (254) is located in the open space; and
when the pressing portion is pressed, the pressing portion can drive the bearing portion to move towards the touch-sensitive spring (254).

4. The open button (25) according to claim 3, wherein
the open button (25) comprises a button support, a part of the button support is located in the open space, and the other part of the button support is located outside the open space and is slidably connected to the bearing portion;
the touch-sensitive spring (254) is fastened on the button support; and
when the pressing portion is pressed, the pressing portion can drive the bearing portion to slide relative to the button support.

5. The open button (25) according to claim 4, wherein
the button support comprises a support body and two mounting ears respectively connected to two sides of the support body, wherein each mounting ear is in a bent shape;
the support body is located in the open space, and the touch-sensitive spring (254) is fastened on the support body; and
each mounting ear laps over the bearing portion, and is slidably connected to the bearing portion.

6. The open button (25) according to claim 5, wherein
when a distance between the bump (251b) and the touch-sensitive spring (254) is the longest, a part that is of the bearing portion and that is opposite to the bump (251b) abuts against the two mounting ears.

7. The open button (25) according to any one of claims 3 to 6, wherein
two ends of the pressing portion each have a guiding portion, and the bearing portion is located between the two guiding portions; and
the open button (25) comprises two elastic members, and one elastic member (252) is correspondingly sleeved on a periphery of one guiding portion and presses against the pressing portion.

8. An electronic device (1), comprising:
the open button (25) according to any one of claims 1 to 7, and a first part (21) and a second part (23) that are configured to be opened and closed, wherein the first part (21) is a cover of the electronic device (1), and the second part (23) is a body of the electronic device (1); and
the open button (25) is mounted to the second part (23); and when the first part (21) and the second part (23) are closed, the cap (251) forms a detachable connection with the first part (21), so that the first part (21) and the second part (23) are latched.

9. The electronic device (1) according to claim 8, wherein
an open button (25) mounting space and a first opening are formed in the second part (23), and the first opening communicates the open button (25) mounting space with the outside of the second part (23);
a part of the cap (251) is located in the open button (25) mounting space, the other part of the cap (251) is exposed from the first opening, the cap (251) is movably connected to the second part (23), and the bump (251b) is located in the open button (25) mounting space; and
both the elastic member (252) and the touch-sensitive spring (254) are located in the open button (25) mounting space.

10. The electronic device (1) according to claim 9, wherein
the second part (23) comprises a housing, the housing comprises a circumferential side wall and an inner bearing platform, and the inner bearing platform is connected to an inner side of the circumferential side wall;
the open button (25) mounting space is formed on the housing, the first opening is formed on the circumferential side wall, a second opening is formed on the inner bearing platform, and the second opening communicates the open button (25) mounting space with the outside of the inner bearing platform; and
the first part (21) comprises a latch portion, and when the first part (21) and the second part (23) are closed, the latch portion passes through the second opening and forms a detachable connection with the cap (251).

11. The electronic device (1) according to any one of claims 8 to 10, wherein
a groove is provided on a circumferential edge of the first part (21), the first part (21) comprises a sealing member, a part of the sealing member is fastened in the groove of the first part (21), the other part of the sealing member is exposed outside the groove of the first part (21), and when the first part (21) and the second part (23) are closed, the part that is of the sealing member and that is exposed outside the groove of the first part (21) is in contact with the second part (23), and seals a gap between the first part (21) and the second part (23); or
a groove is provided on a circumferential edge of the second part (23), the second part (23) comprises a sealing member, a part of the sealing member is fastened in the groove of the second part (23), the other part of the sealing member is exposed outside the groove of the second part (23), and when the first part (21) and the second part (23) are closed, the part that is of the sealing member and that is exposed outside the groove of the second part (23) is in contact with the first part (21), and seals a gap between the first part (21) and the second part (23).

12. The electronic device (1) according to claim 11, wherein
several protrusions are disposed on a surface of the part that is of the sealing member and that is located in the groove, the several protrusions are spaced in pairs, the several protrusions are all in contact with a bottom surface of the groove, the groove is filled with an adhesive, and the sealing member is fastened in the groove through the adhesive.

13. The electronic device (1) according to claim 11 or 12, wherein
the sealing member comprises a sealing bracket and a sealing ring that are connected, the sealing ring is located on a side of the sealing bracket, a side that is of the sealing bracket and that is far away from the sealing ring is fastened in the groove, and at least a part of the sealing ring is exposed outside the groove.

14. The electronic device (1) according to claim 13, wherein
material hardness of the sealing bracket is greater than material hardness of the sealing ring.

15. The electronic device (1) according to any one of claims 8 to 14, wherein
the electronic device (1) comprises a magnetic field sensor, a state detection magnet, and a processor;
the magnetic field sensor is located in the first part (21), and the state detection magnet is located in the second part (23); or the state detection magnet is located in the first part (21), and the magnetic field sensor is located in the second part (23);
the magnetic field sensor is configured to detect a magnetic flux of the state detection magnet; and
the processor is configured to determine, based on a detection signal of the magnetic field sensor, whether the electronic device (1) is in an open state or a closed state.

## Patentansprüche

1. Öffnungsknopf (25) einer elektronischen Vorrichtung (1), wobei die elektronische Vorrichtung (1) einen ersten Teil (21) und einen zweiten Teil (23), der geöffnet und geschlossen werden kann, umfasst, wobei der erste Teil (21) eine Hülle der elektronischen Vorrichtung (1) ist und der zweite Teil (23) ein Körper der elektronischen Vorrichtung (1) ist;
der Öffnungsknopf (25) dazu konfiguriert ist, an dem zweiten Teil (23) montiert zu sein, und der Öffnungsknopf (25) eine Kappe (251), ein elastisches Element (252) und eine berührungsempfindliche Feder (254) umfasst;
die Kappe (251) dazu konfiguriert ist, eine lösbare Verbindung mit dem ersten Teil (21) zu bilden, und die Kappe (251) eine Erhebung (251b) aufweist;
die berührungsempfindliche Feder (254) und die Erhebung (251b) in einem Abstand angeordnet sind und die berührungsempfindliche Feder (254) eine elastische Verformung erzeugt, wenn sie zusammengedrückt wird;
sich die Kappe (251), wenn sie gedrückt wird, in Richtung der berührungsempfindlichen Feder (254) bewegt, sodass die lösbare Verbindung freigegeben wird und die Erhebung (251b) der Kappe (251) die berührungsempfindliche Feder (254) zusammendrückt; und
das elastische Element (252) gegen die Kappe (251) drückt und dazu konfiguriert ist, eine Rückstellkraft für die Kappe (251) bereitzustellen, wenn sich die Kappe (251) in Richtung der berührungsempfindlichen Feder (254) bewegt.

2. Öffnungsknopf (25) nach Anspruch 1, wobei
die Kappe (251) eine Schnalle (251e) aufweist, die Schnalle (251e) gegenüber der Erhebung (251b) in einem Abstand angeordnet ist und die Schnalle (251e) dazu konfiguriert ist, eine lösbare Verbindung der Schnalle (251e) mit einem Verriegelungsabschnitt auf dem zweiten Teil (23) zu bilden;
sich die berührungsempfindliche Feder (254) zwischen der Erhebung (251b) und der Schnalle (251e) befindet und die berührungsempfindliche Feder (254) und die Schnalle (251e) in einem Abstand angeordnet sind; und
sich die Kappe (251) in Richtung der berührungsempfindlichen Feder (254) bewegen kann, wenn sie gedrückt wird, sodass die Schnalle (251e) von dem Verriegelungsabschnitt getrennt wird und die Verbindung der Schnalle (251e) freigegeben wird.

3. Öffnungsknopf (25) nach Anspruch 2, wobei
die Kappe (251) einen Drückabschnitt und einen Lagerabschnitt umfasst, jeweils zwei Enden des Lagerabschnitts mit dem Drückabschnitt verbunden sind und der Lagerabschnitt und der Drückabschnitt einen offenen Raum umschließen; und sich die Erhebung (251b) der Kappe (251) auf einer Seite befindet, die dem Drückabschnitt angehört und die dem offenen Raum zugewandt ist, und sich die Schnalle (251e) auf dem Lagerabschnitt befindet;
sich die berührungsempfindliche Feder (254) in dem offenen Raum befindet; und
wenn der Drückabschnitt gedrückt wird, der Drückabschnitt den Lagerabschnitt antreiben kann, um sich in Richtung der berührungsempfindlichen Feder (254) zu bewegen.

4. Öffnungsknopf (25) nach Anspruch 3, wobei
der Öffnungsknopf (25) eine Knopfhalterung umfasst, sich ein Teil der Knopfhalterung in dem offenen Raum befindet und sich der andere Teil der Knopfhalterung außerhalb des offenen Raumes befindet und verschiebbar mit dem Lagerabschnitt verbunden ist; die berührungsempfindliche Feder (254) auf der Knopfhalterung befestigt ist; und
wenn der Drückabschnitt gedrückt wird, der Drückabschnitt den Lagerabschnitt antreiben kann, um sich in Bezug auf die Knopfhalterung zu verschieben.

5. Öffnungsknopf (25) nach Anspruch 4, wobei
die Knopfhalterung einen Halterungskörper und zwei Montagelaschen umfasst, die jeweils an zwei Seiten des Halterungskörpers befestigt sind, wobei jede Montagelasche eine gebogene Form aufweist;
sich der Halterungskörper in dem offenen Raum befindet und die berührungsempfindliche Feder (254) an dem Halterungskörper befestigt ist; und
jede Befestigungslasche den Lagerabschnitt überlappt und verschiebbar mit dem Lagerabschnitt verbunden ist.

6. Öffnungsknopf (25) nach Anspruch 5, wobei
wenn ein Abstand zwischen der Erhebung (251b) und der berührungsempfindlichen Feder (254) am größten ist, ein Teil, der dem Lagerabschnitt angehört und welcher der Erhebung (251b) gegenüberliegt, an den zwei Befestigungslaschen anliegt.

7. Öffnungsknopf (25) nach einem der Ansprüche 3 bis 6, wobei
zwei Enden des Drückabschnitts jeweils einen Führungsabschnitt aufweisen und sich der Lagerabschnitt zwischen den zwei Führungsabschnitten befindet; und
der Öffnungsknopf (25) zwei elastische Elemente umfasst und ein elastisches Element (252) entsprechend um einen Umfang eines Führungsabschnitts gelegt ist und gegen den Drückabschnitt drückt.

8. Elektronische Vorrichtung (1), umfassend:
den Öffnungsknopf (25) nach einem der Ansprüche 1 bis 7 und einen ersten Teil (21) und einen zweiten Teil (23), die dazu konfiguriert sind, geöffnet und geschlossen zu werden, wobei der erste Teil (21) eine Hülle der elektronischen Vorrichtung (1) ist und der zweite Teil (23) ein Körper der elektronischen Vorrichtung (1) ist; und
der Öffnungsknopf (25) an dem zweiten Teil (23) montiert ist; und, wenn der erste Teil (21) und der zweite Teil (23) geschlossen sind, die Kappe (251) eine lösbare Verbindung mit dem ersten Teil (21) bildet, sodass der erste Teil (21) und der zweite Teil (23) verriegelt sind.

9. Elektronische Vorrichtung (1) nach Anspruch 8, wobei
ein Montageraum des Öffnungsknopfs (25) und eine erste Öffnung in dem zweiten Teil (23) gebildet sind und die erste Öffnung den Montageraum des Öffnungsknopfs (25) mit der Außenseite des zweiten Teiles (23) verbindet;
sich ein Teil der Kappe (251) in dem Montageraum des Öffnungsknopfs (25) befindet, der andere Teil der Kappe (251) von der ersten Öffnung frei liegt, die Kappe (251) bewegbar mit dem zweiten Teil (23) verbunden ist und sich die Erhebung (251b) in dem Montageraum des Öffnungsknopfs (25) befindet; und
sich sowohl das elastische Element (252) als auch die berührungsempfindliche Feder (254) in dem Montageraum des Öffnungsknopfs (25) befinden.

10. Elektronische Vorrichtung (1) nach Anspruch 9, wobei
der zweite Teil (23) ein Gehäuse umfasst, das Gehäuse eine umlaufende Seitenwand und eine innere Lagerplattform umfasst und die innere Lagerplattform mit einer Innenseite der umlaufenden Seitenwand verbunden ist;
der Montageraum des Öffnungsknopfs (25) auf dem Gehäuse gebildet ist; die erste Öffnung auf der umlaufenden Seitenwand gebildet ist, eine zweite Öffnung auf der inneren Lagerplattform gebildet ist und die zweite Öffnung den Montageraum des Öffnungsknopfs (25) mit der Außenseite der inneren Lagerplattform verbindet; und
der erste Teil (21) einen Verriegelungsabschnitt umfasst und, wenn der erste Teil (21) und der zweite Teil (23) geschlossen sind, der Verriegelungsabschnitt durch die zweite Öffnung hindurchgeht und eine lösbare Verbindung mit der Kappe (251) bildet.

11. Elektronische Vorrichtung (1) nach einem der Ansprüche 8 bis 10, wobei
eine Nut auf einer Umfangskante des ersten Teiles (21) bereitgestellt ist, der erste Teil (21) ein Dichtungselement umfasst, ein Teil des Dichtungselements in der Nut des ersten Teiles (21) befestigt ist, der andere Teil des Dichtungselements außerhalb der Nut des ersten Teiles (21) frei liegt und, wenn der erste Teil (21) und der zweite Teil (23) geschlossen sind, der Teil, der dem Dichtungselement angehört und der außerhalb der Nut des ersten Teiles (21) frei liegt, mit dem zweiten Teil (23) in Kontakt steht und eine Lücke zwischen dem ersten Teil (21) und dem zweiten Teil (23) abdichtet; oder
eine Nut auf einer Umfangskante des zweiten Teiles (23) bereitgestellt ist, der zweite Teil (23) ein Dichtungselement umfasst, ein Teil des Dichtungselements in der Nut des zweiten Teiles (23) befestigt ist, der andere Teil des Dichtungselements außerhalb der Nut des zweiten Teiles (23) frei liegt und, wenn der erste Teil (21) und der zweite Teil (23) geschlossen sind, der Teil, der dem Dichtungselement angehört und der außerhalb der Nut des zweiten Teiles (23) frei liegt, mit dem ersten Teil (21) in Kontakt steht und eine Lücke zwischen dem ersten Teil (21) und dem zweiten Teil (23) abdichtet.

12. Elektronische Vorrichtung (1) nach Anspruch 11, wobei
mehrere Vorsprünge auf einer Fläche des Teiles, der dem Dichtungselement angehört und der sich in der Nut befindet, angeordnet sind, die mehreren Vorsprünge in Paaren beabstandet sind, die mehreren Vorsprünge alle mit einer Bodenfläche der Nut in Kontakt stehen, die Nut mit einem Klebstoff gefüllt ist und das Dichtungselement über den Klebstoff in der Nut befestigt ist.

13. Elektronische Vorrichtung (1) nach Anspruch 11 oder 12, wobei
das Dichtungselement einen Dichtungsbügel und einen Dichtungsring umfasst, die verbunden sind, sich der Dichtungsring auf einer Seite des Dichtungsbügels befindet, eine Seite, die dem Dichtungsbügel angehört und die weit von dem Dichtungsring entfernt ist, in der Nut befestigt ist und mindestens ein Teil des Dichtungsrings außerhalb der Nut frei liegt.

14. Elektronische Vorrichtung (1) nach Anspruch 13, wobei
eine Materialhärte des Dichtungsbügels größer als eine Materialhärte des Dichtungsrings ist.

15. Elektronische Vorrichtung (1) nach einem der Ansprüche 8 bis 14, wobei
die elektronische Vorrichtung (1) einen Magnetfeldsensor, einen Zustandsdetektionsmagneten und einen Prozessor umfasst;
sich der Magnetfeldsensor in dem ersten Teil (21) befindet und sich der Zustandsdetektionsmagnet in dem zweiten Teil (23) befindet; oder sich der Zustandsdetektionsmagnet in dem ersten Teil (21) befindet und sich der Magnetfeldsensor in dem zweiten Teil (23) befindet;
der Magnetfeldsensor dazu konfiguriert ist, einen magnetischen Fluss des Zustandsdetektionsmagneten zu detektieren; und
der Prozessor dazu konfiguriert ist, basierend auf einem Detektionssignal des Magnetfeldsensors zu bestimmen, ob sich die elektronische Vorrichtung (1) in einem offenen Zustand oder einem geschlossenen Zustand befindet.

## Revendications

1. Bouton d'ouverture (25) d'un dispositif électronique (1), dans lequel le dispositif électronique (1) comprend une première partie (21) et une seconde partie (23) qui peuvent être ouvertes et fermées, la première partie (21) est un couvercle du dispositif électronique (1), et la seconde partie (23) est un corps du dispositif électronique (1) ;
le bouton d'ouverture (25) est configuré pour être monté sur la seconde partie (23), et le bouton d'ouverture (25) comprend un capuchon (251), un élément élastique (252) et un ressort tactile (254) ;
le capuchon (251) est configuré pour former une connexion amovible avec la première partie (21), et le capuchon (251) a une bosse (251b) ;
le ressort tactile (254) et la bosse (251b) sont disposés à un espacement, et le ressort tactile (254) génère une déformation élastique lorsqu'il est comprimé ;
lorsqu'on appuie sur le capuchon (251), le capuchon se déplace vers le ressort tactile (254), libérant ainsi la connexion amovible, et la bosse (251b) du capuchon (251) comprime le ressort tactile (254) ; et
l'élément élastique (252) appuie contre le capuchon (251) et est configuré pour fournir une force de rebond au capuchon (251) lorsque le capuchon (251) se déplace vers le ressort tactile (254).

2. Bouton d'ouverture (25) selon la revendication 1, dans lequel
le capuchon (251) comporte une boucle (251e), la boucle (251e) est disposée à l'opposé de la bosse (251b) à un espacement, et la boucle (251e) est configurée pour former une connexion de boucle amovible (251e) avec une partie de verrouillage sur la seconde partie (23) ;
le ressort tactile (254) est situé entre la bosse (251b) et la boucle (251e), et le ressort tactile (254) et la boucle (251e) sont disposés à un espacement ; et
le capuchon (251) peut se déplacer vers le ressort tactile (254) lorsqu'il est pressé, de sorte que la boucle (251e) est séparée de la partie de verrouillage et que la connexion de boucle (251e) est libérée.

3. Bouton d'ouverture (25) selon la revendication 2, dans lequel
le capuchon (251) comprend une partie de pression et une partie de roulement, les deux extrémités de la partie de roulement sont chacune reliées à la partie de pression, et la partie de roulement et la partie de pression enferment un espace ouvert ; et la bosse (251b) du capuchon (251) est située sur un côté qui est de la partie de pression et qui fait face à l'espace ouvert, et la boucle (251e) est située sur la partie de roulement ;
le ressort tactile (254) est situé dans l'espace ouvert ; et
lorsque la partie de pression est pressée, la partie de pression peut entraîner la partie de roulement à se déplacer vers le ressort tactile (254).

4. Bouton d'ouverture (25) selon la revendication 3, dans lequel
le bouton d'ouverture (25) comprend un support de bouton, une partie du support de bouton est située dans l'espace ouvert et l'autre partie du support de bouton est située à l'extérieur de l'espace ouvert et est reliée de manière coulissante à la partie de roulement ;
le ressort tactile (254) est fixé sur le support de bouton ; et
lorsque la partie de pression est pressée, la partie de pression peut entraîner le glissement de la partie de roulement par rapport au support de bouton.

5. Bouton d'ouverture (25) selon la revendication 4, dans lequel
le support de bouton comprend un corps de support et deux oreilles de montage respectivement reliées à deux côtés du corps de support, dans lequel chaque oreille de montage est de forme courbée ;
le corps de support est situé dans l'espace ouvert, et le ressort tactile (254) est fixé sur le corps de support ; et
chaque oreille de montage recouvre la partie de roulement et est reliée de manière coulissante à la partie de roulement.

6. Bouton d'ouverture (25) selon la revendication 5, dans lequel
lorsque la distance entre la bosse (251b) et le ressort tactile (254) est la plus longue, une partie qui est de la partie de roulement et qui est opposée à la bosse (251b) bute contre les deux oreilles de montage.

7. Bouton d'ouverture (25) selon l'une quelconque des revendications 3 à 6, dans lequel
les deux extrémités de la partie de pression comportent chacune une partie de guidage, et la partie de roulement est située entre les deux parties de guidage ; et
le bouton ouvert (25) comprend deux éléments élastiques, et un élément élastique (252) est en conséquence gainé sur la périphérie d'une partie de guidage et appuie contre la partie de pression.

8. Dispositif électronique (1), comprenant :
le bouton d'ouverture (25) selon l'une quelconque des revendications 1 à 7, et une première partie (21) et une seconde partie (23) configurées pour être ouvertes et fermées, dans lequel la première partie (21) est un couvercle du dispositif électronique (1), et la seconde partie (23) est un corps du dispositif électronique (1) ; et
le bouton d'ouverture (25) est monté sur la seconde partie (23) ; et lorsque la première partie (21) et la seconde partie (23) sont fermées, le capuchon (251) forme une connexion amovible avec la première partie (21), de sorte que la première partie (21) et la seconde partie (23) sont verrouillées.

9. Dispositif électronique (1) selon la revendication 8, dans lequel
un espace de montage de bouton d'ouverture (25) et une première ouverture sont formés dans la seconde partie (23), et la première ouverture communique l'espace de montage de bouton d'ouverture (25) avec l'extérieur de la seconde partie (23) ;
une partie du capuchon (251) est située dans l'espace de montage du bouton d'ouverture (25), l'autre partie du capuchon (251) est exposée par la première ouverture, le capuchon (251) est relié de manière mobile à la seconde partie (23), et la bosse (251b) est située dans l'espace de montage du bouton d'ouverture (25) ; et
l'élément élastique (252) et le ressort tactile (254) sont tous deux situés dans l'espace de montage du bouton d'ouverture (25).

10. Dispositif électronique (1) selon la revendication 9, dans lequel
la seconde partie (23) comprend un boîtier, le boîtier comprend une paroi latérale circonférentielle et une plateforme de roulement intérieure, et la plateforme de roulement intérieure est reliée à un côté intérieur de la paroi latérale circonférentielle ;
l'espace de montage du bouton d'ouverture (25) est formé sur le boîtier, la première ouverture est formée sur la paroi latérale circonférentielle, la seconde ouverture est formée sur la plateforme de roulement intérieure, et la seconde ouverture communique l'espace de montage du bouton d'ouverture (25) à l'extérieur de la plateforme de roulement intérieure ; et
la première partie (21) comprend une partie de verrouillage, et lorsque la première partie (21) et la seconde partie (23) sont fermées, la partie de verrouillage passe par la seconde ouverture et forme une connexion amovible avec le capuchon (251).

11. Dispositif électronique (1) selon l'une quelconque des revendications 8 à 10, dans lequel
une rainure est prévue sur un bord circonférentiel de la première partie (21), la première partie (21) comprend un élément d'étanchéité, une partie de l'élément d'étanchéité est fixée dans la rainure de la première partie (21), l'autre partie de l'élément d'étanchéité est exposée à l'extérieur de la rainure de la première partie (21), et lorsque la première partie (21) et la seconde partie (23) sont fermées, la partie de l'élément d'étanchéité qui est exposée à l'extérieur de la rainure de la première partie (21) est en contact avec la seconde partie (23), et scelle un espace entre la première partie (21) et la seconde partie (23) ; ou
une rainure est prévue sur un bord circonférentiel de la seconde partie (23), la seconde partie (23) comprend un élément d'étanchéité, une partie de l'élément d'étanchéité est fixée dans la rainure de la seconde partie (23), l'autre partie de l'élément d'étanchéité est exposée à l'extérieur de la rainure de la seconde partie (23), et lorsque la première partie (21) et la seconde partie (23) sont fermées, la partie de l'élément d'étanchéité qui est exposée à l'extérieur de la rainure de la seconde partie (23) est en contact avec la première partie (21), et scelle un espace entre la première partie (21) et la seconde partie (23).

12. Dispositif électronique (1) selon la revendication 11, dans lequel
plusieurs saillies sont disposées sur une surface de la partie qui constitue l'élément d'étanchéité et qui est située dans la rainure ; les plusieurs saillies sont espacées par paires et les plusieurs saillies sont toutes en contact avec la surface inférieure de la rainure ; la rainure est remplie d'un adhésif et l'élément d'étanchéité est fixé dans la rainure par le biais de l'adhésif.

13. Dispositif électronique (1) selon la revendication 11 ou 12, dans lequel
l'élément d'étanchéité comprend un support d'étanchéité et une bague d'étanchéité reliés entre eux, la bague d'étanchéité est située sur un côté du support d'étanchéité, l'autre côté du support d'étanchéité, éloigné de la bague d'étanchéité, est fixé dans la rainure, et au moins une partie de la bague d'étanchéité est exposée à l'extérieur de la rainure.

14. Dispositif électronique (1) selon la revendication 13, dans lequel
la dureté du matériau du support d'étanchéité est supérieure à la dureté du matériau de la bague d'étanchéité.

15. Dispositif électronique (1) selon l'une quelconque des revendications 8 à 14, dans lequel
le dispositif électronique (1) comprend un capteur de champ magnétique, un aimant de détection d'état et un processeur ;
le capteur de champ magnétique est situé dans la première partie (21), et l'aimant de détection d'état est situé dans la seconde partie (23) ; ou l'aimant de détection d'état est situé dans la première partie (21), et le capteur de champ magnétique est situé dans la seconde partie (23) ;
le capteur de champ magnétique est configuré pour détecter un flux magnétique de l'aimant de détection d'état ; et
le processeur est configuré pour déterminer, sur la base d'un signal de détection du capteur de champ magnétique, si le dispositif électronique (1) est dans un état ouvert ou dans un état fermé.
